# EUROPÄISCHE PATENTSCHRIFT

(11) **EP 1 035 171 B1**
(45) Veröffentlichungstag und Bekanntmachung des Hinweises auf die Patenterteilung: **05.06.2002**
(21) Anmeldenummer: 00810179.2
(22) Anmeldetag: 02.03.2000
(51) Int. Cl.: C09B 33/24, C09B 33/18, C09B 33/30, C09B 33/32, C09B 62/513, C09B 62/01, C09B 62/09, C09B 62/453, C09B 62/475, C09B 62/25, C09B 62/03

(54) **Azofarbstoffe, deren Herstellung und deren Verwendung**
Azodyestuffs, their production and use
Colorants azoiques, procédé pour leur préparation et leur utilisation

(30) Priorität: 11.03.1999 EP 99810220
(43) Veröffentlichungstag der Anmeldung: 13.09.2000
(73) Patentinhaber: Ciba Specialty Chemicals Holding Inc., 4057 Basel (CH)
(72) Erfinder: Tzikas, Athanassios, 4133 Pratteln (CH); Deitz, Rolf, 79639 Grenzach-Wyhlen (DE)

(56) Entgegenhaltungen:
- EP-A- 0 022 485
- EP-A- 0 091 020
- EP-A- 0 355 601
- CH-A- 178 414
- DE-A- 2 024 047
- DE-A- 3 428 836
- FR-A- 1 118 699
- FR-A- 2 050 539
- GB-A- 1 160 771

## Beschreibung

Die vorliegende Erfindung betrifft neue Azofarbstoffe, Verfahren zu ihrer Herstellung und ihre Verwendung.

Die Praxis des Färbens hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen, leicht zugänglichen Farbstoffen, welche gute Eigenschaften, insbesondere in Bezug auf die Applikation, aufweisen.

Im Fall der faserreaktiven Farbstoffe werden heute beispielsweise solche Farbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue Azofarbstoffe insbesondere für das Färben und Bedrucken von Fasermaterialien zu finden, welche die oben charakterisierten Qualitäten in hohem Masse besitzen. Sie sollten Färbungen mit guten Allgemeinechtheiten, beispielsweise Licht- und Nassechtheiten, ergeben.

Gegenstand der vorliegenden Erfindung sind somit Azofarbstoffe, enthaltend mindestens eine Struktureinheit der Formel (1)

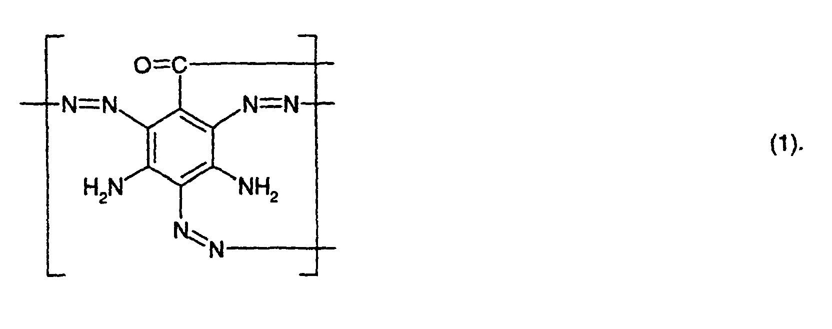

Die erfindungsgemässen Azofarbstoffe können entsprechend ihrer färberischen Anwendung den verschiedenen Farbstoffklassen angehören. Diese Farbstoffklassen sind z.B. in Venkataraman "The Chemistry of Synthetic Dyes" Band 1, Seiten 268-303, Academic Press, New York, London 1952 sowie Band 6, Seiten 1-4, Academic Press, New York, London 1972 beschrieben. Vorzugsweise handelt es sich bei den erfindungsgemässen Azofarbstoffen um Säure-, Direkt- oder Reaktivfarbstoffe zum Färben von Baumwolle, Wolle, Leder, Papier und Holz und insbesondere um Reaktivfarbstoffe zum Färben von Baumwolle und Wolle, d.h. sie enthalten mindestens eine und vorzugsweise mindestens zwei faserreaktive Gruppen und vermögen mit den Hydroxylgruppen der Cellulose oder mit den reaktiven Zentren von natürlichen und synthetischen Polyamiden unter Bildung kovalenter chemischer Bindungen zu reagieren.

Die deutschen Offenlegungsschriften DE 34 28 836 und DE 2 024 047 offenbaren nicht-reaktive Trisazofarbstoffe bzw. deren Metallkomplexe auf Basis von 1,3-Diaminobenzol zum Färben von Leder.

Bevorzugt entsprechen die erfindungsgemässen Azofarbstoffe der Formel (2), (3) oder (4) 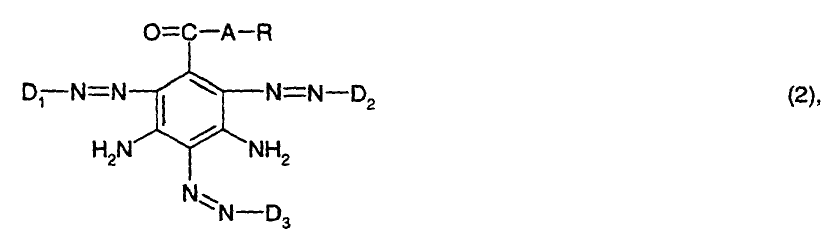 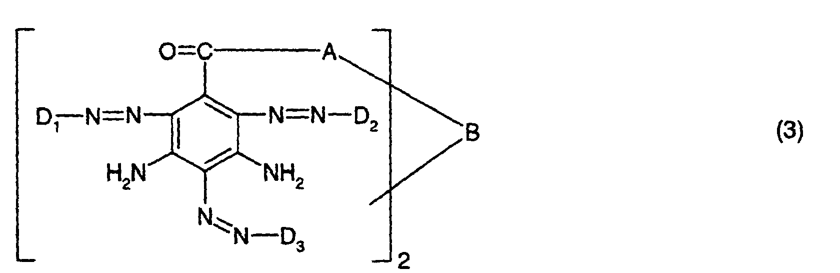 oder 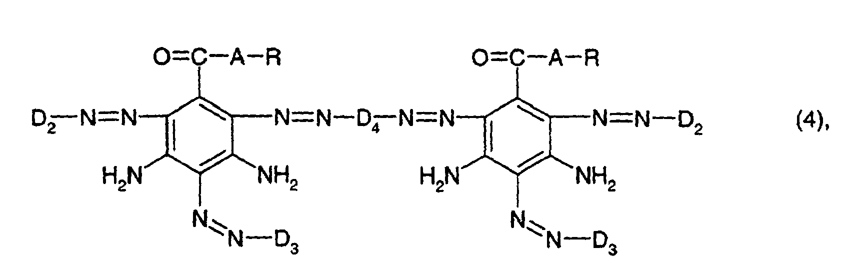 worin
A Sauerstoff, Schwefel oder einen Rest -NR'- bedeutet und R' Wasserstoff oder gegebenenfalls substituiertes oder durch Sauerstoff unterbrochenes C₁-C₁₂-Alkyl ist,
B ein aliphatisches oder aromatisches Brückenglied ist,
D₁, D₂ und D₃ unabhängig voneinander je den Rest einer Diazokomponente der Benzol-oder Naphthalinreihe bedeuten,
D₄ der Rest einer aromatischen Tetrazokomponente ist, und
R Wasserstoff oder einen aliphatischen oder aromatischen Rest bedeutet oder die Reste R und R' zusammen mit dem Stickstoffatom einen heterocyclischen Rest bilden.

R' als gegebenenfalls substituiertes oder durch Sauerstoff unterbrochenes C₁-C₁₂-Alkyl, vorzugsweise C₁-C₆-Alkyl und insbesondere C₁-C₄-Alkyl, ist geradkettig oder verzweigt und bedeutet z.B. Methyl, Ethyl, n- oder Isopropyl, n-, iso-, sec.- oder tert.-Butyl, n-Pentyl, neoPentyl, n-Hexyl, n-Heptyl, n-Octyl, n-Nonyl, n-Decyl, n-Undecyl oder n-Dodecyl. Die genannten Alkylreste können durch 1, 2 oder 3 Sauerstoffatome unterbrochen sein und sind unsubstituiert oder durch C₂-C₄-Alkanoylamino, wie beispielsweise Acetylamino oder Propionylamino; C₁-C₄-Alkoxy, wie beispielsweise Methoxy oder Ethoxy; Hydroxy; Sulfo; Sulfato; Carboxy; Cyano; Carbamoyl, Sulfamoyl, β-Sulfatoethylsulfonyl oder β-Chlorethylsulfonyl substituiert. Bevorzugte Substituenten der für R' genannten Alkylreste sind Hydroxy, Sulfo, Carboxy oder Sulfato, insbesondere Hydroxy oder Sulfato und ganz besonders Hydroxy. Als Beispiele für die substituierten und die durch Sauerstoff unterbrochenen Alkylreste seien die folgenden Reste genannt: β-Hydroxyethyl, 2-(β-Hydroxyethoxy)ethyl, 2-[2-(β-Hydroxyethoxy)ethoxy]ethyl, 2-(β-Chlorethylsulfonyl)ethyl, 2-(β-Sulfatoethylsulfonyl)-ethyl, β-Sulfatoethyl, β-Sulfoethyl, Carboxymethyl oder β-Carboxyethyl.

R' ist vorzugsweise Wasserstoff.

Als aliphatisches Brückenglied ist B z.B. ein C₂-C₁₂-Alkylenrest, insbesondere ein C₂-C₆-Alkylenrest, welcher durch 1, 2 oder 3 Glieder aus der Gruppe -NH-, -N(CH₃)- oder insbesondere -O- unterbrochen sein kann und unsubstituiert oder durch Hydroxy, Sulfo, Sulfato, Cyano oder Carboxy substituiert ist. Als Substituenten der für B genannten Alkylenreste sind Hydroxy, Sulfo oder Sulfato, insbesondere Hydroxy, bevorzugt.

Als aliphatische Brückenglieder kommen für B weiterhin z.B. C₅-C₉-Cycloalkylenreste, wie insbesondere Cyclohexylenreste, in Betracht. Die genannten Cycloalkylenreste können gegebenenfalls durch C₁-C₄-Alkyl, C₁-C₄-Alkoxy, C₂-C₄-Alkanoylamino, Sulfo, Halogen oder Carboxy, insbesondere durch C₁-C₄-Alkyl, substituiert sein. Als aliphatische Brückenglieder seien für B ferner gegebenenfalls im Cyclohexylenring durch C₁-C₄-Alkyl, insbesondere Methyl, substituierte Methylen-cyclohexylen-, Ethylen-cyclohexylen- oder Methylencyclohexylen-methylenreste genannt.

Als aromatisches Brückenglied ist B z.B. gegebenenfalls durch C₁-C₄-Alkyl, C₁-C₄-Alkoxy, C₂-C₄-Alkanoylamino, Sulfo, Halogen oder Carboxy substituiertes C₁-C₆-Alkylenphenylen, wie beispielsweise Methylenphenylen, C₁-C₄-Alkylenphenylen-C₁-C₄alkylen, wie beispielsweise Methylenphenylenmethylen oder Phenylen oder ein Rest der Formel 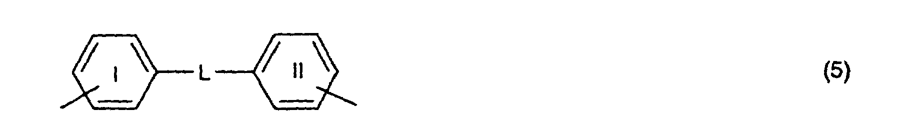 worin die Benzolringe I und II gegebenenfalls durch C₁-C₄-Alkyl, C₁-C₄-Alkoxy, C₂-C₄-Alkanoylamino, Sulfo, Halogen oder Carboxy substituiert sind und L die direkte Bindung oder ein C₂-C₁₀-Alkylenrest ist, welcher durch 1, 2 oder 3 Sauerstoffatome unterbrochen sein kann, oder L ein Brückenglied der Formel -CH=CH-, -N=N-, -NH-, -CO-, -NH-CO-, -NH-SO₂-, -NH-CO-NH-, -O-, -S- oder -SO₂- ist. Vorzugsweise sind die für B genannten aromatischen Brückenglieder unsubstituiert oder duch Sulfo substituiert.

Bedeutet A im Farbstoff der Formel (3) Sauerstoff, so ist B als aromatisches Brückenglied bevorzugt ein Rest der Formel (5), worin die Benzolringe I und II gegebenenfalls wie oben angegeben substituiert sind und L die oben genannten Bedeutungen und Bevorzugungen hat. Vorzugsweise sind die Benzolringe I und II unsubstituiert und L bedeutet Isopropylen.

Bevorzugt ist B ein C₂-C₁₂-Alkylenrest, insbesondere ein C₂-C₆-Alkylenrest, welcher durch 1, 2 oder 3 Glieder -O- unterbrochen sein kann und unsubstituiert oder durch Hydroxy oder Sulfato substituiert ist.

Als Substituenten der Reste D₁, D₂ und D₃ kommen die für Azofarbstoffe üblichen Substituenten in Betracht. Als Beispiele seien die folgenden genannt: C₁-C₄-Alkyl, worunter Methyl, Ethyl, n- oder iso-Propyl, n-, iso-, sec.- oder tert.-Butyl zu verstehen ist; C₁-C₄-Alkoxy, worunter Methoxy, Ethoxy, n- oder iso-Propoxy oder n-, iso-, sec.- oder tert.-Butoxy zu verstehen ist; Hydroxy-C₁-C₄-Alkoxy; Phenoxy; gegebenenfalls im Alkylteil durch Hydroxy oder C₁-C₄-Alkoxy substituiertes C₂-C₆-Alkanoylamino, wie z.B. Acetylamino, Hydroxyacetylamino, Methoxyacetylamino oder Propionylamino; gegebenenfalls im Phenylteil durch Hydroxy, Sulfo, Halogen, C₁-C₄-Alkyl oder C₁-C₄-Alkoxy substituiertes Benzoylamino; gegebenenfalls im Alkylteil durch Hydroxy, C₁-C₄-Alkyl oder C₁-C₄-Alkoxy substituiertes C₁-C₆-Alkoxycarbonylamino; gegebenenfalls im Phenylteil durch Hydroxy, C₁-C₄-Alkyl oder C₁-C₄-Alkoxy substituiertes Phenoxycarbonylamino; Amino; gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, wie z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, γ-Sulfo-npropylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil durch Nitro, C₁-C₄-Alkyl, C₁-C₄-Alkoxy, Carboxy, Halogen oder Sulfo substituiertes N-Phenylamino oder N-C₁-C₄-Alkyl-N-phenylamino; C₁-C₄-Alkoxycarbonyl, z.B. Methoxy- oder Ethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Carbamido; Sulfamoyl; gegebenenfalls im Phenylteil durch Sulfo oder Carboxy substituiertes N-Phenylsulfamoyl oder N-C₁-C₄-Alkyl-N-phenylsulfamoyl; Methyl- oder Aethylsulfonyl.

Als Substituenten der Reste D₁, D₂ und D₃ kommen auch faserreaktive Reste in Betracht.

Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen. Die faserreaktiven Reste sind in der Regel direkt oder über ein Brückenglied an den Farbstoffrest gebunden. Geeignete faserreaktive Reste sind beispielsweise solche, die mindestens einen abspaltbaren Substituenten an einem aliphatischen, aromatischen oder heterocyclischen Rest enthalten oder worin die genannten Reste einen zur Reaktion mit dem Fasermaterial geeigneten Rest, wie z.B. einen Vinylrest, enthalten.

Ein in D₁, D₂ und D₃ enthaltener faserreaktiver Rest entspricht bevorzugt der Formel (6a), (6b), (6c), (6d), (6e), (6f) oder (6g)

-SO₂-Y (6a),

-NH-CO-(CH₂)ₗ-SO₂-Y (6b),

-CONR₂-(CH₂)ₘ-SO₂-Y (6c),

-NH-CO-CH(Hal)-CH₂-Hal (6d),

-NH-CO-C(Hal)=CH₂ (6e),

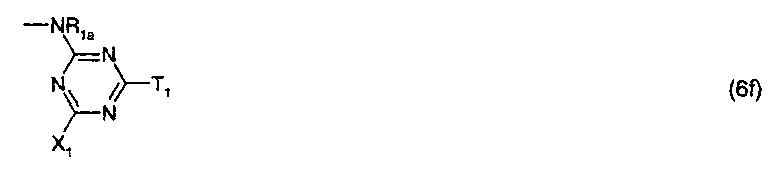

oder 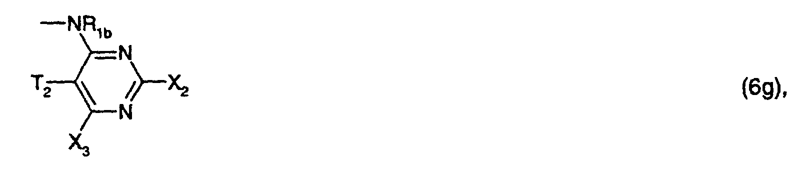 worin
Hal Chlor oder Brom ist;
X₁ Halogen, 3-Carboxypyridin-1-yl oder 3-Carbamoylpyridin-1-yl bedeutet;
T₁ unabhängig die Bedeutung von X₁ hat, für einen nicht-faserreaktiven Substituenten oder für einen faserreaktiven Rest der Formel (7a), (7b), (7c), (7d), (7e) oder (7f) 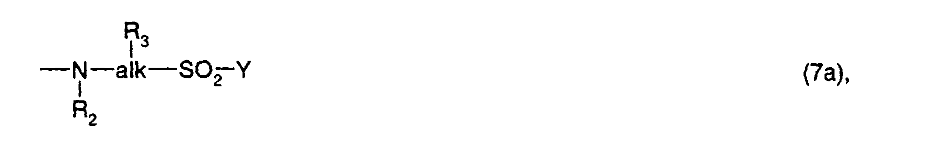 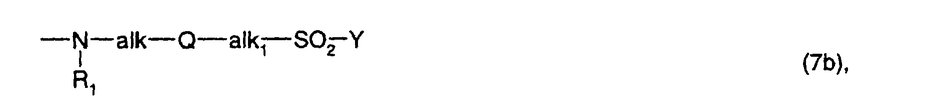 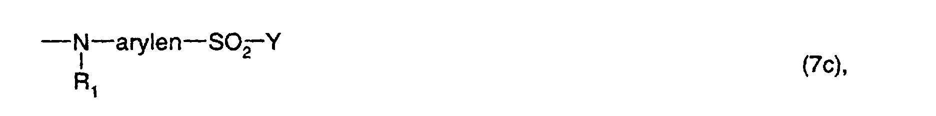 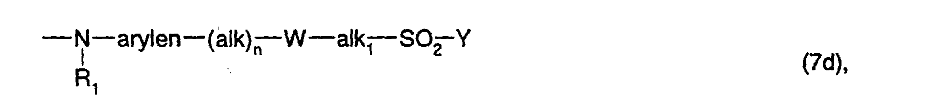 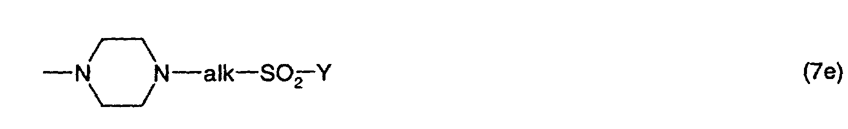 oder 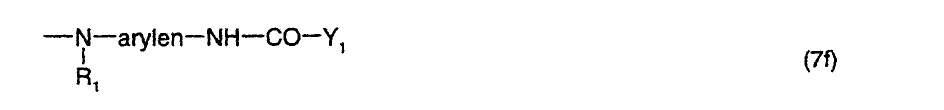 steht, worin
R₁, R₁ₐ und R_{1b} unabhängig voneinander je Wasserstoff oder C₁-C₄-Alkyl sind,
R₂ Wasserstoff, gegebenenfalls durch Hydroxy, Sulfo, Sulfato, Carboxy oder Cyano substituiertes C₁-C₄-Alkyl oder einen Rest 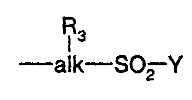 bedeutet,
R₃ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk₁ unabhängig voneinander lineares oder verzweigtes C₁-C₆-Alkylen sind,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
Q ein Rest -O- oder -NR₁-, worin R₁ die oben angegebene Bedeutung hat, ist,
W für eine Gruppe -SO₂-NR₂-, -CONR₂- oder -NR₂CO- steht, worin R₂ die oben angegebene Bedeutung hat,
Y Vinyl oder einen Rest -CH₂-CH₂-U bedeutet und U eine alkalisch abspaltbare Gruppe ist,
Y₁ für eine Gruppe -CH(Hal)-CH₂-Hal oder -C(Hal)=CH₂ steht und Hal Chlor oder Brom bedeutet, und
l und m unabhängig voneinander eine ganze Zahl von 1 bis 6 und n die Zahl 0 oder 1 sind; und
X₂ Halogen oder C₁-C₄-Alkylsulfonyl;
X₃ Halogen oder C₁-C₄-Alkyl und
T₂ Wasserstoff, Cyano oder Halogen bedeuten.

Als alkalisch abspaltbare Gruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Beispiele für geeignete Reste Y sind dementsprechend Vinyl, β-Brom- oder β-Chlorethyl, β-Acetoxyethyl, β-Benzoyloxyethyl, β-Phosphatoethyl, β-Sulfatoethyl und β-Thiosulfatoethyl. Y steht bevorzugt für Vinyl, β-Chlorethyl oder β-Sulfatoethyl und insbesondere für Vinyl oder β-Sulfatoethyl.

R₁, R₁ₐ und R_{1b} stehen unabhängig voneinander je bevorzugt für Wasserstoff, Methyl oder Ethyl und besonders bevorzugt für Wasserstoff.

R₂ bedeutet vorzugsweise Wasserstoff oder C₁-C₄-Alkyl, wie Methyl, Ethyl, Propyl, Isopropyl, Butyl, Isobutyl, sek.-Butyl oder tert.-Butyl und besonders bevorzugt Wasserstoff, Methyl oder Ethyl. Insbesondere bevorzugt ist R₂ Wasserstoff.

R₃ bedeutet bevorzugt Wasserstoff.

I und m stehen unabhängig voneinander bevorzugt für die Zahl 2, 3 oder 4 und besonders bevorzugt für die Zahl 2 oder 3.

Ganz besonders bevorzugt steht l für die Zahl 3 und m für die Zahl 2.

Für einen nicht-faserreaktiven Substituenten T₁ kommen z.B. die folgenden Reste in Betracht:
Hydroxy;
C₁-C₄-Alkoxy, wie beispielsweise Methoxy, Ethoxy, n- oder Isopropoxy, n-, sec.-, iso- oder tert.-Butoxy, insbesondere Methoxy oder Ethoxy; die genannten Reste sind unsubstituiert oder im Alkylteil substituiert, z.B. durch C₁-C₄-Alkoxy, Hydroxy, Sulfo oder Carboxy; C₁-C₄-Alkylthio, wie beispielsweise Methylthio, Ethylthio, n- oder Isopropylthio oder n-Butylthio; die genannten Reste sind unsubstituiert oder im Alkylteil substituiert, z.B. durch C₁-C₄-Alkoxy, Hydroxy, Sulfo oder Carboxy;
Amino;
N-Mono- oder N,N-Di-C₁-C₆-Alkylamino, vorzugsweise N-Mono- oder N,N-Di-C₁-C₄-Alkylamino; die genannten Reste sind unsubstituiert, gegebenenfalls im Alkylteil durch Sauerstoff unterbrochen oder im Alkylteil substituiert, z.B. durch C₂-C₄-Alkanoylamino, C₁-C₄-Alkoxy, Hydroxy, Sulfo, Sulfato, Carboxy, Cyano, Carbamoyl oder Sulfamoyl; als Beispiele seien N-Methylamino, N-Ethylamino, N-Propylamino, N,N-Di-Methylamino oder N,N-Di-Ethylamino, N-β-Hydroxyethylamino, N,N-Di-β-Hydroxyethylamino, N-2-(β-Hydroxyethoxy)ethylamino, N-2-[2-(β-Hydroxyethoxy)ethoxy]ethylamino, N-β-Sulfatoethylamino, N-β-Sulfoethylamino, N-Carboxymethylamino, N-β-Carboxy-ethylamino, N-α,β-Dicarboxyethylamino, N-α,γ-Dicarboxypropylamino, N-Ethyl-N-β-Hydroxyethylamino oder N-Methyl-N-β-Hydroxyethylamino genannt;
C₅-C₇-Cycloalkylamino, wie z.B. Cyclohexylamino, welches sowohl die unsubstituierten wie auch die im Cycloalkylring z.B. durch C₁-C₄-Alkyl, insbesondere Methyl, oder Carboxyl substituierten Reste umfasst;
Phenylamino oder N-C₁-C₄-Alkyl-N-phenylamino, welches sowohl die unsubstituierten wie auch die im Phenylring z.B. durch C₁-C₄-Alkyl, C₁-C₄-Alkoxy, C₂-C₄-Alkanoylamino, Carboxy, Carbamoyl, Sulfo oder Halogen substituierten Reste umfasst, wie beispielsweise 2-, 3- oder 4-Chlorphenylamino, 2-, 3- oder 4-Methylphenylamino, 2-, 3- oder 4-Methoxyphenylamino, 2-, 3- oder 4-Sulfophenylamino, Disulfophenylamino oder 2-, 3- oder 4-Carboxyphenylamino;
gegebenenfalls im Naphthylring z.B. durch Sulfo substituiertes Naphthylamino, vorzugsweise die durch 1 bis 3 Sulfogruppen substituierten Reste, wie beispielsweise 1- oder 2-Naphthylamino, 1-Sulfo-2-naphthylamino, 1,5-Disulfo-2-naphthylamino oder 4,8-Disulfo-2-naphthylamino; oder
gegebenenfalls im Phenylteil z.B. durch C₁-C₄-Alkyl, C₁-C₄-Alkoxy, Carboxy, Sulfo oder Halogen substituiertes Benzylamino.

Als nicht-faserreaktiver Rest hat T₁ vorzugsweise die Bedeutung C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino.

Besonders bevorzugte nicht-faserreaktive Reste T₁ sind Amino, N-Methylamino, N-Ethylamino, N-β-Hydroxyethylamino, N-Methyl-N-β-Hydroxyethylamino, N-Ethyl-N-β-Hydroxyethylamino, N,N-Di-β-Hydroxyethylamino, Morpholino, 2-, 3- oder 4-Carboxyphenylamino, 2-, 3- oder 4-Sulfophenylamino oder N-C₁-C₄-Alkyl-N-phenylamino.

X₁ bedeutet bevorzugt Halogen, z.B. Fluor, Chlor oder Brom und insbesondere bevorzugt Chlor oder Fluor.

T₂, X₂ und X₃ als Halogen bedeuten z.B. Fluor, Chlor oder Brom, insbesondere Chlor oder Fluor.

X₂ als C₁-C₄-Alkylsulfonyl bedeutet z.B. Ethylsulfonyl oder Methylsulfonyl und insbesondere Methylsulfonyl.

X₃ als C₁-C₄-Alkyl bedeutet z.B. Methyl, Ethyl, n- oder iso-Propyl, n-, iso- oder tert.-Butyl und insbesondere Methyl.

X₂ und X₃ sind bevorzugt unabhängig voneinander Chlor oder Fluor.

T₂ bedeutet bevorzugt Cyano oder Chlor.

Hal bedeutet vorzugsweise Brom.

Bei alk und alk₁ handelt es sich unabhängig voneinander z.B. um einen Methylen-, Ethylen-, 1,3-Propylen-, 1,4-Butylen-, 1,5-Pentylen- oder 1,6-Hexylenrest oder deren verzweigte Isomere.

Bevorzugt stehen alk und alk₁ unabhängig voneinander je für einen C₁-C₄-Alkylenrest und insbesondere bevorzugt für einen Ethylenrest oder Propylenrest.

arylen ist vorzugsweise ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

Q steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

n steht bevorzugt für die Zahl 0.

Die Reaktivreste der Formeln (7a) bis (7f) sind vorzugsweise solche, worin W eine Gruppe der Formel -CONH-, R₁, R₂ und R₃ je Wasserstoff, Q der Rest -O- oder -NH- , alk und alk₁ unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und n die Zahl 0 bedeuten.

Ein in D₁, D₂ und D₃ enthaltener faserreaktiver Rest entspricht besonders bevorzugt einem Rest der Formel (6a), (6c), (6d), (6e) oder (6f), worin Y Vinyl, β-Chlorethyl oder β-Sulfatoethyl, Hal Brom, R₂ und R₁ₐ Wasserstoff, m die Zahl 2 oder 3, X₁ Halogen, T₁ C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino, oder für einen faserreaktiven Rest der Formel (7a'), (7b'), (7c'), (7d') oder (7f')

-NH-(CH₂)₂₋₃-SO₂Y (7a),

-NH-(CH₂)₂₋₃-O-(CH₂)₂₋₃-SO₂Y (7b'),

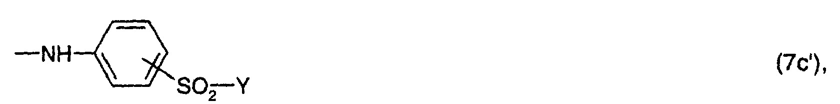

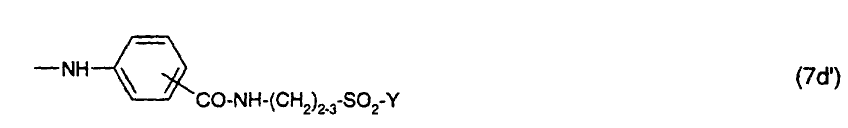

oder 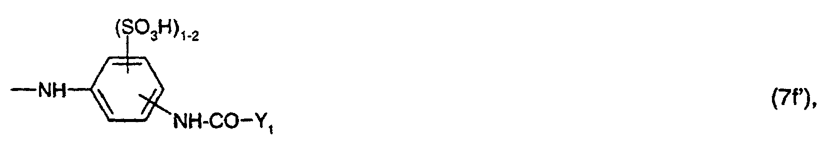 insbesondere (7c') oder (7d'), steht, worin
Y die oben angegebene Bedeutung hat, und
Y₁ für eine Gruppe -CH(Br)-CH₂-Br oder -C(Br)=CH₂ steht.

Im Fall der Reste der Formeln (7a') und (7b') ist Y bevorzugt β-Chlorethyl. Im Fall der Reste der Formeln (7c') und (7d') ist Y bevorzugt Vinyl oder β-Sulfatoethyl.

Eine besondere Ausführungsform der vorliegenden Erfindung betrifft Farbstoffe, worin ein in D₁, D₂ und D₃ enthaltener Rest der Formel (6h) 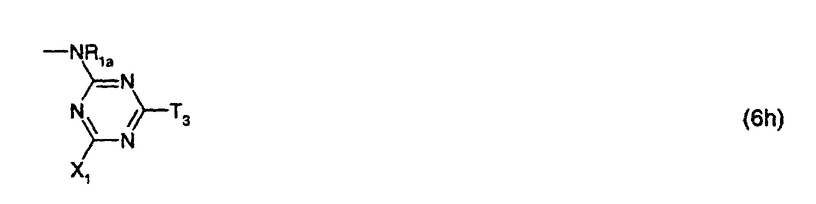 entspricht, worin
R₁ₐ und X₁ die oben angegebenen Bedeutungen und Bevorzugungen haben, und
T₃ für einen Monoazo- oder Disazoaminorest der Formel (8) oder (9)

   D-N=N-(M-N=N)ᵤ-K-NR₁- (8)

   oder

   -NR₁-D-N=N-(M-N=N)ᵤ-K (9)

   steht, worin
D der Rest einer Diazokomponente der Benzol- oder Naphthalinreihe ist,
M den Rest einer Mittelkomponente der Benzol- oder Naphthalinreihe bedeutet,
K der Rest einer Kupplungskomponente der Benzol-, Naphthalin-, Pyrazolon-, 6-Hydroxypyridon-(2)- oder Acetessigsäurearylamid-Reihe ist,
R₁ die oben angegebenen Bedeutungen und Bevorzugungen hat
und u die Zahl 0 oder ist, wobei D, M und K bei Azofarbstoffen übliche Substituenten tragen können.

Mit dem Begriff "bei Azofarbstoffen übliche Substituenten" sind sowohl faserreaktive als auch nicht-faserreaktive Substituenten, wie z.B. die oben für D₁, D₂ und D₃ angegebenen Substituenten, gemeint.

Als nicht-faserreaktive Substituenten kommen für D, M und K in T₃ vorzugsweise gegebenenfalls durch Hydroxy, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Sulfomethyl, C₂-C₄-Alkanoylamino, gegebenenfalls im Phenylring durch C₁-C₄-Alkyl, C₁-C₄-Alkoxy, Halogen oder Sulfo substituiertes Benzoylamino oder gegebenenfalls durch C₁-C₄-Alkyl, C₁-C₄-Alkoxy, Halogen, Carboxy oder Sulfo substituiertes Phenyl in Betracht.

Die Monoazo- oder Disazoaminoreste der Formel (8) oder (9) enthalten vorzugsweise mindestens eine Sulfogruppe.

Bevorzugte Monoazo- oder Disazoaminoreste T₃ sind die Reste der Formel (10a), (10b), (10c), (10d), (10e), (10f), (10g), (10h), (10i), (10j), (10k), (10l), (10m), (10n), (10o) oder (10p) 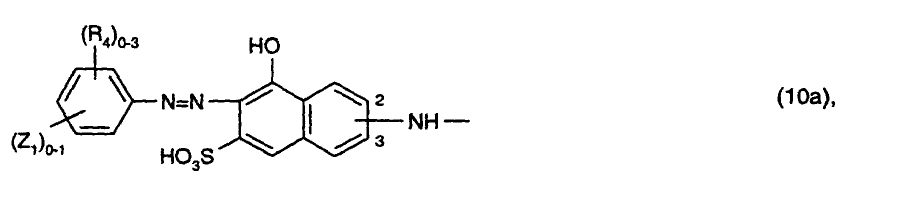 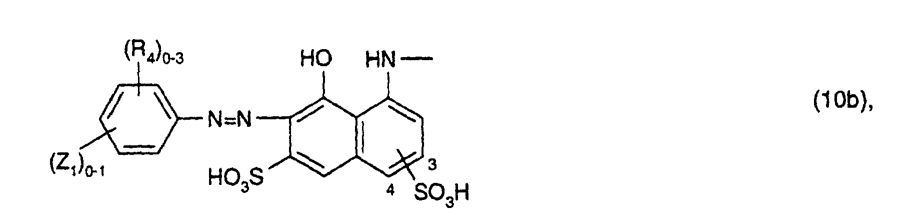 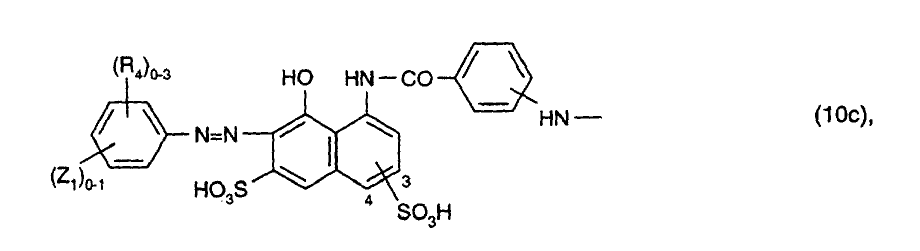 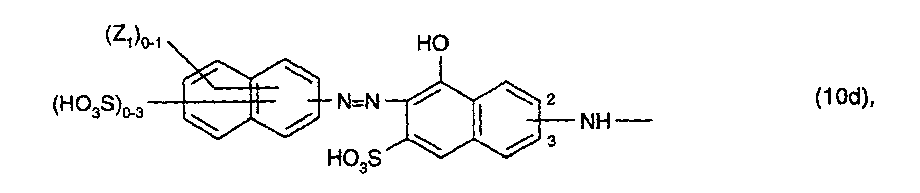 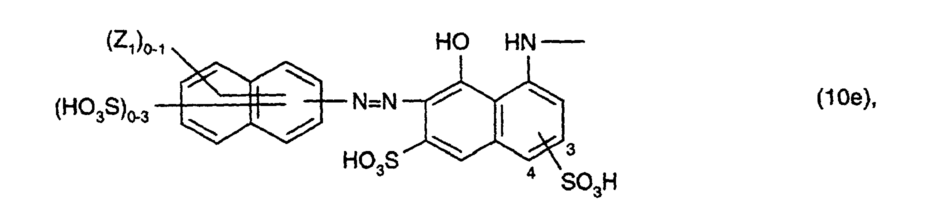 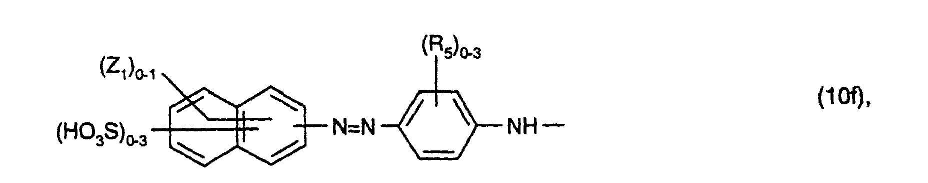
worin (R₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht,
(R₅)₀₋₃ für 0 bis 3 gleiche oder verschiedene Substituenten aus der Gruppe Halogen, Nitro, Cyan, Trifluormethyl, Sulfamoyl, Carbamoyl, C₁-C₄-Alkyl, gegebenenfalls durch Hydroxy, Sulfato oder C₁-C₄-Alkoxy substituiertes C₁-C₄-Alkoxy, Amino, C₂-C₄-Alkanoylamino, Ureido, Hydroxy, Carboxy, Sulfomethyl, C₁-C₄-Alkylsulfonylamino und Sulfo steht, und
Z₁ einen Rest der Formel (6a), (6c), (6d), (6e), (6f) oder (6g), vorzugsweise (6a), (6c), (6d) oder (6e) und insbesondere (6a) bedeutet, wobei für die genannten Reste die oben aufgeführten Bedeutungen und Bevorzugungen gelten, 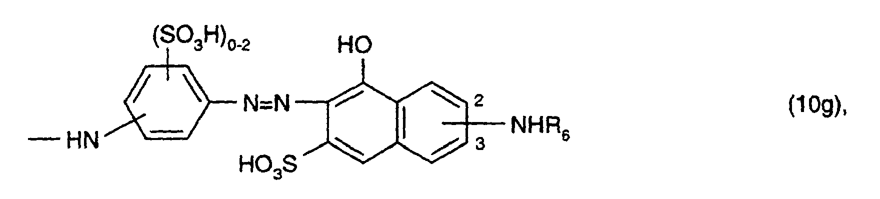 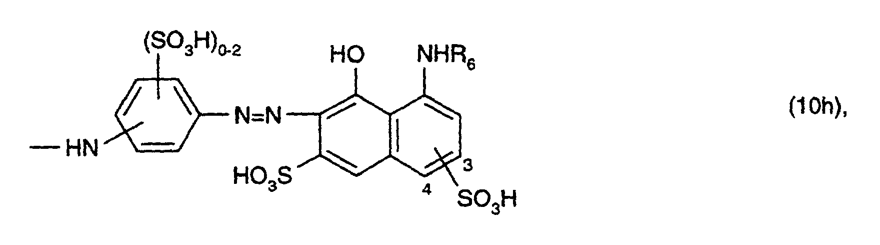
worin R₆ C₂-C₄-Alkanoyl oder Benzoyl ist, 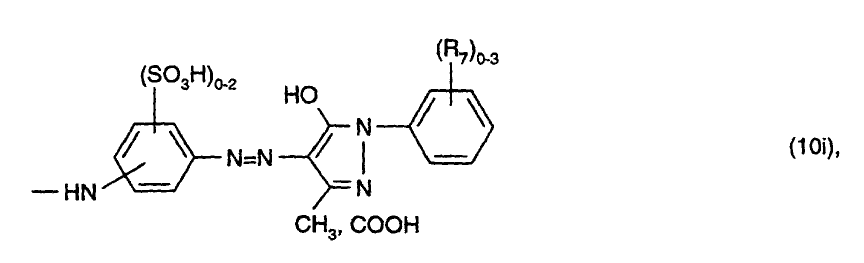 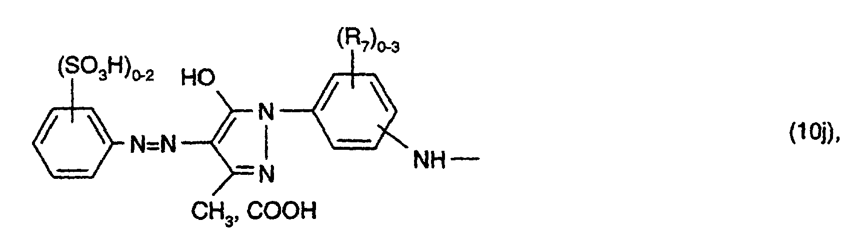 worin (R₇)₀₋₃ für 0 bis 3 gleiche oder verschiedene Substituenten aus der Gruppe C₁-C₄-Alkyl, C₁-C₄-Alkoxy, Halogen, Carboxy und Sulfo steht, 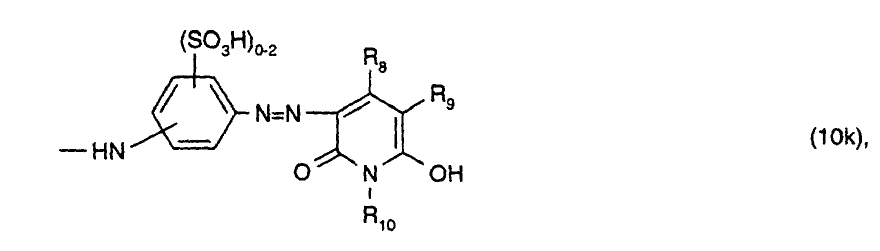 worin R₈ und R₁₀ unabhängig voneinander Wasserstoff, C₁-C₄-Alkyl oder Phenyl, und R₉ Wasserstoff, Cyano, Carbamoyl oder Sulfomethyl ist, 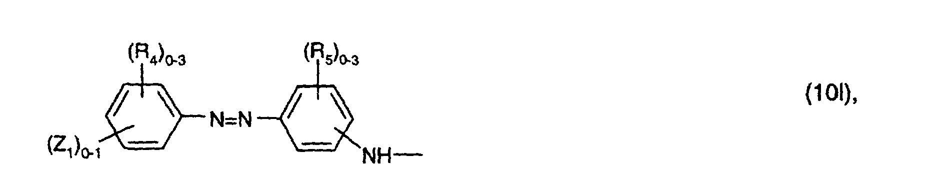 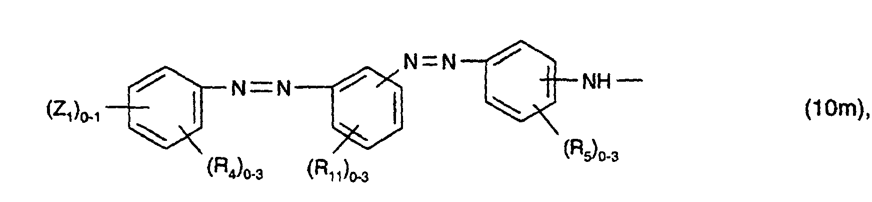 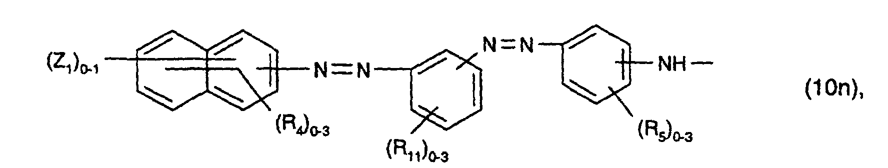 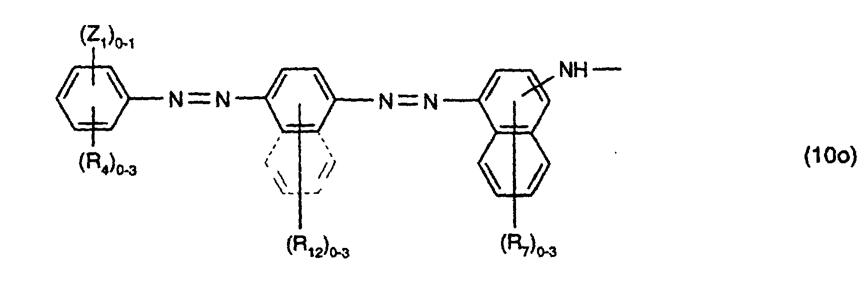 oder 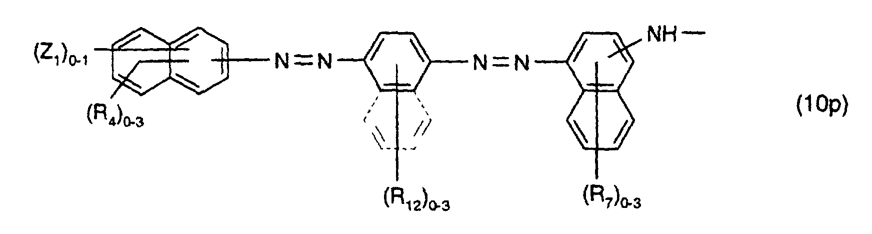 worin
(R₄)₀₋₃, (R₅)₀₋₃ und (R₇)₀₋₃ jeweils die oben angegebene Bedeutung haben,
(R₁₁)₀₋₃ und (R₁₂)₀₋₃ unabhängig voneinander für 0 bis 3 gleiche oder verschiedene Substituenten aus der Gruppe C₁-C₄-Alkyl, C₁-C₄-Alkoxy, Halogen, Carboxy und Sulfo stehen, und für Z₁ die oben angegebenen Bedeutungen und Bevorzugungen gelten.

Die Zahlen an den Naphthylringen der Reste der Formeln (10a), (10b), (10c), (10d), (10e), (10g) und (10h) kennzeichnen die möglichen Bindungspositionen.

(R₄)₀₋₃ in den Disazoaminoresten der Formeln (10n) und (10p) bedeutet vorzugsweise 0 bis 3 Sulfogruppen.

Besonders bevorzugte Monoazo- oder Disazoaminoreste T₃ sind die Reste der Formel (10a), (10b), (10d), (10e), (10f), (10k) oder (10m), insbesondere (10b), (10k) oder (10m).

Bevorzugt ist nur in einem der Reste D₁, D₂ und D₃, insbesondere in D₁, ein Rest der Formel (6h) enthalten, worin R₁ₐ, X₁ und T₃ die oben angegebenen Bedeutungen und Bevorzugungen haben.

D₁, D₂ und D₃ unabhängig voneinander als Reste einer gegebenenfalls substituierten Diazokomponente der Benzol- oder Naphthalinreihe bedeuten z.B. Phenyl oder Naphthyl, welches unsubstituiert oder substituiert ist z.B. durch C₁-C₄-Alkyl, C₁-C₄-Alkoxy, Halogen, Sulfo, Nitro, Carboxy oder einen faserreaktiven Rest der Formeln (6a), (6b), (6c), (6d), (6e), (6f) oder (6g), insbesondere (6a), (6c), (6d), (6e) oder (6f), wobei für die genannten faserreaktiven Reste die oben aufgeführten Bedeutungen und Bevorzugungen gelten.

D₁, D₂ und D₃ unabhängig voneinander als Reste einer gegebenenfalls substituierten Diazokomponente der Benzol- oder Naphthalinreihe schliessen auch Monoazo-Reste mit ein, z.B. solche der Formel (11) oder (12)

-D*-N=N-K* (11)

oder

D*-N=N-K**- (12),

vorzugsweise der Formel (12), worin D* der Rest einer Diazokomponente der Benzol- oder Naphthalinreihe, K* der Rest einer Kupplungskomponente der Benzol-, Naphthalin-, Pyrazolon-, 6-Hydroxypyridon-(2)- oder Acetessigsäurearylamid-Reihe und K** der Rest einer Kupplungskomponente der Benzol-oder Naphthalin-Reihe ist, wobei D*, K* und K** bei Azofarbstoffen übliche Substituenten tragen können.

Als nicht faserreaktive Substituenten kommen für D*, K* und K** vorzugsweise gegebenenfalls durch Hydroxy, C₁-C₄-Alkoxy, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Sulfomethyl, C₂-C₄-Alkanoylamino, C₁-C₄-Alkylsulfonylamino, gegebenenfalls im Phenylring durch C₁-C₄-Alkyl, C₁-C₄-Alkoxy, Halogen oder Sulfo substituiertes Benzoylamino oder gegebenenfalls durch C₁-C₄-Alkyl, C₁-C₄-Alkoxy, Halogen, Carboxy oder Sulfo substituiertes Phenyl in Betracht.

Als faserreaktive Substituenten kommen für D*, K* und K** vorzugsweise die Reste der Formeln (6a), (6c), (6d), (6e) oder (6f), insbesondere (6a), in Betracht, wobei für die genannten Reste die oben angegebenen Bedeutungen und Bevorzugungen gelten.

Die Monoazoreste der Formel (11) oder (12) enthalten vorzugsweise mindestens eine Sulfogruppe.

Bevorzugte Monoazoreste D₁, D₂ und D₃ der Formel (12) entsprechen den Resten der Formel (12a), (12b), (12c), (12d), (12e), (12f), (12g), (12h), (12i) oder (12j) 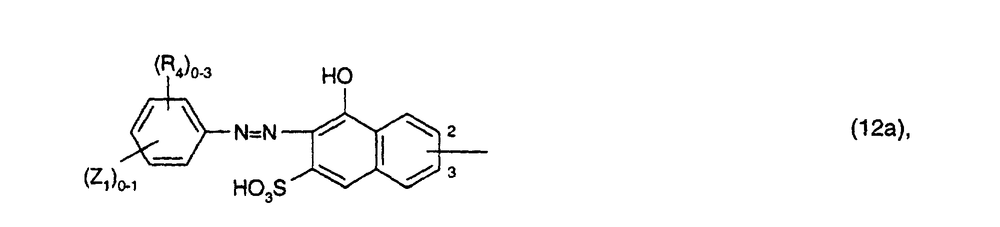 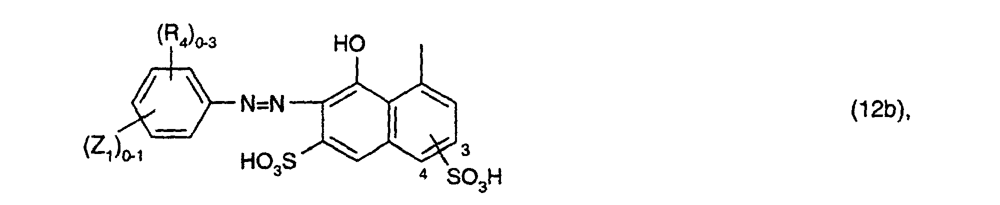 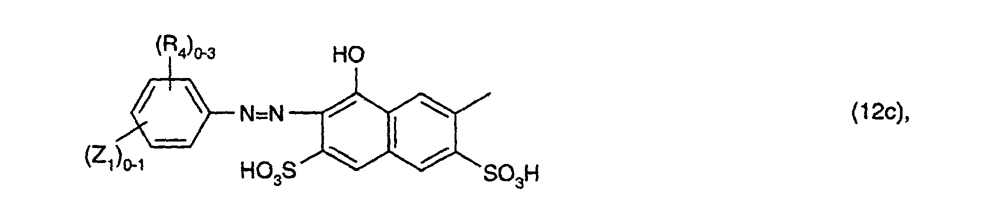 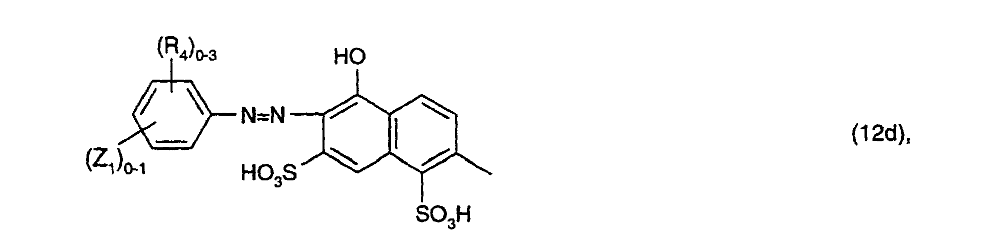 worin (R₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht und Z₁ einen faserreaktiven Rest der Formel (6a), (6c), (6d), (6e), (6f) oder (6g), vorzugsweise (6a), (6c), (6d) oder (6e) und insbesondere (6a) bedeutet, wobei für die genannten faserreaktiven Reste die oben angegebenen Bedeutungen und Bevorzugungen gelten, 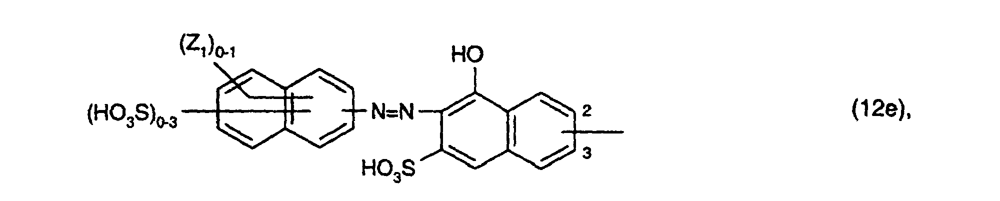 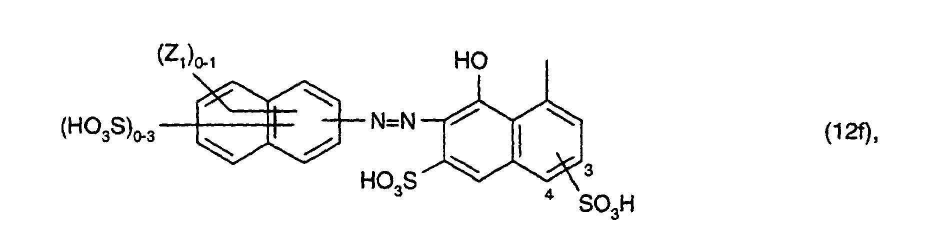 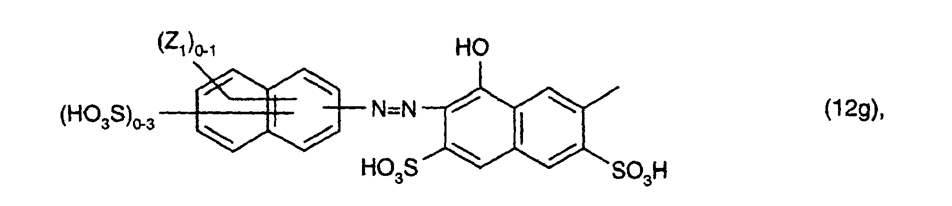 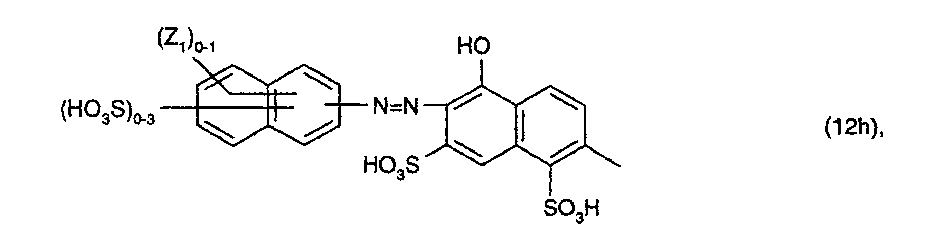 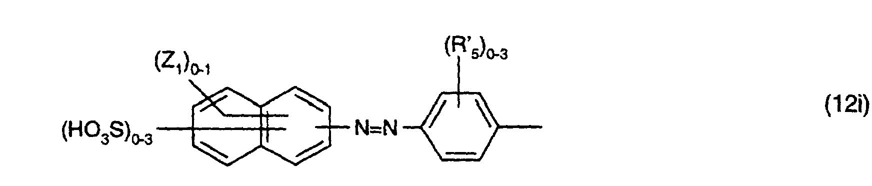 oder 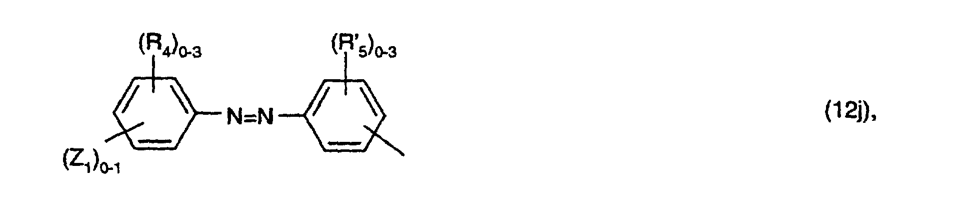 worin (R₄)₀₋₃ die oben angegebene Bedeutung hat, (R'₅)₀₋₃ für 0 bis 3 gleiche oder verschiedene Substituenten aus der Gruppe Halogen, Nitro, Cyan, Trifluormethyl, Sutfamoyl, Carbamoyl, C₁-C₄-Alkyl, gegebenenfalls durch Hydroxy, Sulfato oder C₁-C₄-Alkoxy substituiertes C₁-C₄-Alkoxy, Amino, C₂-C₄-Alkanoylamino, Ureido, Hydroxy, Carboxy, Sulfomethyl, C₁-C₄-Alkylsutfonylamino, Sulfo und einen faserreaktiven Rest der Formel (6f) steht, worin den Resten R₁ₐ, T₁ und X₁ die oben angegebenen Bedeutungen und Bevorzugungen zukommen, und für Z₁ die oben angegebenen Bedeutungen und Bevorzugungen gelten.

Die Zahlen an den Naphthylringen der Reste der Formeln (12a), (12b), (12e) und (12f) kennzeichnen die möglichen Bindungspositionen.

Die Reste D₁, D₂ und D₃ in den erfindungsgemässen Farbstoffen der Formeln (2) oder (3) sowie die Reste D₁ und D₂ in den erfindungsgemässen Farbstoffen der Formel (4) sind identisch oder nicht identisch.

Als aromatische Tetrazokomponente ist D₄ z.B. gegebenenfalls durch C₁-C₄-Alkyl, C₁-C₄-Alkoxy, C₂-C₄-Alkanoylamino, Sulfo, Halogen oder Carboxy substituiertes Phenylen oder Naphthylen oder ein Rest der Formel (5), wobei für den Rest der Formel (5) die oben genannten Bedeutungen gelten.

Als aromatische Tetrazokomponente kommt für D₄ auch ein Rest der Formel (5') 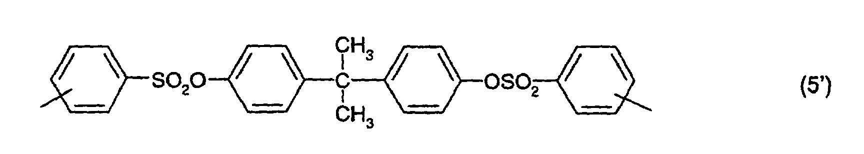 in Betracht.

Bevorzugt ist D₄ ein durch 1 bis 3, vorzugsweise 2 Sulfogruppen, substituiertes Naphthylen, ein Rest der Formel (5') oder ein Rest der Formel (5), worin die Benzolringe I und II gegebenenfalls durch 1 oder 2 Sulfogruppen substituiert sind und L die direkte Bindung, ein C₂-C₄-Alkylenrest oder ein Brückenglied der Formel -CH=CH-, -NH-, -CO-, -NH-CO-, -NH-SO₂-, -NH-CO-NH-, -O-, -S- oder -SO₂- ist.

Als aliphatischer Rest kommen für R z.B. die oben für R' als gegebenenfalls substituiertes oder durch Sauerstoff unterbrochenes C₁-C₁₂-Alkyl genannten Reste in Betracht. Femer seien für R beispielhaft die folgenden Reste genannt: 2,5-Di-(β-Chlorethylsulfonyl)pentyl, 2-[2-(β-Chlorethylsulfonyl)ethoxy]ethyl oder 2-[2-(β-Sulfatoethylsulfonyl)ethoxy]ethyl.

Als aliphatischer Rest kommen für R weiterhin z.B. C₅-C₇-Cycloalkylreste, wie insbesondere Cyclohexylreste, in Betracht. Die genannten Cycloalkylreste können gegebenenfalls durch C₁-C₄-Alkyl, C₁-C₄-Alkoxy, C₂-C₄-Alkanoylamino, Sulfo, Halogen oder Carboxy, insbesondere durch C₁-C₄-Alkyl, substituiert sein. Als aliphatische Reste seien für R femer gegebenenfalls im Cyclohexylring durch C₁-C₄-Alkyl, insbesondere Methyl, substituierte Methylen-cyclohexyloder Ethylen-cyclohexylreste genannt.

Als aromatischer Rest kommt für R z.B. gegebenenfalls substituiertes Phenyl oder Naphthyl in Betracht, welches sowohl die unsubstituierten wie auch die durch C₁-C₄-Alkyl, wie beispielsweise Methyl oder Ethyl; C₁-C₄-Alkoxy, wie beispielsweise Methoxy oder Ethoxy; C₂-C₄-Alkanoylamino; Carboxy; Carbamoyl; Sulfo oder Halogen, wie beispielsweise Chlor oder Brom; oder faserreaktiver Rest der Formel (6a), (6b), (6c), (6d), (6e), (6f) oder (6g) substituierten Reste umfassen, wobei für die faserreaktiven Reste der Formeln (6a), (6b), (6c), (6d), (6e), (6f) und (6g) die oben genannten Bedeutungen und Bevorzugungen gelten. Als Beispiele seien die folgenden Reste genannt: o-, m- oder p-Chlorphenyl, o-, m- oder p-Methylphenyl, o-, m- oder p-Methoxyphenyl, o-, m- oder p-Sulfophenyl, Disulfophenyl, o-, m-oder p-Carboxyphenyl, 1- oder 2-Naphthyl, 1-Sulfo-2-naphthyl, 1,5-Disulfo-2-naphthyl, 4,8-Disulfo-2-naphthyl oder 4-(β-Sulfatoethylsulfonyl)phenyl.

R als gegebenenfalls substituiertes Phenyl oder Naphthyl bedeutet ferner z.B. einen Monoazo- oder Disazorest der Formel (13) oder (14)

D-N=N-(M-N=N)ᵤ-K- (13)

oder

-D-N=N-(M-N=N)ᵤ-K (14),

wobei D, M, K und u die oben unter den Formeln (8) und (9) angegebenen Bedeutungen haben.

Monoazoreste R entsprechen beispielsweise den oben genannten Resten der Formel (10a), (10b), (10c), (10d), (10e), (10f), (10g), (10h), (10i), (10j), (10k), (10l), (10m), (10n), (10o) oder (10p), falls man die Gruppe -NH- in der jeweiligen Formel durch eine direkte Bindung ersetzt.

Bilden die Reste R und R' zusammen mit dem Stickstoffatom einen heterocyclischen Rest, so handelt es sich beispielsweise um Morpholin.

In einer bevorzugten Ausführungsform der erfindungsgemässen Azofarbstoffe der Formel (2), (3) oder (4) bedeutet A Sauerstoff oder einen Rest -NR'-.

Bedeutet A in den erfindungsgemässen Farbstoffen der Formel (2) oder (4) einen Rest -NR'-, so ist R' bevorzugt Wasserstoff und R vorzugsweise Wasserstoff, ein gegebenenfalls durch Hydroxy, Sulfo, Carboxy oder Sulfato, insbesondere Hydroxy oder Sulfato und ganz besonders Hydroxy, substituiertes C₁-C₄-Alkyl oder 2-(β-Sulfatoethylsulfonyl)-ethyl.

Bedeutet A in den erfindungsgemässen Farbstoffen der Formel (2) oder (4) Sauerstoff so ist R bevorzugt Wasserstoff oder gegebenenfalls durch Hydroxy substituiertes C₁-C₄-Alkyl und insbesondere Wasserstoff.

In den erfindungsgemässen Farbstoffen der Formel (3) bedeutet A vorzugsweise einen Rest -NR'-, worin R' Wasserstoff, Methyl oder Ethyl und ganz besonders Wasserstoff ist.

In einer besonders bevorzugten Ausführungsform der erfindungsgemässen Azofarbstoffe der Formel (2) oder (4) bedeutet A Sauerstoff und R Wasserstoff.

Bevorzugt sind die erfindungsgemässen Azofarbstoffe der Formel (2) oder (4) und insbesondere der Formel (2).

Bevorzugt entsprechen die Reste D₁, D₂ und D₃ unabhängig voneinander je einem Rest der Formel (15) oder (16) 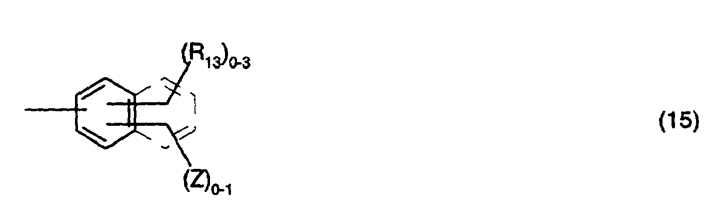 oder 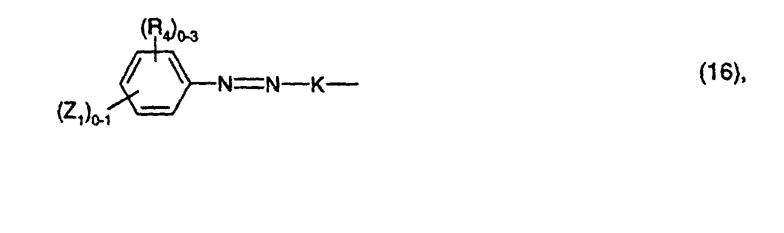 worin
K für den Rest einer Kupplungskomponente der Formel (17a) oder (17b) 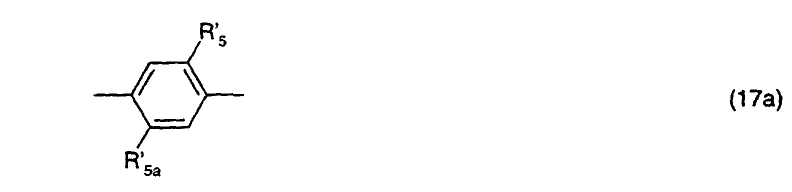 oder 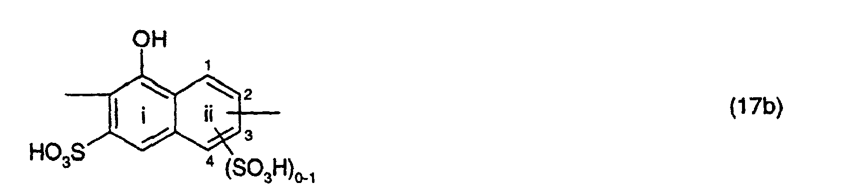 und
Z und Z₁ unabhängig voneinander für einen Rest der Formel (6a), (6c), (6d), (6e) oder (6f) stehen, worin
R₁ₐ und R₂ Wasserstoff sind,
Hal Brom bedeutet,
Y Vinyl, β-Chlorethyl oder β-Sulfatoethyl ist,
T₁ für C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-_{C}4-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (7c') oder (7d') 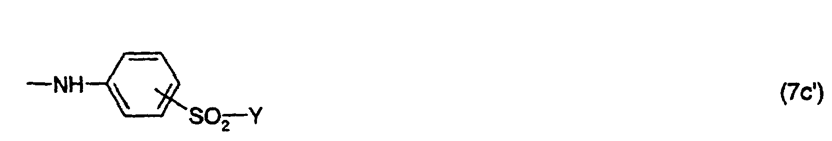 oder 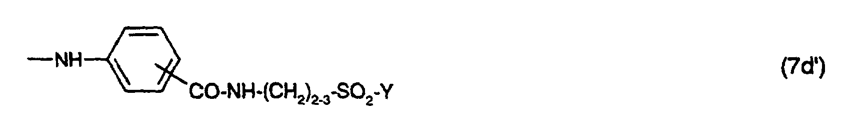 steht und Y die oben angegebenen Bedeutungen hat,
X₁ Chlor oder Fluor ist,
m die Zahl 2 oder 3 bedeutet,
(R₄)₀₋₃ und (R₁₃)₀₋₃ unabhängig voneinander für 0 bis 3 gleiche oder voneinander verschiedene Substituenten ausgewählt aus der Gruppe Halogen, C₁-C₄-Alkyl, C₁-C₄-Alkoxy, Carboxy und Sulfo stehen,
R'₅ Wasserstoff, Sulfo oder gegebenenfalls im Alkylteil durch Hydroxy oder Sulfato substituiertes C₁-C₄-Alkoxy ist,
R'₅ₐ für Wasserstoff, C₁-C₄-Alkyl, C₁-C₄-Alkoxy, C₂-C₄-Alkanoylamino, Ureido oder einen Rest der Formel (6f) steht, worin für die Reste R₁ₐ, T₁ und X₁ die oben angegebenen Bedeutungen gelten.

Als C₁-C₄-Alkyl kommen für R₄, R'₅ₐ und R₁₃ unabhängig voneinander z.B. Methyl, Ethyl, n-Propyl, Isopropyl, n-Butyl, sek.-Butyl, tert.-Butyl oder Isobutyl, vorzugsweise Methyl oder Ethyl und insbesondere Methyl, in Betracht.

Als C₁-C₄-Alkoxy kommen für R₄, R'₅, R'₅ₐ und R₁₃ unabhängig voneinander z.B. Methoxy, Ethoxy, n-Propoxy, Isopropoxy, n-Butoxy oder Isobutoxy, vorzugsweise Methoxy oder Ethoxy und insbesondere Methoxy, in Betracht. R'₅ ist unsubstituiert oder gegebenenfalls im Alkylteil durch Hydroxy oder Sulfato substituiert.

Als Halogen kommen für R₄ und R₁₃ unabhängig voneinander z.B. Fluor, Chlor oder Brom, vorzugsweise Chlor oder Brom und insbesondere Chlor, in Betracht.

Als C₂-C₄-Alkanoylamino kommt für R'₅ₐ z.B. Acetylamino oder Propionylamino, insbesondere Acetylamino, in Betracht.

Als Rest der Formel (6f) kommt für R'₅ₐ vorzugsweise ein Rest in Betracht, worin
R₁ₐ Wasserstoff,
T₁ Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino, und
X₁ Fluor oder Chlor bedeuten.

Im Rest der Kupplungskomonente der Formel (17b) ist die Sulfogruppe im Ring ii vorzugsweise in 3 oder 4-Position gebunden. Enthält der Ring ii eine Sulfogruppe, so ist der Rest der Formel (17b) bevorzugt in 1, 2 oder 3-Position am Ring ii gebunden. Ist im Ring ii keine Sulfogruppe vorhanden, so ist der Rest der Formel (17b) bevorzugt in 2 oder 3-Position am Ring ii gebunden

Besonders bevorzugt entsprechen die Reste D₁, D₂ und D₃ unabhängig voneinander je einem Rest der Formel (15a), (15b), (15c), (15d) oder (16a) 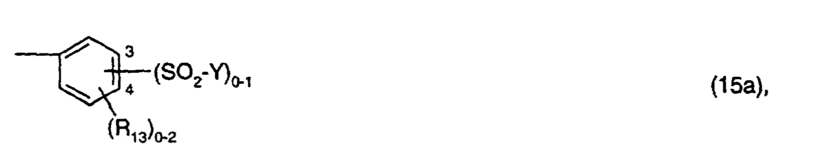 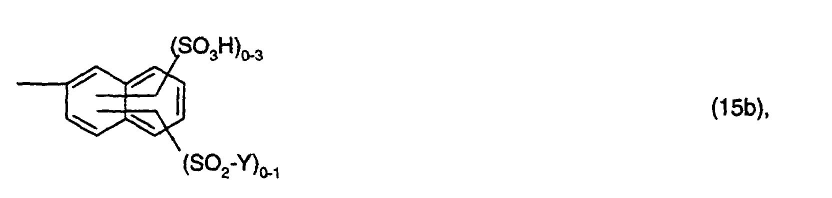 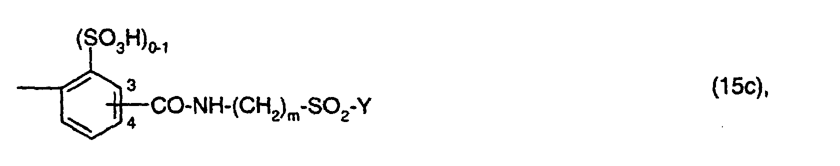 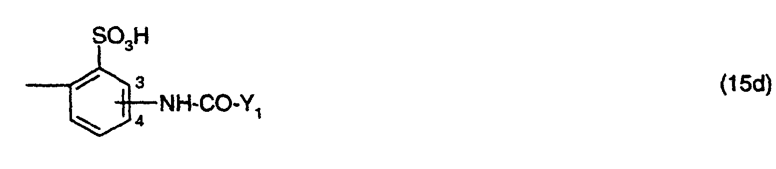 oder 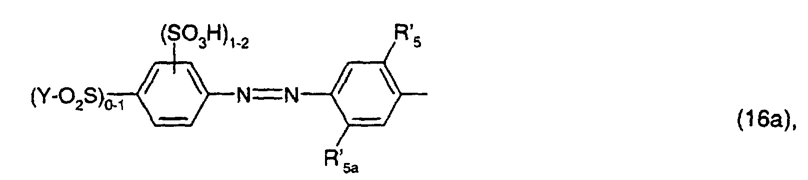 worin
R'₅ für Wasserstoff, Sulfo oder gegebenenfalls im Alkylteil durch Hydroxy oder Sulfato substituiertes Ethoxy steht,
R'₅ₐ Wasserstoff, Methyl, Ethyl, Methoxy, Ethoxy, Acetylamino, Propionylamino oder Ureido ist,
(R₁₃)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo, insbesondere Methyl, Methoxy und Sulfo, steht,
Y₁ für eine Gruppe -CH(Br)-CH₂-Br oder -C(Br)=CH₂ steht,
Y Vinyl, β-Chlorethyl oder β-Sulfatoethyl, insbesondere Vinyl oder β-Sulfatoethyl ist, und
m die Zahl 2 oder 3, insbesondere 2, bedeutet.

Die Zahlen in den Resten der Formeln (15a), (15c) und (15d) kennzeichnen die möglichen Bindungspositionen des faserreaktiven Rests.

Bevorzugt bedeuten D₁, D₂ und D₃ unabhängig voneinander jeweils einen Rest der Formel (15a), (15b) oder (16a).

In der oben bezeichneten besonderen Ausführungsform der vorliegenden Erfindung, worin ein in D₁, D₂ und D₃ enthaltener Rest der Formel (6h) entspricht, bedeutet D₁ bevorzugt einen Rest der Formel (18) 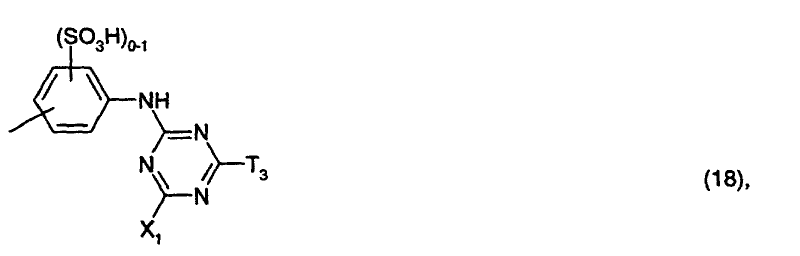 worin
X₁ Chlor oder Fluor, insbesondere Chlor, und
T₃ einen Monoazo- oder Disazoaminorest der Formel (10a), (10b), (10d), (10e), (10f), (10k) oder (10m) ist, wobei für die Reste (R₄)₀₋₃, (R₅)₀₋₃, R₈, R₁₀, R₉, (R₁₁)₀₋₃ die oben angegebenen Bedeutungen gelten, und
Z₁ einen Rest der Formel (6a), (6c'), (6d') oder (6e')

   -SO₂-Y (6a),

   -CONH-(CH₂)₂₋₃-SO₂-Y (6c'),

   -NH-CO-CH(Br)-CH₂-Br (6d')

   oder

   -NH-CO-C(Br)=CH₂ (6e'),

   vorzugsweise (6a) bedeutet, worin Y Vinyl, β-Chlorethyl oder β-Sulfatoethyl, insbesondere Vinyl oder β-Sulfatoethyl ist; und die Reste
D₂ und D₃ unabhängig voneinander je einen Rest der Formel (15a), (15b), (15c) oder (15d) sind, wobei für die Reste (R₁₃)₀₋₂, Y, Y₁ und m die oben angegebenen Bedeutungen gelten.

Bevorzugt sind Farbstoffe der Formel (2a) 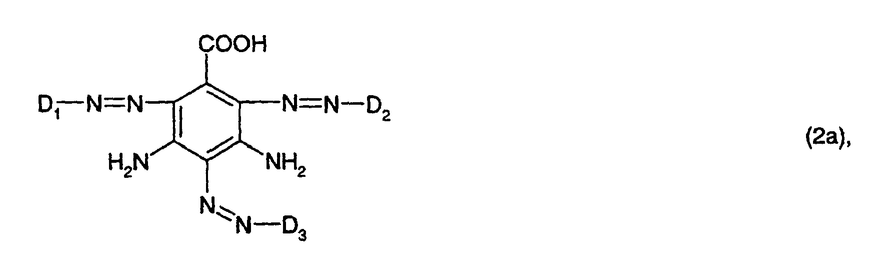 worin
D₁, D₂ und D₃ unabhängig voneinander jeweils einen Rest der Formel (15a), (15b), (15c), (15d) oder (16a), vorzugsweise (15a), (15b) oder (16a), bedeuten, wobei mindestens einer der Reste D₁, D₂ und D₃ eine faserreaktive Gruppe enthält; oder
D₁ einem Rest der Formel (18) entspricht, worin
X₁ Chlor und T₃ ein Rest der Formel (10a), (10b), (10d), (10e), (10f), (10k) oder (10m), vorzugsweise (10b), (10k) oder (10m), ist, und
D₂ und D₃ unabhängig voneinander jeweils einen Rest der Formel (15a), (15b), (15c) oder (15d), vorzugsweise (15a) oder (15b), bedeuten, wobei mindestens einer der Reste D₂ und D₃ eine faserreaktive Gruppe enthält.

Bevorzugt enthalten mindestens zwei der Reste D₁, D₂ und D₃ im Farbstoff der Formel (2a) eine faserreaktive Gruppe.

Einen weiteren Gegenstand der vorliegenden Erfindung betrifft ein Verfahren zur Herstellung der erfindungsgemässen Azofarbstoffe, dadurch gekennzeichnet, dass man ein oder mehr als ein diazotiertes Amin zusammen oder in beliebiger Reihenfolge derart auf eine Verbindung, enthaltend mindestens eine Struktureinheit der Formel (19) 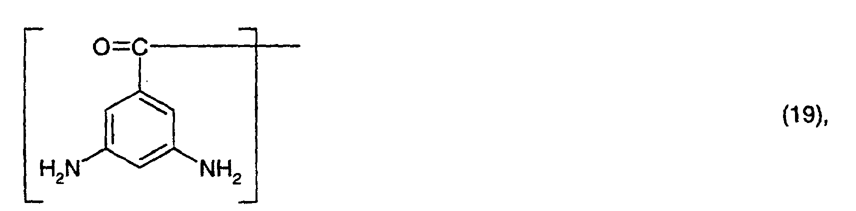 kuppelt, dass ein Azofarbstoff erhalten wird, der mindestens eine Struktureinheit der Formel (1) enthält.

Mehr als ein diazotiertes Amin sind z.B. 2 oder 3 diazotierte Amine.

Amine die sich zur Herstellung der erfindungsgemässen Azofarbstoffe eignen sind z.B. aromatische Amine der Benzol- oder Naphthalinreihe, die gemäss an sich bekannter Verfahren, wie z.B. in Venkataraman "The Chemistry of Synthetic Dyes" Band 1, Seiten 210-214 und 409-441, Academic Press, New York, London 1952 beschrieben, diazotierbar und kupplungsfähig sind.

Die Diazotierung der Amine erfolgt z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C.

Die Kupplung auf die Kupplungskomponente der Formel (19) erfolgt in an sich bekannter Weise, bei sauren, neutralen bis schwach alkalischen pH-Werten, z.B. einem pH-Wert von 1 bis 10, und Temperaturen von beispielsweise -5 bis 40°C, vorzugsweise 0 bis 30°C.

Zweckmässigerweise führt man die Kupplungsreaktion zunächst in stark saurem Medium, z.B. bei pH 1, durch und erhöht den pH-Wert der Reaktionsmischung mit fortschreitender Umsetzung langsam, z.B auf pH 5 bis 8.

Azofarbstoffe der Formel (2), worin A Sauerstoff und R Wasserstoff bedeuten und für die D₁ = D₂ ≠ D₃ oder D₂ = D₃ ≠ D₁ gilt, werden beispielsweise erhalten, indem man zunächst in etwa 1 Moläquivalent eines diazotierten Amins der Formel (20a)

D₁-NH₂ (20a)

in saurem Medium mit in etwa 1 Moläquivalent einer Verbindung der Formel (19a) 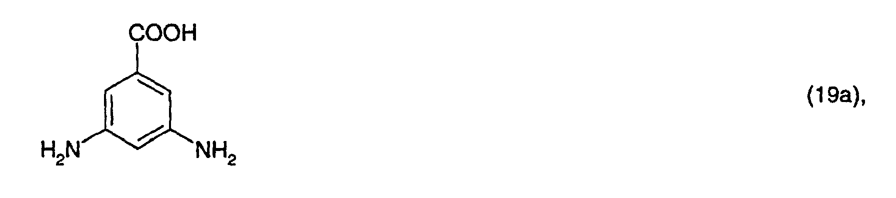 zu einer Verbindung der Formel (21a) 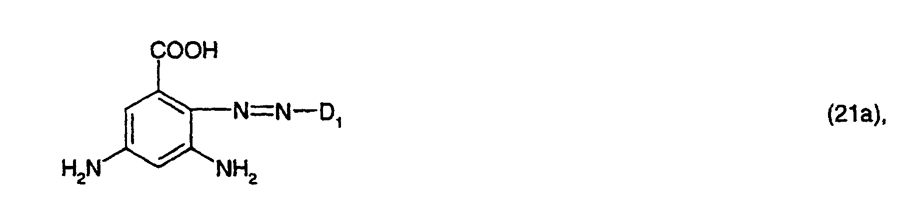 umsetzt und die Verbindung der Formel (21 a) bei erhöhtem pH-Wert mit in etwa 2 Moläquivalenten eines diazotierten Amins der Formel (20b)

D₂-NH₂ (20b)

reagieren lässt, wobei für D₁ und D₂ die oben angegebenen Bedeutungen und Bevorzugungen gelten.

Azofarbstoffe der Formel (2), worin A Sauerstoff, Schwefel oder einen Rest -NR'- und R einen aliphatischen oder aromatischen Rest bedeuten und für die D₁ = D₂ ≠ D₃ oder D₂ = D₃ ≠ D₁ gilt, werden beispielsweise erhalten, indem man in etwa 1 Moläquivalent einer Verbindung der Formel (22a) 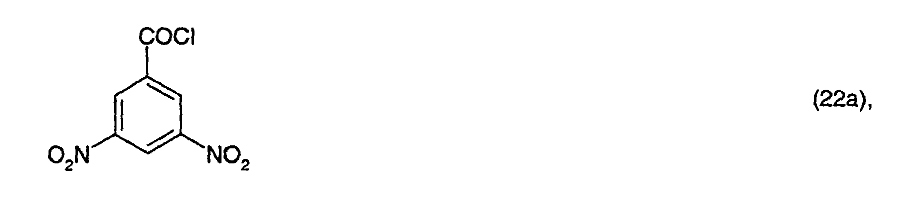 mit in etwa 1 Moläquivalent einer Verbindung der Formel (23)

R-AH (23)

in an sich bekannter Weise zu einer Verbindung der Formel (22b) 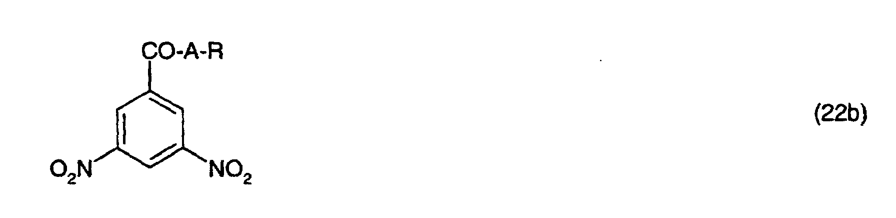 umsetzt, die Verbindung der Formel (22b) zu einer Verbindung der Formel (19c) 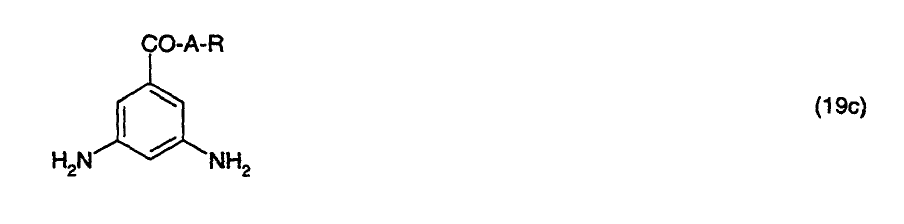 in an sich bekannter Weise reduziert und anschliessend die Verbindung der Formel (19c) in Analogie zur oben beschriebenen Vorgehensweise mit den diazotierten Aminen der Formeln (20a) und (20b) schrittweise weiter umsetzt, wobei für R' und R die oben angegebenen Bedeutungen und Bevorzugungen gelten.

Azofarbstoffe der Formel (3), für die D₁ = D₂ ≠ D₃ oder D₂ = D₃ ≠ D₁ gilt, werden beispielsweise erhalten, indem man in etwa 2 Moläquivalente einer Verbindung der Formel (22a) mit in etwa 1 Moläquivalent einer Verbindung der Formel (24)

HA-B-AH (24)

in an sich bekannter Weise zu einer Verbindung der Formel (22c) 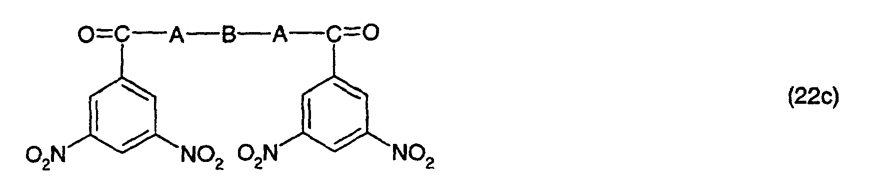 umsetzt, die Verbindung der Formel (22c) zu einer Verbindung der Formel (19d) 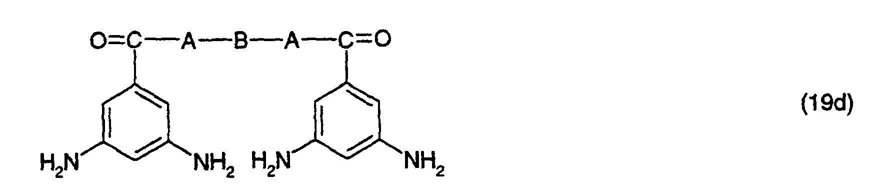 in an sich bekannter Weise reduziert und anschliessend die Verbindung der Formel (19d) in Analogie zur oben beschriebenen Vorgehensweise mit der äquivalenten Menge der diazotierten Amine der Formeln (20a) und (20b) schrittweise weiter umsetzt, wobei für A und B die oben angegebenen Bedeutungen und Bevorzugungen gelten.

Die Bedingungen für die Reduktion der Verbindungen der Formeln (22b) und (22c) wählt man zweckmässigerweise so, dass gegebenenfalls vorhandene funktionelle Gruppen in R, R' oder B nicht reduziert werden. Solche selektiven Reduktionsreaktionen sind bekannt und in der einschlägigen Literatur in grossem Umfang beschrieben.

Die erfindungsgemässen Farbstoffe der Formeln (2) und (3), für die D₁ ≠ D₂ ≠ D₃ gilt, können erhalten werden, wenn man wie oben beschrieben verfährt, jedoch anstelle eines diazotierten Amins D₂-NH₂ die äquimolare Menge einer Mischung von z.B. zwei diazotierten Aminen D₂-NH₂ und D₃-NH₂ im Molverhältnis von beispielsweise 1:1 verwendet. In der Regel fallen diese Farbstoffe als Mischungen an.

Azofarbstoffe der Formel (4), worin A Sauerstoff und R Wasserstoff bedeuten und für die D₁ = D₂ gilt, werden beispielsweise erhalten, indem man zunächst in etwa 1 Moläquivalent eines tetrazotierten Diamins der Formel (20c)

H₂N-D₄-NH₂ (20c)

in salzsaurem Medium mit in etwa 2 Moläquivalenten einer Verbindung der Formel (19a) zu einer Verbindung der Formel (21b) 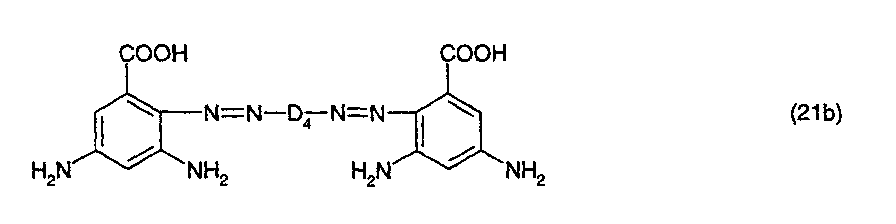 umsetzt und die Verbindung der Formel (21b) bei erhöhtem pH-Wert mit in etwa 4 Moläquivalenten eines diazotierten Amins der Formel D₁-NH₂ reagieren lässt, wobei für D₁ und D₄ die oben angegebenen Bedeutungen und Bevorzugungen gelten.

Azofarbstoffe der Formel (4), worin A Sauerstoff, Schwefel oder einen Rest -NR'- und R einen aliphatischen oder aromatischen Rest bedeuten und für die D₁ = D₂ gilt, werden beispielsweise erhalten, indem man wie oben beschrieben verfährt, jedoch anstelle der Verbindung der Formel (19a) die äquimolare Menge einer Verbindung der Formel (19c) verwendet.

Die erfindungsgemässen Farbstoffe der Formeln (4), für die D₁ ≠ D₂ gilt, können erhalten werden, wenn man wie oben beschrieben verfährt, jedoch anstelle eines diazotierten Amins D₁-NH₂ die äquimolare Menge einer Mischung von z.B. zwei diazotierten Aminen D₁-NH₂ und D₂-NH₂ im Molverhältnis von beispielsweise 1:1 verwendet. In der Regel fallen diese Farbstoffe als Mischungen an.

Die Verbindungen der Formeln (19a), (20a), (20b), (20c), (22a), (23) und (24) sind bekannt oder können in an sich bekannter Weise erhalten werden.

Aus den erfindungsgemässen Farbstoffen, die als faserreaktiven Rest ausschliesslich einen oder mehrere Halogentriazinyl-Reste der Formel (6f) enthalten, worin X₁ Chlor oder Fluor und T₁ ein nicht faserreaktiver Rest bedeutet, lassen sich wertvolle Direktfarbstoffe erhalten, wenn man den Farbstoff mit einer der Halogentriazinylmenge equivalenten Menge z.B. einer Verbindung der Formel T₁-H weiter umsetzt, wobei für T₁ die oben genannten Bedeutungen, ausgenommen faserreaktiver Rest, gelten. Insbesondere handelt es sich bei T₁-H um Ammoniak, ein wie oben bezeichnetes gegebenenfalls substituiertes Amin oder um Morpholin. Solche Umsetzungen können gemäss an sich bekannter Verfahren durchgeführt werden.

Die erfindungsgemässen Farbstoffe eignen sich zum Färben und Bedrucken der verschiedensten Materialien, insbesondere hydroxylgruppenhaltigen oder stickstoffhaltigen Fasermaterialien. Beispiele sind Papier, Seide, Leder, Wolle, Polyamidfasern und Polyurethane sowie insbesondere cellulosehaltige Fasermaterialien aller Art. Solche Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Einen weiteren Gegenstand der vorliegenden Erfindung stellt somit die Verwendung von Verbindungen der Formel (1) zum Färben oder Bedrucken von hydroxylgruppenhaltigen oder stickstoffhaltigen, insbesondere baumwollhaltigen Fasermaterialien dar.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen, insbesondere Reaktivfarbstoffen, hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten. Es werden faser- und flächenegale Färbungen erhalten.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

Beispiel 1: 17,3 Teile eines Amins der Formel D₁₀-NH₂, worin D₁₀ einen Rest der Formel 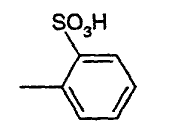 bedeutet, werden in 215 Teile Wasser eingetragen und gut verrührt. Bei 0°C gibt man zu der erhaltenen Lösung 25 Teile einer 4N Natriumnitritlösung und tropft anschliessend 20 Teile konz. Salzsäure bei 0 bis 5°C langsam zu. Es wird 1 Stunde bei dieser Temperatur gerührt.

Beispiel 2: 56,2 Teile eines Amins der Formel D₁₁-NH₂, worin D₁₁ einen Rest der Formel 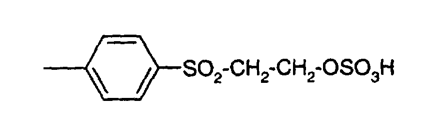 bedeutet, werden in 220 Teile Wasser eingetragen und gut verrührt. Bei 10°C gibt man zu der erhaltenen Suspension zunächst 50 Teile einer 4N Natriumnitritlösung und dann 90 Teile einer 31%igen Naphthalinsulfonsäurelösung. Anschliessend wird 3 Stunden bei 15 bis 20°C gerührt.

Beispiele 3 bis 33: Analog der in den Beispielen 1 oder 2 beschriebenen Vorgehensweise lassen sich die Diazoverbindungen der in Tabelle 1 genannten Amine herstellen, wenn man anstelle der in den Beispielen 1 oder 2 genannten Amine der Formel D₁₀-NH₂ oder D₁₁-NH₂ eine äquimolare Menge der in der Tabelle 1 genannten Amine der Formel D_{xy}-NH₂ verwendet.

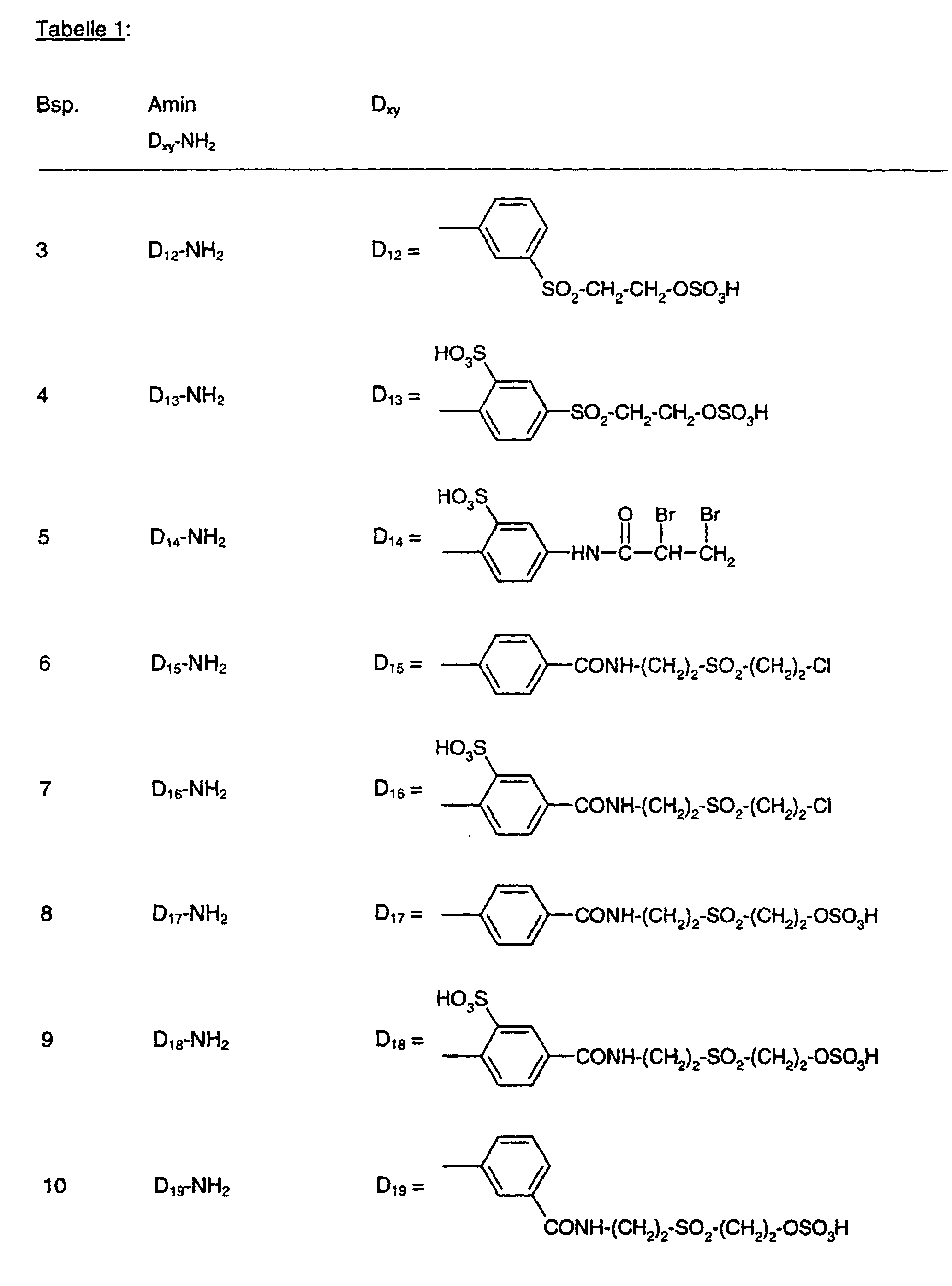

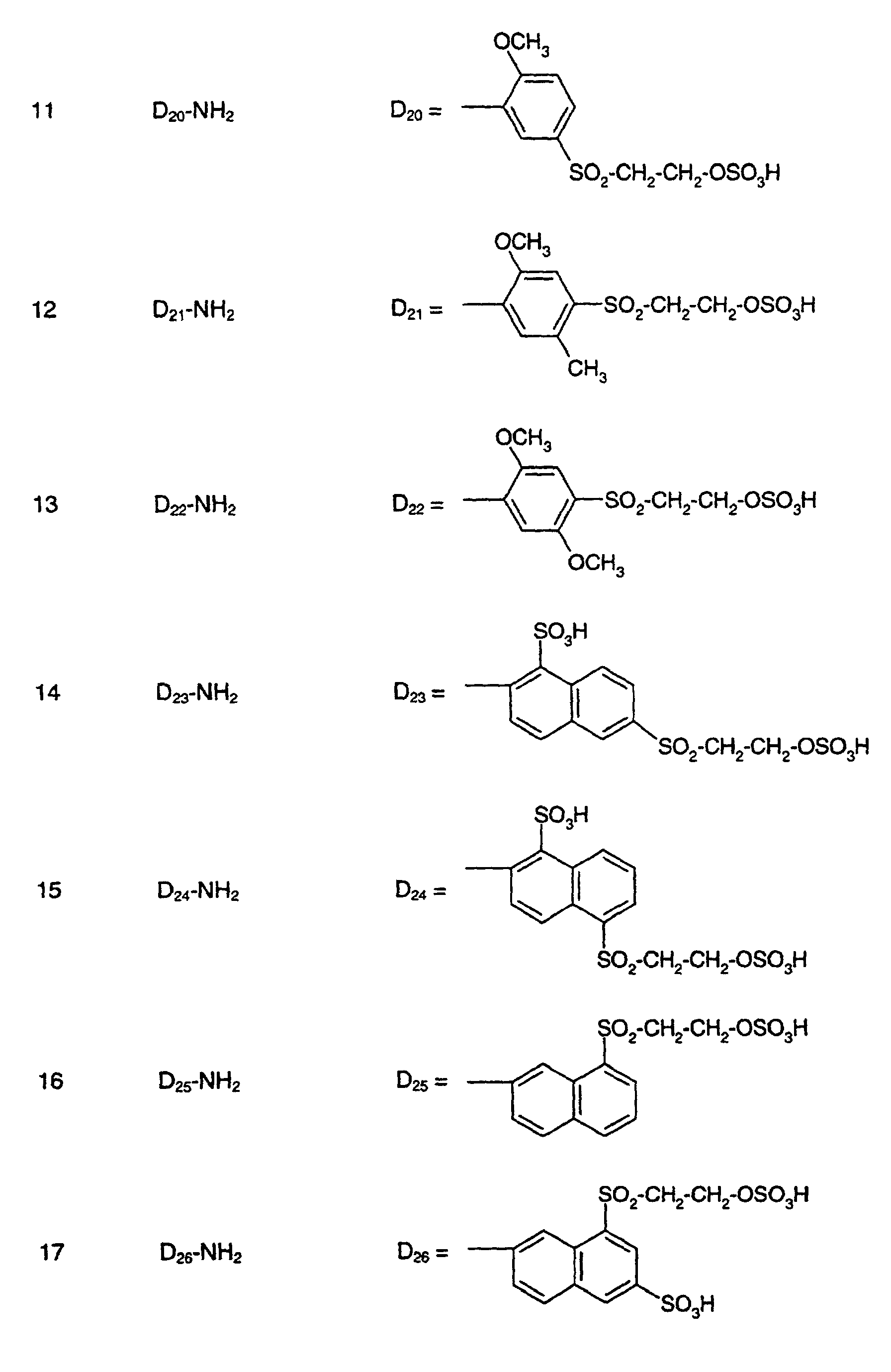

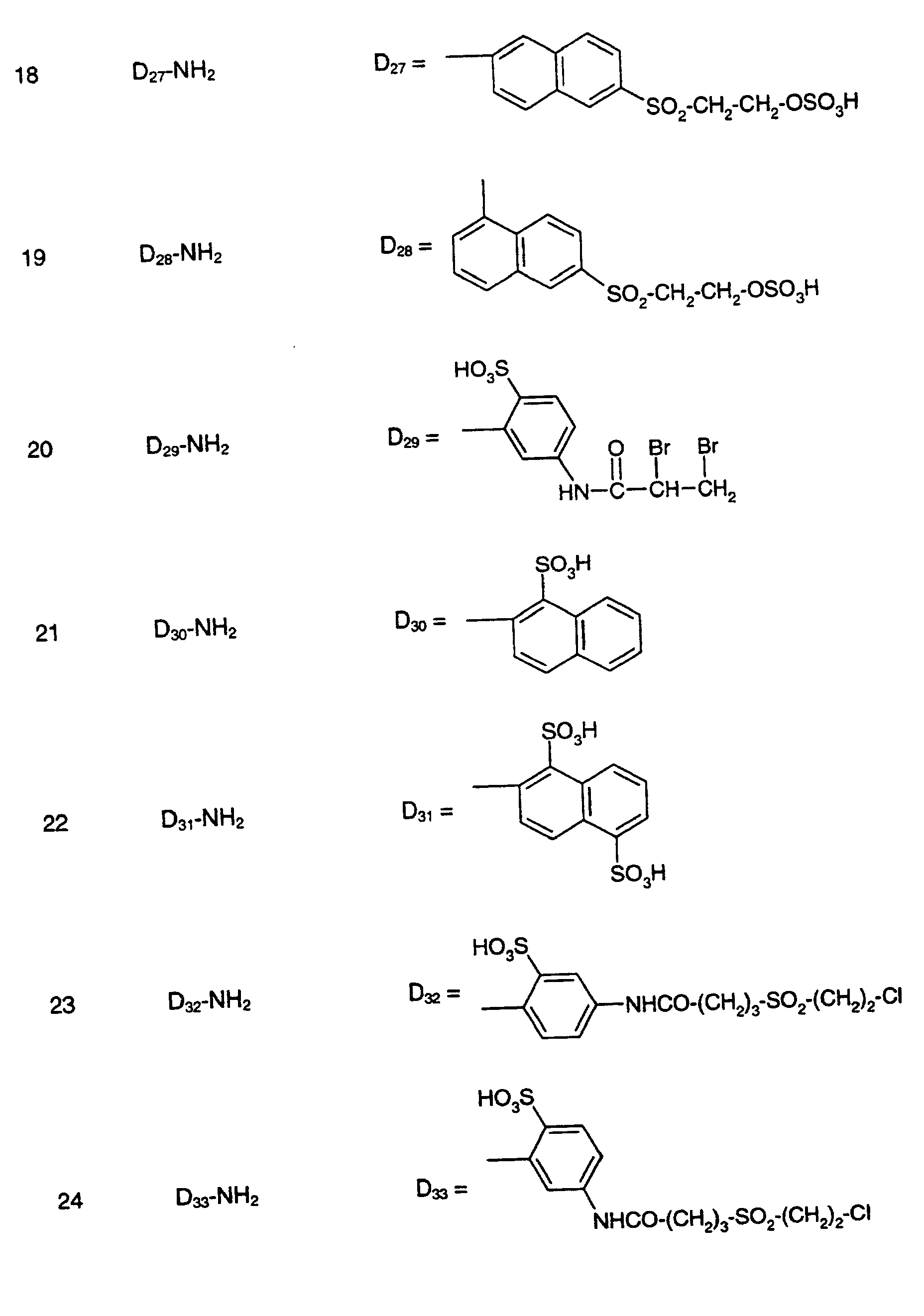

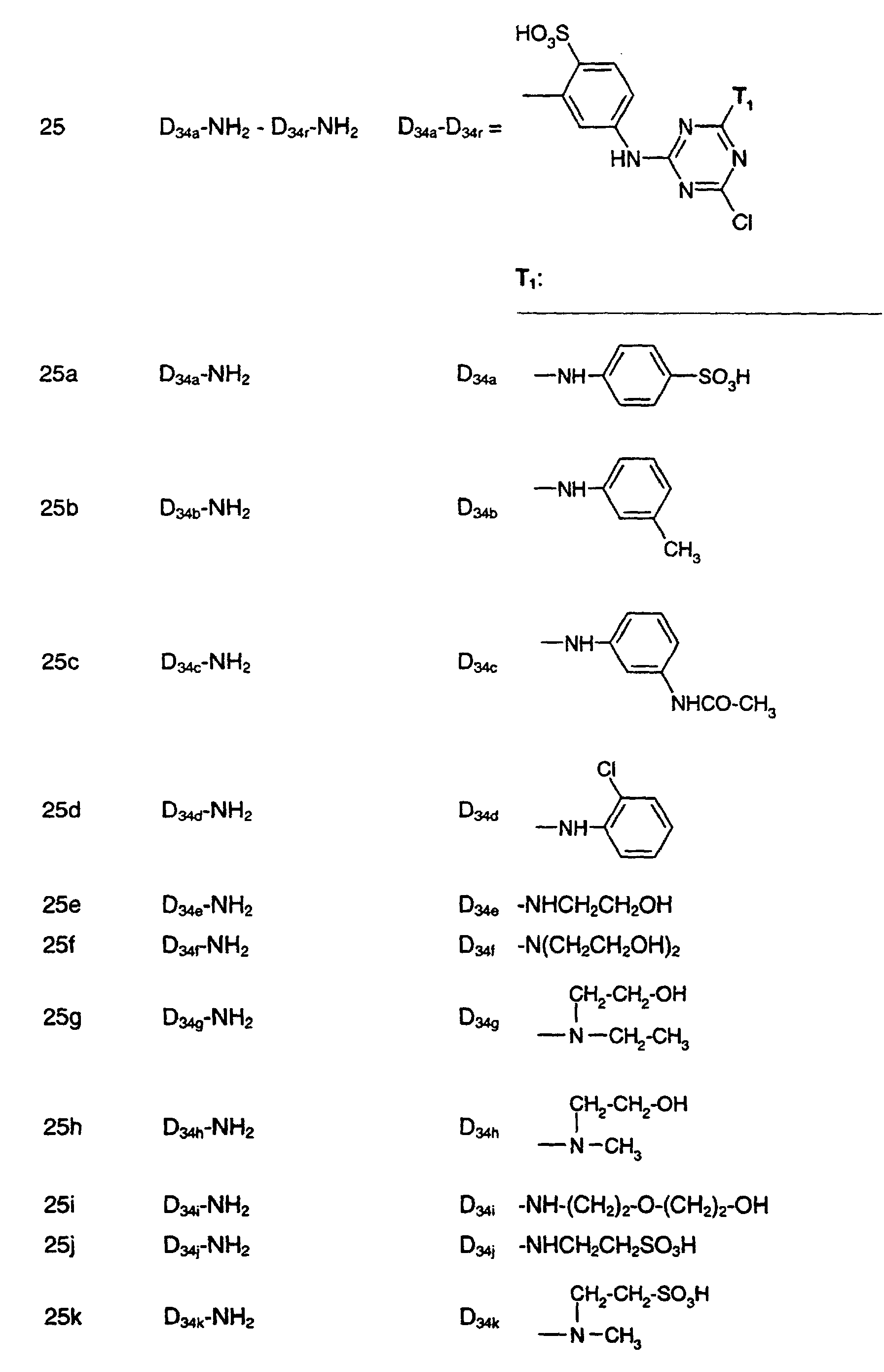

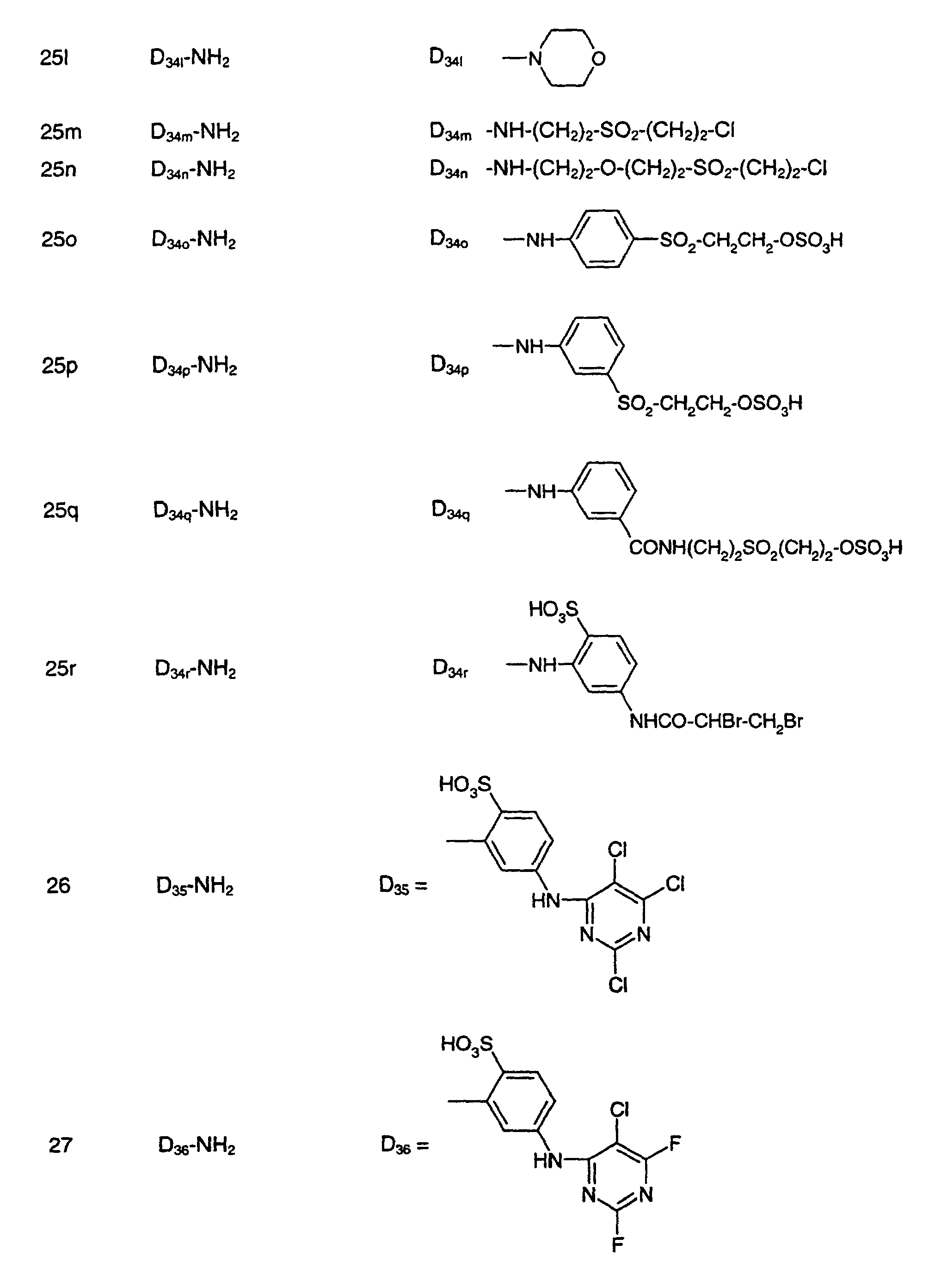

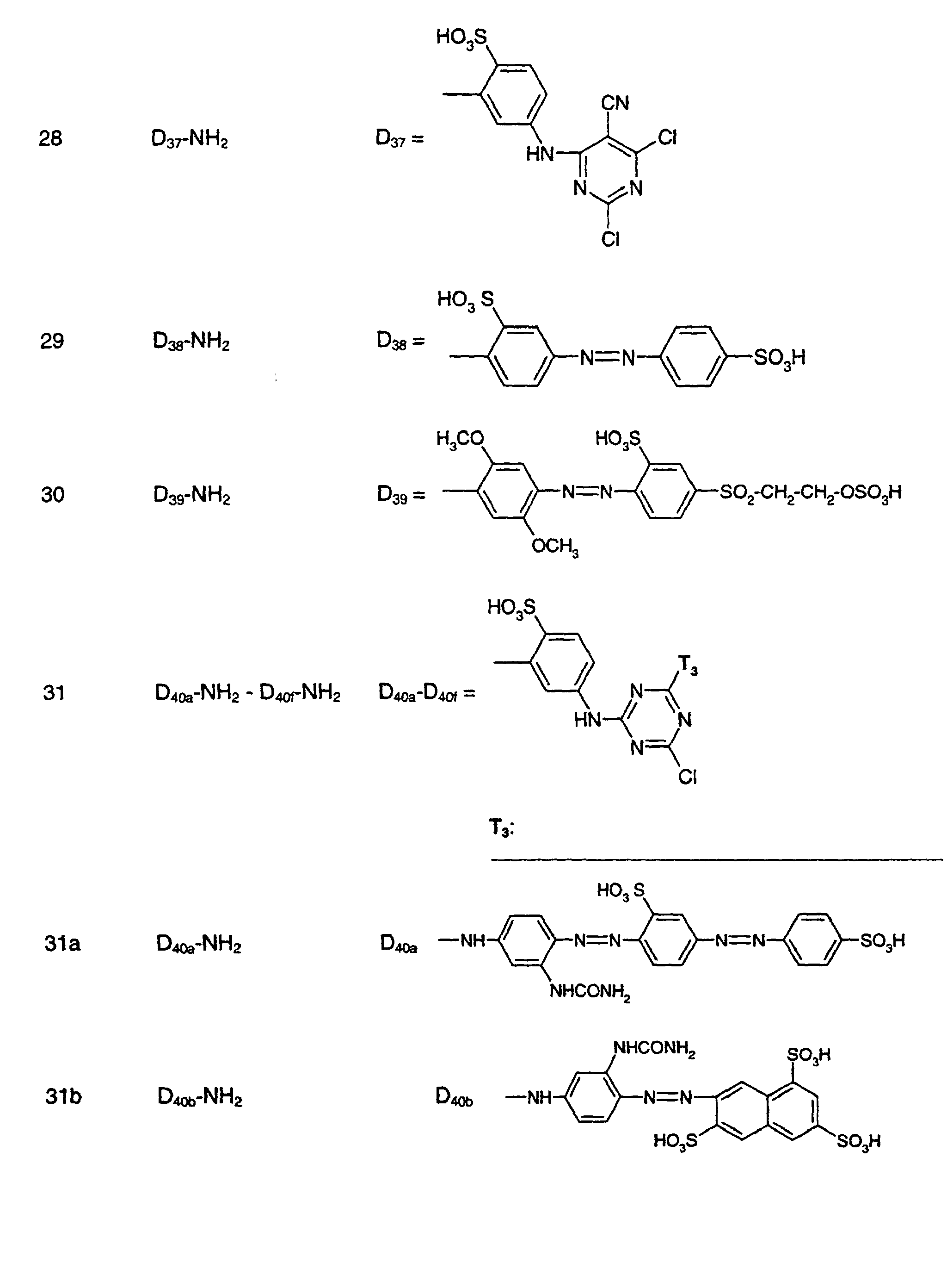

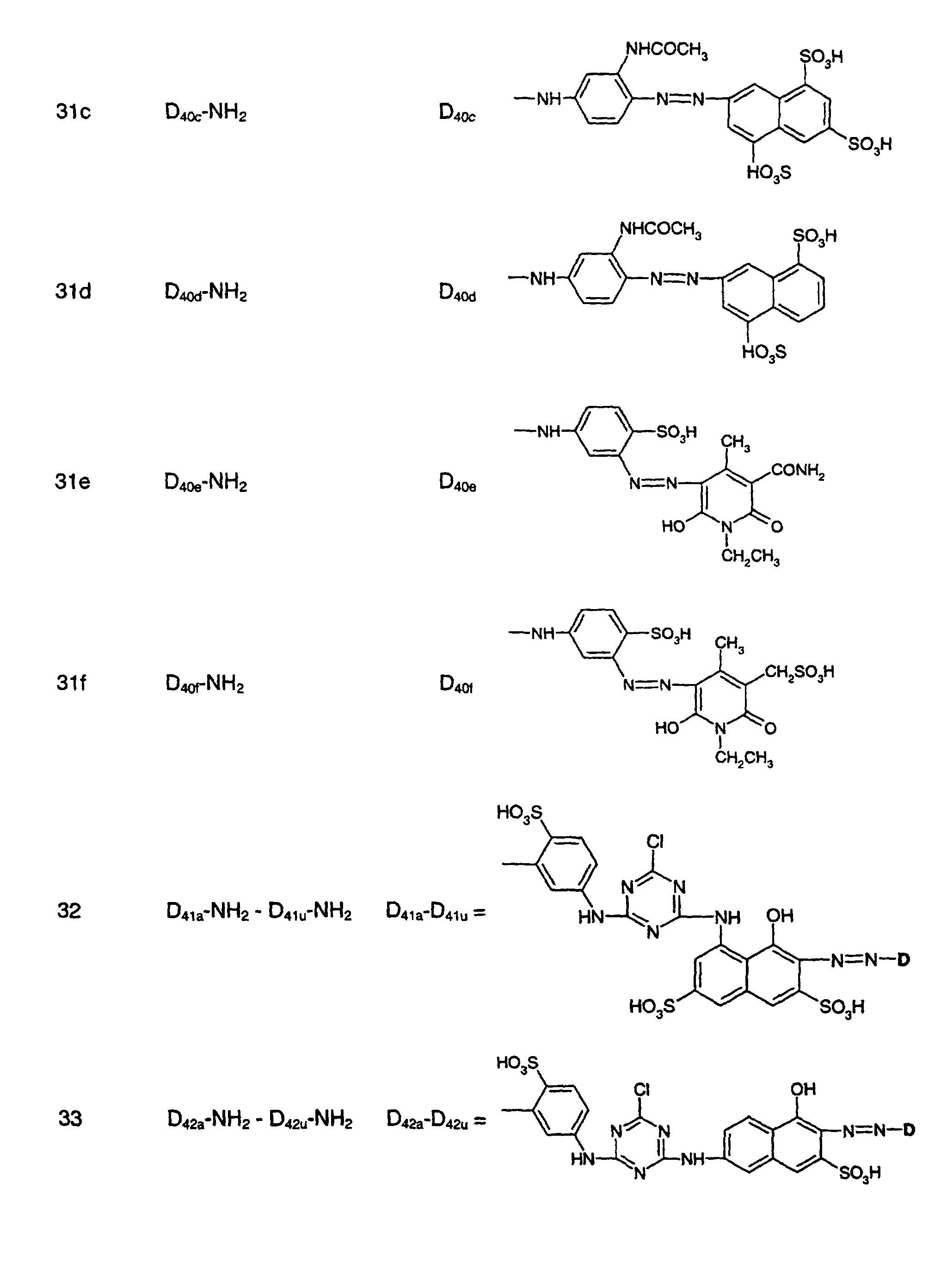

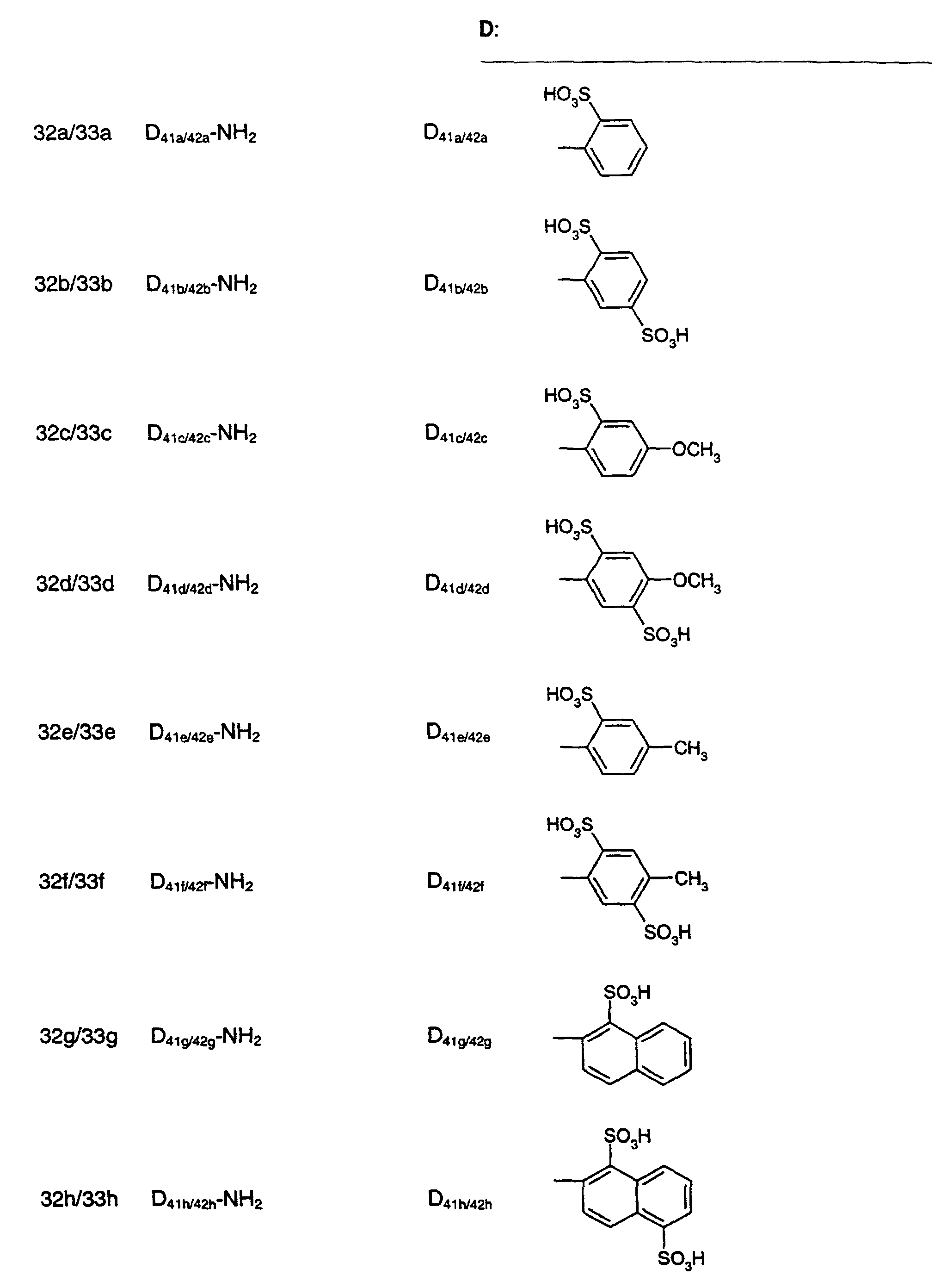

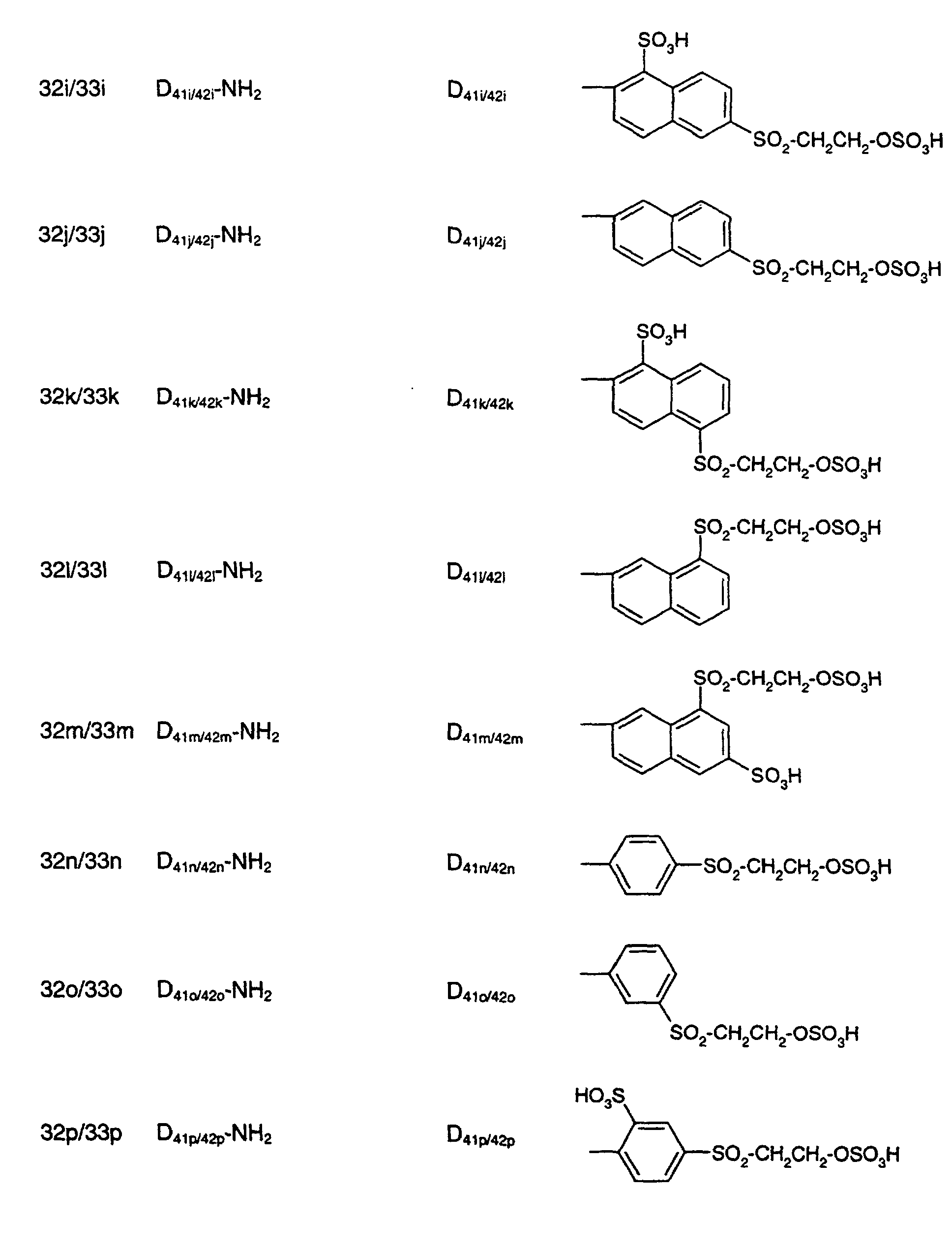

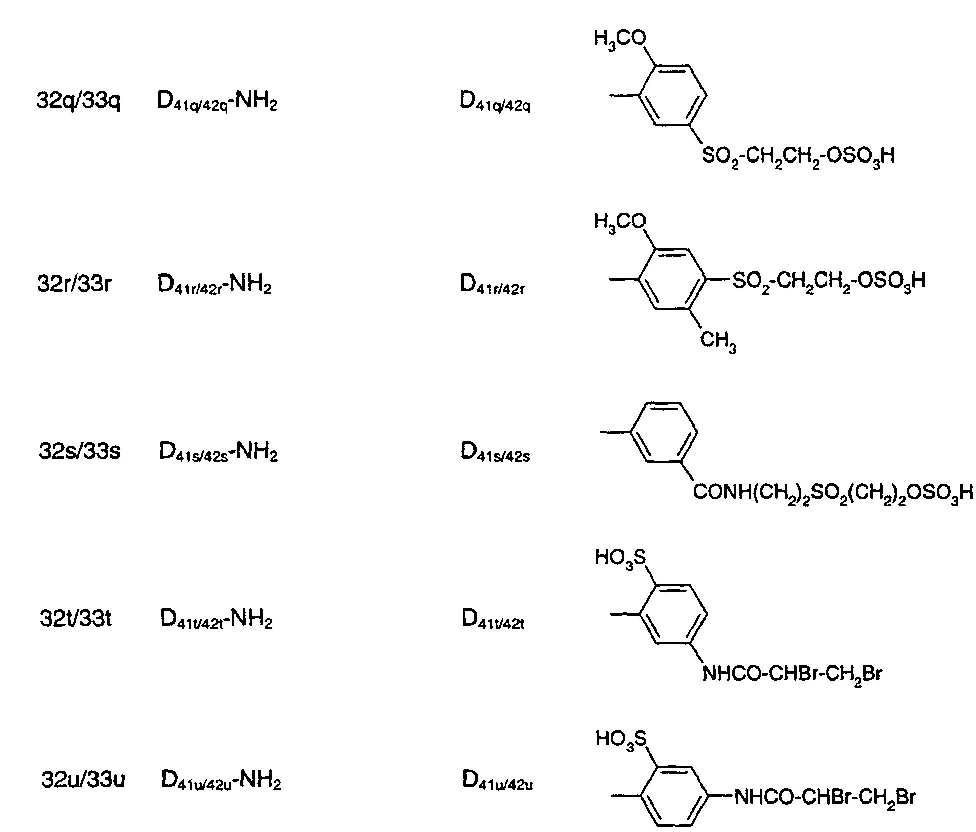

Beispiel 34: 16 Teile des Diamins der Formel H₂N-D₄₃-NH₂, worin D₄₃ einem Rest der Formel 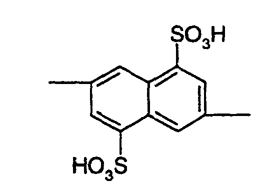 entspricht, werden in 160 Teilen Wasser neutral gelöst. Bei 0°C werden 13 Teile konz. Salzsäure und anschliessend 19,5 Teile einer 4N Natriumnitritlösung langsam zugegeben. Nach erfolgter Umsetzung des Diamins zur entsprechenden Tetrazoverbindung wird das überschüssige Nitrit durch Zugabe von Sulfaminsäure zerstört.

Beispiele 35 bis 37: Analog der in Beispiel 34 beschriebenen Vorgehensweise lassen sich die Tetrazoverbindungen der in Tabelle 2 genannten Diamine herstellen, wenn man anstelle des in Beispiel 34 genannten Diamins der Formel H₂N-D₄₃-NH₂ eine äquimolare Menge der in der Tabelle 2 genannten Diamine der Formel H₂N-D_{xy}-NH₂ verwendet.

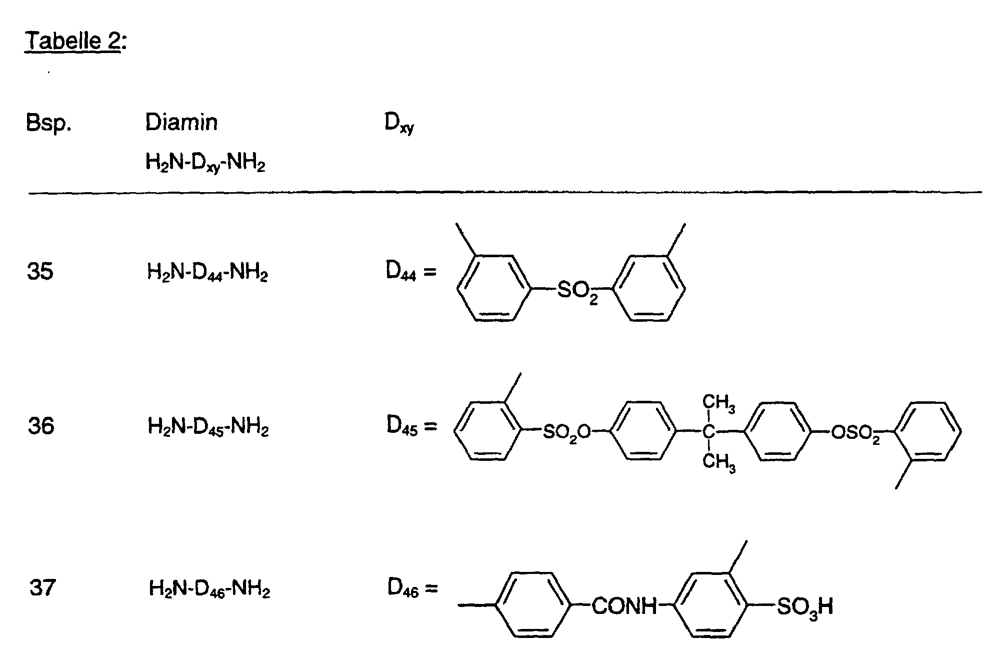

### Beispiel 38:

a) 1. Kupplung: Zur gemäss Beispiel 1 erhaltenen sauren Suspension der Diazoverbindung wird eine Lösung von 15,2 Teilen 3,5-Diaminobenzoesäure in 100 Teilen 2N Salzäure bei 0 bis 5°C gegeben. Der pH-Wert der Reaktionsmischung wird mit einer 40%igen Natriumacetatlösung innerhalb von 4 Stunden auf 3,2 gestellt. Anschliessend wird noch 30 Minuten bei 6 bis 7°C gerührt. Man erhält eine Verbindung, die in Form der freien Säure der Formel (101) 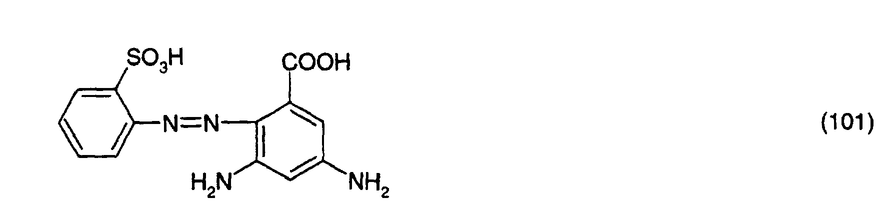 entspricht.
b) 2. Kupplung: Zur gemäss a) erhaltenen Suspension der Verbindung der Formel (101) wird die gemäss Beispiel 2 erhaltene saure Suspension der Diazoverbindung bei 7°C und pH 3,2 gegebenen. Der pH-Wert der Reaktionsmischung wird bei 12 bis 15°C mit einer 40%igen Natriumacetatlösung innerhalb von 45 Minuten auf 3,5 und bei 15 bis 19°C mit Natriumhydrogencarbonat innerhalb einer Stunde auf 6,3 gestellt. Anschliessend wird noch 45 Minuten bei ca. 25°C gerührt. Die erhaltene Lösung wird mit 450 Teilen Aceton versetzt, der pH mit konzentrierter Salzsäure auf 1,5 gestellt und 4,6 Teile Kaliumchlorid zugegeben. Der ausgefallene Farbstoff wird filtriert und mit Aceton gewaschen. Man erhält 70,1 Teile einer Verbindung, die in Form der freien Säure der Formel (102) 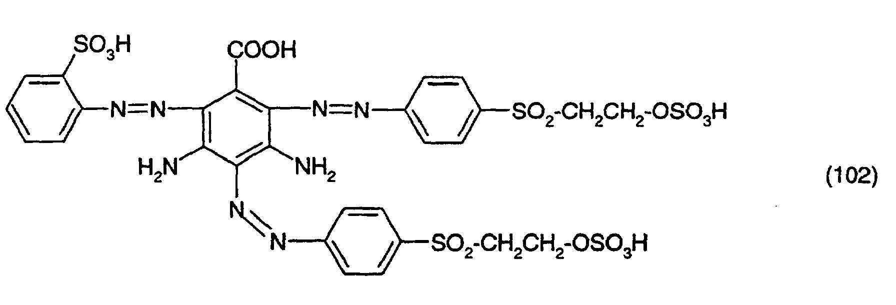 entspricht und Baumwolle und Wolle in orangen Farbtönen mit guten Allgemeinechtheiten färbt.

Beispiele 39 bis 108: Analog der in Beispiel 38 beschriebenen Vorgehensweise lassen sich aus den in den Beispielen 1 bis 33 beschriebenen Diazoverbindungen die Farbstoffe der folgenden allgemeinen Formel (103) 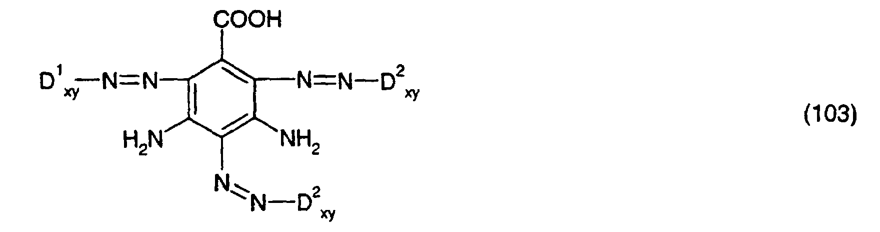 herstellen, worin D¹_{xy} und D²_{xy} jeweils den in Tabelle 3 aufgeführten Resten entsprechen und diesen Resten die in den Beispielen 1 und 2 und in Tabelle 1 genannten Bedeutungen zukommen. Die Farbstoffe färben Baumwolle und Wolle in den in Tabelle 3 angegebenen Farbtönen mit guten Allgemeinechtheiten.

**Tabelle 3:**

| Bsp. | D¹_{xy} 1. Kupplung | D²_{xy} 2. Kupplung | Farbton |
|---|---|---|---|
| 39 | D₁₀ | D₁₂ | orange |
| 40 | D₁₃ | D₁₁ | orange |
| 41 | D₁₃ | D₁₂ | orange |
| 42 | D₁₀ | D₁₃ | orange |
| 43 | D₁₀ | D₁₄ | orange |
| 44 | D₁₀ | D₁₅ | orange |
| 45 | D₁₀ | D₁₆ | orange |
| 46 | D₁₀ | D₁₇ | orange |
| 47 | D₁₀ | D₁₈ | orange |
| 48 | D₁₀ | D₃₂ | orange |
| 49 | D₁₀ | D₃₃ | orange |
| 50 | D₁₀ | D₁₉ | orange |
| 51 | D₁₀ | D₂₀ | orange |
| 52 | D₁₀ | D₂₁ | orange |
| 53 | D₁₀ | D₂₂ | orange |
| 54 | D₁₀ | D₂₉ | orange |
| 55 | D₃₀ | D₁₁ | orange |
| 56 | D₃₀ | D₁₂ | orange |
| 57 | D₃₀ | D₁₃ | orange |
| 58 | D₃₀ | D₁₄ | orange |
| 59 | D₃₀ | D₁₅ | orange |
| 60 | D₃₀ | D₁₆ | orange |
| 61 | D₃₀ | D₁₇ | orange |
| 62 | D₃₀ | D₁₈ | orange |
| 63 | D₃₀ | D₁₉ | orange |
| 64 | D₃₀ | D₂₀ | orange |
| 65 | D₃₀ | D₂₁ | orange |
| 66 | D₃₀ | D₂₂ | orange |
| 67 | D₃₀ | D₂₉ | orange |
| 68 | D₃₁ | D₁₁ | orange |
| 69 | D₃₈ | D₁₁ | braun |
| 70 | D₁₀ | D₂₃ | orange |
| 71 | D₁₀ | D₂₄ | orange |
| 72 | D₁₀ | D₂₅ | orange |
| 73 | D₁₀ | D₂₆ | orange |
| 74 | D₁₀ | D₂₇ | orange |
| 75 | D₁₀ | D₂₈ | orange |
| 76 | D₃₄ₐ | D₁₃ | braun-orange |
| 77 | D_{34b} | D₁₃ | braun-orange |
| 78 | D_{34c} | D₁₃ | braun-orange |
| 79 | D_{34d} | D₁₃ | braun-orange |
| 80 | D₃₄ₑ | D₁₃ | braun-orange |
| 81 | D_{34f} | D₁₃ | braun-orange |
| 82 | D_{34g} | D₁₃ | braun-orange |
| 83 | D₃₄ₕ | D₁₃ | braun-orange |
| 84 | D₃₄ᵢ | D₁₃ | braun-orange |
| 85 | D₃₄ⱼ | D₁₃ | braun-orange |
| 86 | D₃₄ₖ | D₁₃ | braun-orange |
| 87 | D₃₄ₗ | D₁₃ | braun-orange |
| 88 | D₃₄ₘ | D₁₃ | braun-orange |
| 89 | D₃₄ₙ | D₁₃ | braun-orange |
| 90 | D₃₄ₒ | D₁₃ | braun-orange |
| 91 | D₃₄ₚ | D₁₃ | braun-orange |
| 92 | D_{34q} | D₁₃ | braun-orange |
| 93 | D₃₄ᵣ | D₁₃ | braun-orange |
| 94 | D₃₅ | D₁₃ | braun-orange |
| 95 | D₃₆ | D₁₃ | braun-orange |
| 96 | D₃₇ | D₁₃ | braun-orange |
| 97 | D₃₅ | D₁₁ | braun-orange |
| 98 | D₃₆ | D₁₁ | braun-orange |
| 99 | D₃₇ | D₁₁ | braun-orange |
| 100 | D₃₄ₐ | D₁₁ | braun-orange |
| 101 | D₃₄ₑ | D₁₁ | braun-orange |
| 102 | D_{34f} | D₁₁ | braun-orange |
| 103 | D_{34g} | D₁₁ | braun-orange |
| 104 | D₃₄ₕ | D₁₁ | braun-orange |
| 105 | D₃₉ | D₁₃ | braun |
| 106 | D₃₉ | D₁₁ | braun |
| 107 | D₄₀ₐ | D₁₃ | braun-orange |
| 108 | D₄₀ₐ | D₁₁ | braun-orange |

### Beispiel 109:

a) 1. Kupplung: Zur gemäss Beispiel 34 erhaltenen sauren Suspension der Tetrazoverbindung wird eine Lösung von 15,2 Teilen 3,5-Diaminobenzoesäure in 100 Teilen 2N Salzäure bei 0 bis 5°C gegeben. Der pH-Wert der Reaktionsmischung wird mit einer 40%igen Natriumacetatlösung innerhalb von 4 Stunden auf 3,2 gestellt. Anschliessend wird noch 30 Minuten bei 6 bis 7°C gerührt. Man erhält eine Verbindung, die in Form der freien Säure der Formel (104) 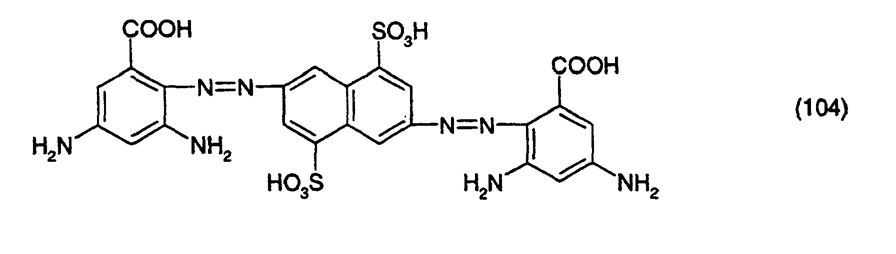 entspricht.
b) 2. Kupplung: Zur gemäss a) erhaltenen Suspension der Verbindung der Formel (104) wird die gemäss Beispiel 2 erhaltene saure Suspension der Diazoverbindung bei 7°C und pH 3,2 gegebenen. Der pH-Wert der Reaktionsmischung wird bei 12 bis 15°C mit einer 40%igen Natriumacetatlösung innerhalb von 45 Minuten auf 3,5 und bei 15 bis 19°C mit Natriumhydrogencarbonat innerhalb einer Stunde auf 6,3 gestellt. Anschliessend wird noch 45 Minuten bei ca. 25°C gerührt. Die erhaltene Lösung wird mit 450 Teilen Aceton versetzt, der pH mit konzentrierter Salzsäure auf 1,5 gestellt und 4,6 Teile Kaliumchlorid zugegeben. Der ausgefallene Farbstoff wird filtriert und mit Aceton gewaschen. Man erhält 68 Teile einer Verbindung, die in Form der freien Säure der Formel (105) 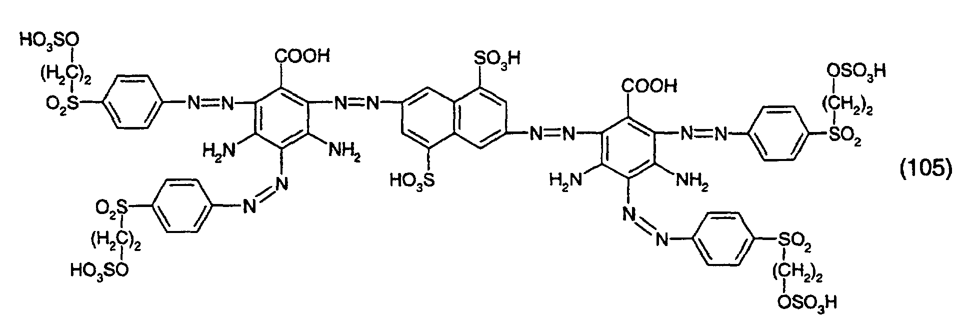 entspricht und Baumwolle und Wolle in braun-orangen Farbtönen mit guten Allgemeinechtheiten färbt.

Beispiele 110 bis 113: Analog der in Beispiel 109 beschriebenen Vorgehensweise lassen sich aus den in Tabelle 2 beschriebenen Tetrazoverbindungen und den in den Beispielen 2 und 4 beschriebenen Diazoverbindungen die Farbstoffe der folgenden allgemeinen Formel (106) 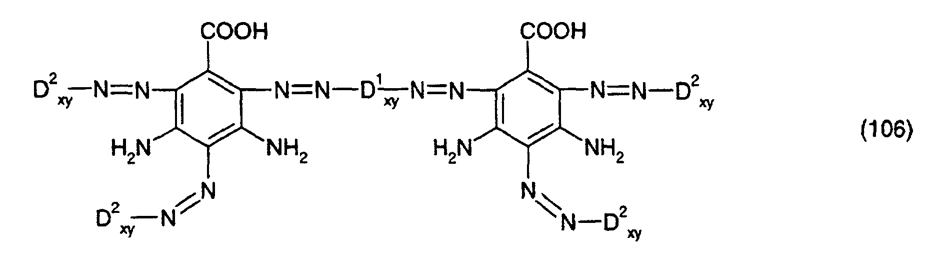 herstellen, worin D¹_{xy} und D²_{xy} jeweils den in Tabelle 4 aufgeführten Resten entsprechen und diesen Resten die in Tabelle 2 und in den Beispielen 2 und 4 genannten Bedeutungen zukommen. Die Farbstoffe färben Baumwolle und Wolle in den in Tabelle 4 angegebenen Farbtönen mit guten Allgemeinechtheiten.

**Tabelle 4:**

| Bsp. | D¹_{xy} 1. Kupplung | D²_{xy} 2. Kupplung | Farbton |
|---|---|---|---|
| 110 | D₄₄ | D₁₃ | braun-orange |
| 111 | D₄₅ | D₁₃ | braun-orange |
| 112 | D₄₆ | D₁₃ | braun-orange |
| 113 | D₄₆ | D₁₁ | braun-orange |

Beispiel 114: Zur gemäss Beispiel 2 erhaltenen sauren Suspension der Diazoverbindung wird eine Lösung von 10,1 Teilen 3,5-Diaminobenzoesäure in 67 Teilen 2N Salzäure bei 0 bis 5°C gegeben. Der pH-Wert der Reaktionsmischung wird mit einer 40%igen Natriumacetatlösung innerhalb einer Stunde auf 3,2, mit Natriumhydrogencarbonat innerhalb einer weiteren Stunde auf 5,8 und mit einer 20%igen Natriumcarbonatlösung innerhalb von 45 Minuten auf 7,8 gestellt. Die erhaltene Lösung wird mit konzentrierter Salzsäure auf pH 0,8 gestellt und mit 80 Teilen Aceton und 112 Teilen Kaliumchlorid versetzt. Der ausgefallene Farbstoff wird filtriert und mit Aceton gewaschen. Man erhält 64,6 Teile einer Verbindung, die in Form der freien Säure der Formel (107) 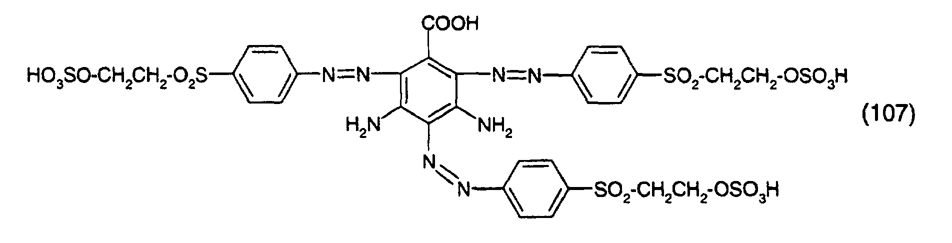 entspricht und Baumwolle und Wolle in orangen Farbtönen mit guten Allgemeinechtheiten. färbt.

Beispiele 115 bis 140: Analog der in Beispiel 114 beschriebenen Vorgehensweise lassen sich aus den in den Beispielen 3 bis 5, 9 bis 12, 14, 15, 20 und 23 bis 25 beschriebenen Diazoverbindungen die Farbstoffe der folgenden allgemeinen Formel (108) 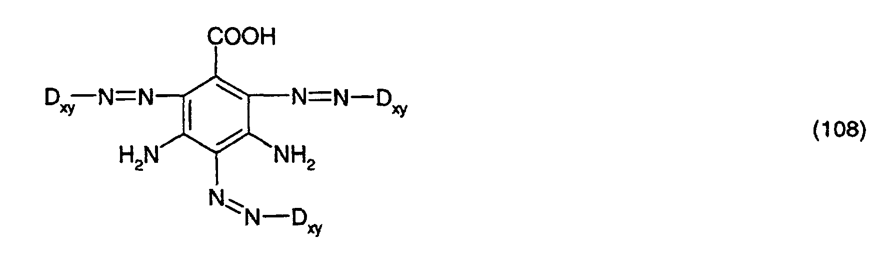 herstellen, worin D_{xy} jeweils den in Tabelle 5 aufgeführten Resten entspricht und diesen Resten die in Tabelle 1 genannten Bedeutungen zukommen. Die Farbstoffe färben Baumwolle und Wolle in den in Tabelle 5 angegebenen Farbtönen mit guten Allgemeinechtheiten.

**Tabelle 5:**

| Bsp. | D_{xy} | Farbton |
|---|---|---|
| 115 | D₁₂ | orange |
| 116 | D₁₃ | orange |
| 117 | D₁₄ | orange |
| 118 | D₁₈ | orange |
| 119 | D₁₉ | orange |
| 120 | D₂₀ | orange |
| 121 | D₂₁ | orange |
| 122 | D₂₃ | orange |
| 123 | D₂₄ | orange |
| 124 | D₂₉ | orange |
| 125 | D₃₂ | orange |
| 126 | D₃₃ | orange |
| 127 | D₃₄ₐ | orange |
| 128 | D_{34b} | orange |
| 129 | D_{34c} | orange |
| 130 | D₃₄ₑ | orange |
| 131 | D_{34f} | orange |
| 132 | D_{34g} | orange |
| 133 | D₃₄ᵢ | orange |
| 134 | D₃₄ⱼ | orange |
| 135 | D₃₄ₗ | orange |
| 136 | D₃₄ₘ | orange |
| 137 | D₃₄ₙ | orange |
| 138 | D₃₄ₒ | orange |
| 139 | D_{34q} | orange |
| 140 | D₃₄ᵣ | orange |

Beispiel 141:14,4 Teile 2-Sulfo-4-(β-Sulfatoethylsulfonyl)anilin und 22,7 Teile 4-(β-Sulfatoethylsulfonyl)anilin werden in 120 Teile Wasser eingetragen und gut verrührt. Bei 10°C gibt man zu der erhaltenen Suspension zunächst 30 Teile einer 4N Natriumnitritlösung und dann 50 Teile einer 31%igen Naphthalinsulfonsäurelösung. Anschliessend wird 3 Stunden bei 15 bis 20°C gerührt. Zu dieser sauren Suspension wird bei 0 bis 5°C eine Lösung von 6,1 Teilen 3,5-Diaminobenzoesäure in 40 Teilen 2N Salzäure gegeben. Der pH-Wert der Reaktionsmischung wird bei 0 bis 5°C mit einer 40%igen Natriumacetatlösung innerhalb einer Stunde auf 3,2, mit Natriumhydrogencarbonat innerhalb einer weiteren Stunde auf 5,8 und mit einer 20%igen Natriumcarbonatlösung innerhalb von 45 Minuten auf 7,8 gestellt. Die erhaltene Lösung wird eingedampft. Man erhält 66,9 Teile eines Produktes, welches im wesentlichen eine Mischung von Verbindungen enthält, die in Form der freien Säure den Formeln (109), (110), (111), (112), (113) und (114) 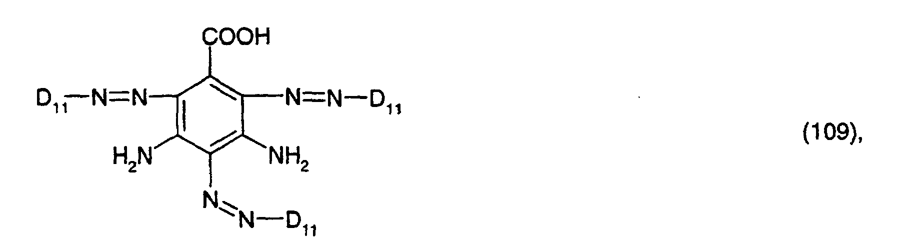 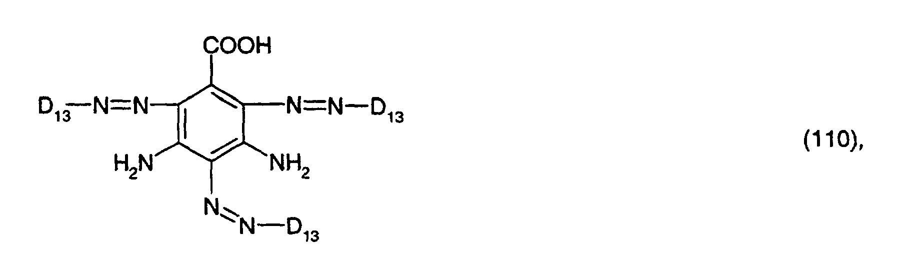 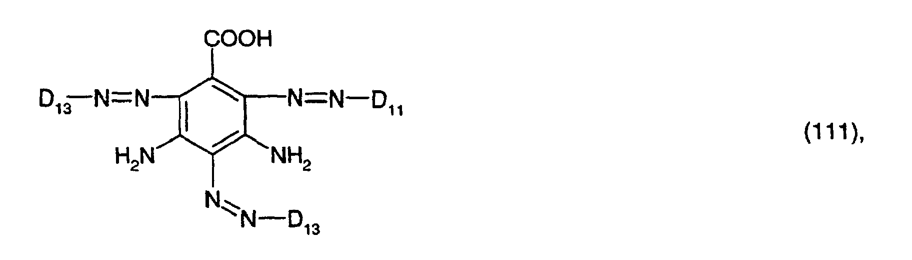 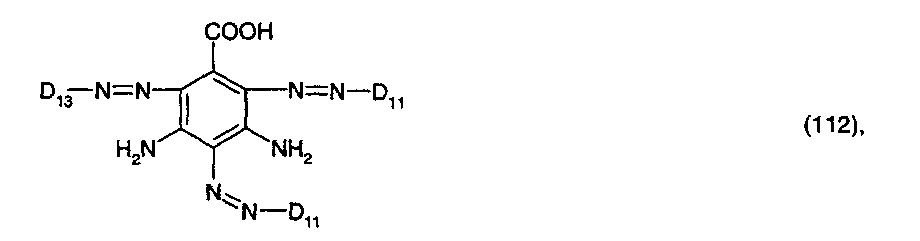 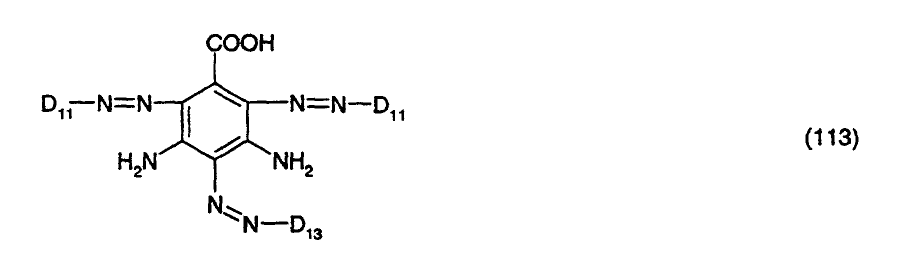 und 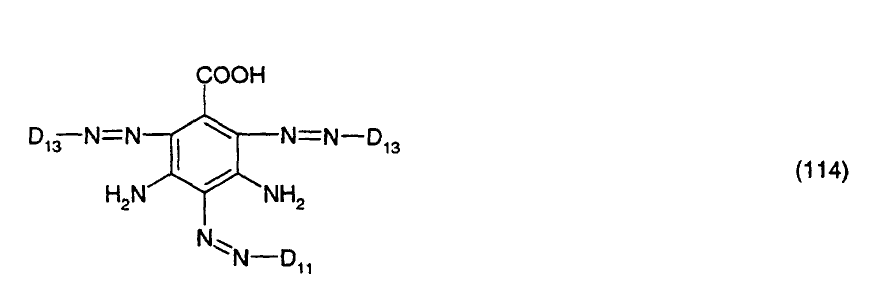 entsprechen, worin D₁₁ und D₁₃ die in den Beispielen 2 und 4 angegebenen Bedeutungen haben. Die Farbstoffmischung färbt Baumwolle und Wolle in orangen Farbtönen mit guten Allgemeinechtheiten.

### Beispiel 142:

a) 22,3 Teile 2-Aminonaphthalinsulfonsäure werden in 215 Teile Wasser eingetragen und gut verrührt. Bei 0°C gibt man zu der erhaltenen Lösung 25 Teile einer 4N Natriumnitritlösung und tropft anschliessend 20 Teile konz. Salzsäure bei 0 bis 5°C langsam zu. Es wird 1 Stunde bei dieser Temperatur gerührt.
b) 30,3 Teile 2-Amino-1,5-naphthalindisulfonsäure werden in 215 Teile Wasser eingetragen und gut verrührt. Bei 0°C gibt man zu der erhaltenen Lösung 25 Teile einer 4N Natriumnitritlösung und tropft anschliessend 20 Teile konz. Salzsäure bei 0 bis 5°C langsam zu. Es wird 1 Stunde bei dieser Temperatur gerührt.
c) 28,1 Teile 4-(β-Sulfatoethylsulfonyl)anilin werden in 110 Teile Wasser eingetragen und gut verrührt. Bei 10°C gibt man zu der erhaltenen Suspension zunächst 25 Teile einer 4N Natriumnitritlösung und dann 45 Teile einer 31%igen Naphthalinsulfonsäurelösung. Anschliessend wird 3 Stunden bei 15 bis 20°C gerührt.
d) 1. Kupplung: Zur gemäss a) erhaltenen sauren Suspension der Diazoverbindung wird eine Lösung von 15,2 Teilen 3,5-Diaminobenzoesäure in 100 Teilen 2N Salzäure bei 0 bis 5°C gegeben. Der pH-Wert der Reaktionsmischung wird mit einer 40%igen Natriumacetatlösung innerhalb von 4 Stunden auf 3,2 gestellt. Anschliessend wird noch 30 Minuten bei 6 bis 7°C gerührt.
e) 2. Kupplung: Zur gemäss d) erhaltenen Suspension wird die gemäss b) erhaltene saure Suspension der Diazoverbindung bei 7°C und pH 3,2 gegebenen. Der pH-Wert der Reaktionsmischung wird mit einer 40%igen Natriumacetatlösung innerhalb von 45 Minuten auf 4,5 gestellt. Anschliessend wird noch 30 Minuten bei 15°C gerührt.
f) 3. Kupplung: Zur gemäss e) erhaltenen Suspension wird die gemäss c) erhaltene saure Suspension der Diazoverbindung bei 15°C und pH 4,5 gegebenen. Der pH-Wert der Reaktionsmischung wird mit Natriumhydrogencarbonat innerhalb einer Stunde auf 6,3 gestellt. Anschliessend wird noch 45 Minuten bei ca. 25°C gerührt. Die erhaltene Lösung wird mit 450 Teilen Aceton versetzt, der pH mit konzentrierter Salzsäure auf 1,5 gestellt und 4,6 Teile Kaliumchlorid zugegeben. Das ausgefallene Produkt wird filtriert und mit Aceton gewaschen. Man erhält 72 Teile eines Produktes, welches im wesentlichen eine Verbindung enthält, die in Form der freien Säure der Formel (115) 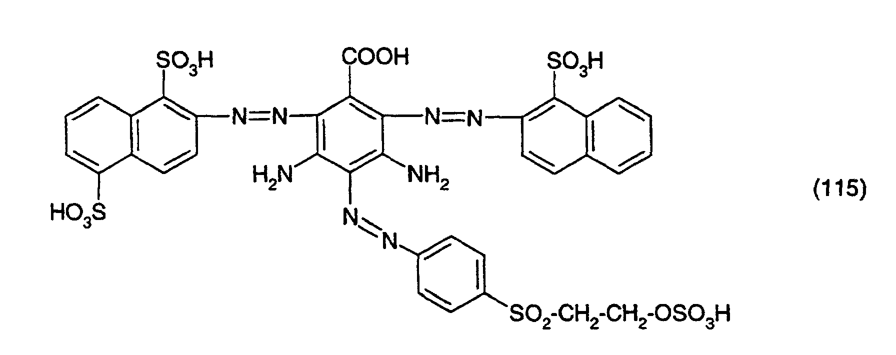 entspricht und Baumwolle und Wolle in orangen Farbtönen mit guten Allgemeinechtheiten färbt.

Beispiele 143 bis 192: Analog der in Beispiel 142 beschriebenen Vorgehensweise lassen sich aus den in den Beispielen 2, 4 und 29 bis 33 beschriebenen Diazoverbindungen Farbstoffe herstellen, die im wesentlichen eine Verbindung der folgenden allgemeinen Formel (116) 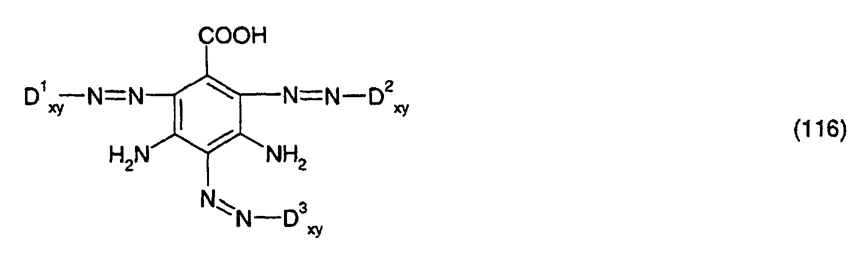 enthalten, worin D¹_{xy}, D²_{xy} und D³_{xy} jeweils den in Tabelle 6 aufgeführten Resten entsprechen und diesen Resten die in Beispiel 2 und Tabelle 1 genannten Bedeutungen zukommen. Die Farbstoffe färben Baumwolle und Wolle in den in Tabelle 6 angegebenen Farbtönen mit guten Allgemeinechtheiten.

**Tabelle 6:**

| Bsp. | D¹_{xy} 1. Kupplung | D²_{xy} 2. Kupplung | D³_{xy} 3. Kupplung | Farbton |
|---|---|---|---|---|
| 143 | D₃₈ | D₁₁ | D₁₃ | braun |
| 144 | D₃₉ | D₁₁ | D₁₃ | braun |
| 145 | D₄₀ₐ | D₁₁ | D₁₃ | braun-orange |
| 146 | D_{40b} | D₁₁ | D₁₃ | gold-orange |
| 147 | D_{40c} | D₁₁ | D₁₃ | gold-orange |
| 148 | D_{40d} | D₁₁ | D₁₃ | gold-orange |
| 149 | D₄₀ₑ | D₁₁ | D₁₃ | gold-gelb |
| 150 | D_{40f} | D₁₁ | D₁₃ | gold-gelb |
| 151 | D₄₁ₐ | D₁₁ | D₁₃ | rot |
| 152 | D_{41b} | D₁₁ | D₁₃ | rot |
| 153 | D_{41c} | D₁₁ | D₁₃ | rot |
| 154 | D_{41d} | D₁₁ | D₁₃ | rot |
| 155 | D₄₁ₑ | D₁₁ | D₁₃ | rot |
| 156 | D_{41f} | D₁₁ | D₁₃ | rot |
| 157 | D_{41g} | D₁₁ | D₁₃ | rot |
| 158 | D₄₁ₕ | D₁₁ | D₁₃ | rot |
| 159 | D₄₁ᵢ | D₁₁ | D₁₃ | rot |
| 160 | D₄₁ⱼ | D₁₁ | D₁₃ | rot |
| 161 | D₄₁ₖ | D₁₁ | D₁₃ | rot |
| 162 | D₄₁ₗ | D₁₁ | D₁₃ | rot |
| 163 | D₄₁ₘ | D₁₁ | D₁₃ | rot |
| 164 | D₄₁ₙ | D₁₁ | D₁₃ | rot |
| 165 | D₄₁ₒ | D₁₁ | D₁₃ | rot |
| 166 | D₄₁ₚ | D₁₁ | D₁₃ | rot |
| 167 | D_{41q} | D₁₁ | D₁₃ | rot |
| 168 | D₄₁ᵣ | D₁₁ | D₁₃ | rot |
| 169 | D₄₁ₛ | D₁₁ | D₁₃ | rot |
| 170 | D₄₁ₜ | D₁₁ | D₁₃ | rot |
| 171 | D₄₁ᵤ | D₁₁ | D₁₃ | rot |
| 172 | D₄₂ₐ | D₁₁ | D₁₃ | orange |
| 173 | D_{42b} | D₁₁ | D₁₃ | orange |
| 174 | D_{42c} | D₁₁ | D₁₃ | orange |
| 175 | D_{42d} | D₁₁ | D₁₃ | orange |
| 176 | D₄₂ₑ | D₁₁ | D₁₃ | orange |
| 177 | D_{42f} | D₁₁ | D₁₃ | orange |
| 178 | D_{42g} | D₁₁ | D₁₃ | orange |
| 179 | D₄₂ₕ | D₁₁ | D₁₃ | orange |
| 180 | D₄₂ᵢ | D₁₁ | D₁₃ | orange |
| 181 | D₄₂ⱼ | D₁₁ | D₁₃ | orange |
| 182 | D₄₂ₖ | D₁₁ | D₁₃ | orange |
| 183 | D₄₂ₗ | D₁₁ | D₁₃ | orange |
| 184 | D₄₂ₘ | D₁₁ | D₁₃ | orange |
| 185 | D₄₂ₙ | D₁₁ | D₁₃ | orange |
| 186 | D₄₂ₒ | D₁₁ | D₁₃ | orange |
| 187 | D₄₂ₚ | D₁₁ | D₁₃ | orange |
| 188 | D_{42q} | D₁₁ | D₁₃ | orange |
| 189 | D₄₂ᵣ | D₁₁ | D₁₃ | orange |
| 190 | D₄₂ₛ | D₁₁ | D₁₃ | orange |
| 191 | D₄₂ₜ | D₁₁ | D₁₃ | orange |
| 192 | D₄₂ᵤ | D₁₁ | D₁₃ | orange |

Verfährt man wie in einem der Beispiele 38 bis 108 und 114 bis 192 beschrieben, verwendet jedoch anstelle von 3,5-Diaminobenzoesäure eine äquimolare Menge der Verbindung der Formel (117), (118), (119), (120) oder (121) 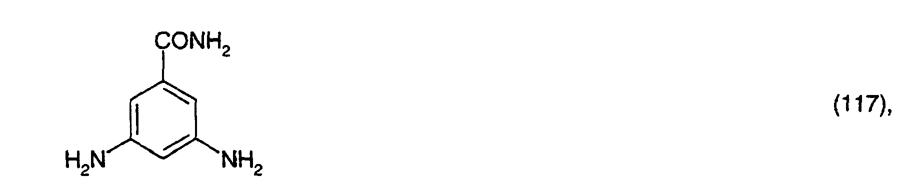 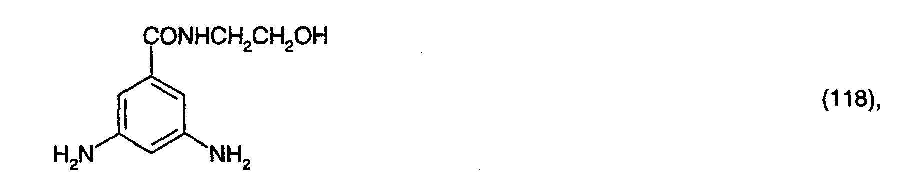 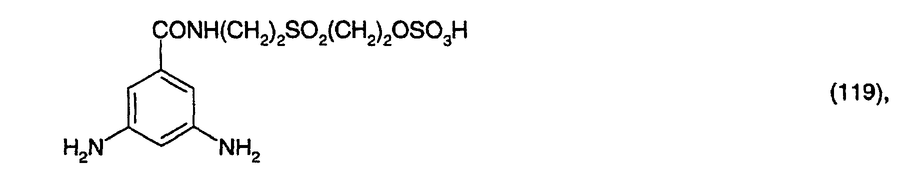 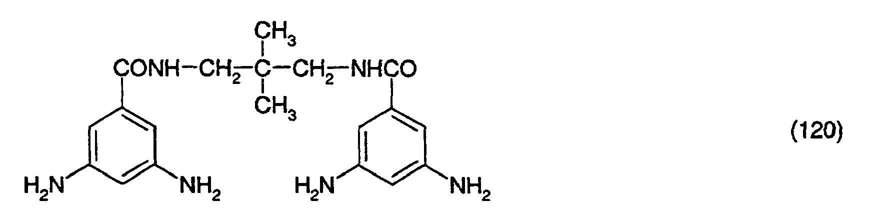 oder 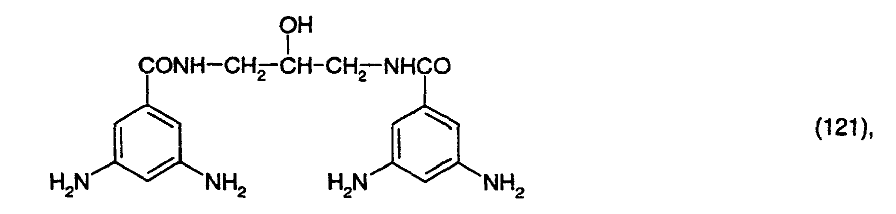 so lassen sich weitere wertvolle Farbstoffe herstellen, die Baumwolle und Wolle mit guten Allgemeinechtheiten färben.

Verfährt man wie in einem der Beispiele 109 bis 113 beschrieben, verwendet jedoch anstelle von 3,5-Diaminobenzoesäure eine äquimolare Menge der Verbindung der Formel (117), (118) oder (119), so lassen sich ebenfalls wertvolle Farbstoffe herstellen, die Baumwolle und Wolle mit guten Allgemeinechtheiten färben.

Die Verbindungen der Formeln (117), (118), (119), (120) und (121) sind bekannt oder lassen sich in Analogie zu bekannten Verbindungen herstellen.

### Färbevorschrift I

In 1500 Teile eines Färbebads, welches 45 g/l Natriumchlorid und 2 Teile des gemäss Beispiel 38 erhaltenen Reaktivfarbstoffs enthält, geht man bei 60°C mit 100 Teilen Baumwollgewebe ein. Nach 45 Minuten bei 60°C werden 20 g/l kalziniertes Soda zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

Alternativ zur angegebenen Vorschrift kann anstatt bei 60°C auch bei 80°C gefärbt werden.

### Färbevorschrift II

Es werden 0,1 Teile des Farbstoffs gemäss Beispiel 38 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet.

### Druckvorschrift

3 Teile der gemäss Beispiel 141 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

## Patentansprüche

1. Azofarbstoffe, enthaltend
mindestens eine Struktureinheit der Formel (1)

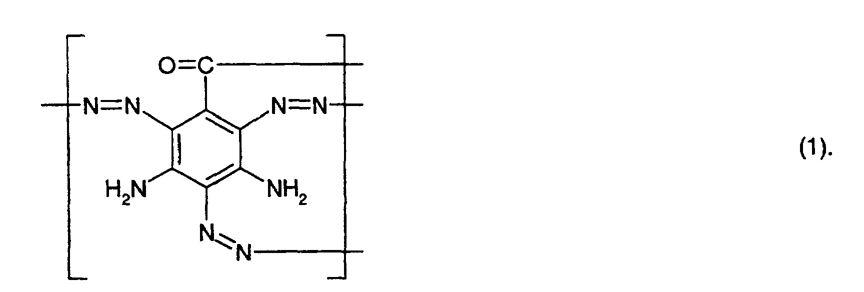

2. Azofarbstoffe gemäss Anspruch 1, **dadurch gekennzeichnet, dass**
sie der Formel (2), (3) oder (4) 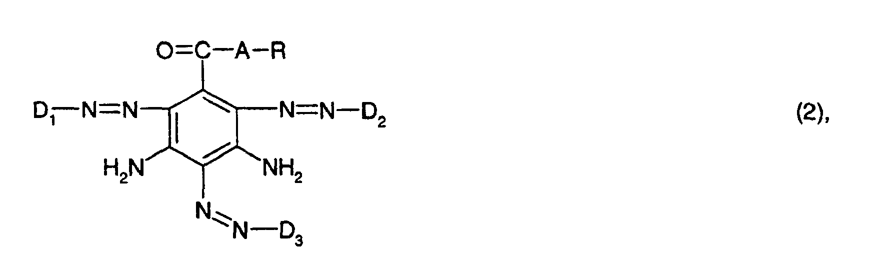 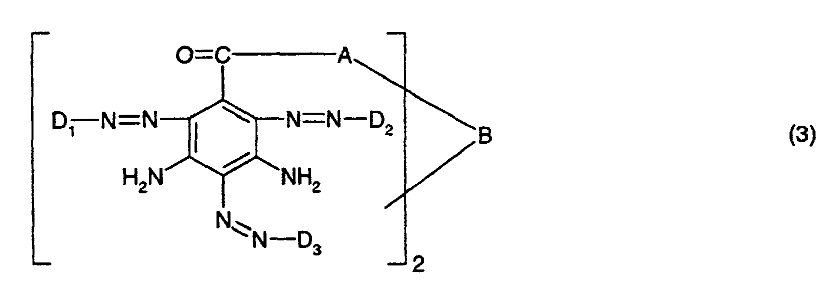 oder 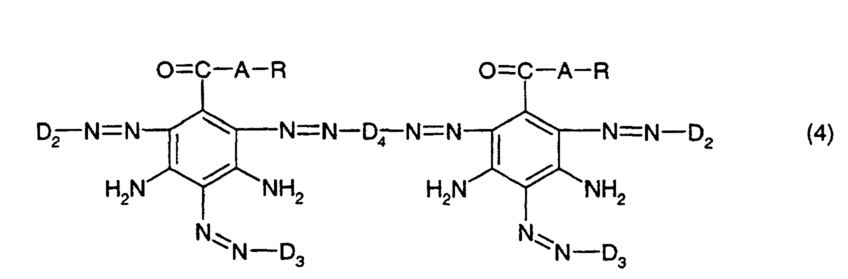 entsprechen, worin
A Sauerstoff, Schwefel oder einen Rest -NR'- bedeutet und R' Wasserstoff oder gegebenenfalls substituiertes oder durch Sauerstoff unterbrochenes C₁-C₁₂-Alkyl ist,
B ein aliphatisches oder aromatisches Brückenglied ist,
D₁, D₂ und D₃ unabhängig voneinander je den Rest einer Diazokomponente der Benzol-oder Naphthalinreihe bedeuten,
D₄ der Rest einer aromatischen Tetrazokomponente ist, und
R Wasserstoff oder einen aliphatischen oder aromatischen Rest bedeutet oder die Reste R und R' zusammen mit dem Stickstoffatom einen heterocyclischen Rest bilden.

3. Azofarbstoffe gemäss Anspruch 2, **dadurch gekennzeichnet, dass**
A Sauerstoff oder einen Rest -NR'- bedeutet.

4. Azofarbstoffe der Formel (2) oder (4) gemäss einem der Ansprüche 2 und 3, **dadurch gekennzeichnet, dass**
A Sauerstoff und R Wasserstoff bedeutet.

5. Azofarbstoffe gemäss einem der Ansprüche 2 bis 4, **dadurch gekennzeichnet, dass** sie der Formel (2) entsprechen.

6. Azofarbstoffe gemäss einem der Ansprüche 2 bis 5, **dadurch gekennzeichnet, dass** D₁, D₂ und D₃ unabhängig voneinander je einem Rest der Formel (15) oder (16) 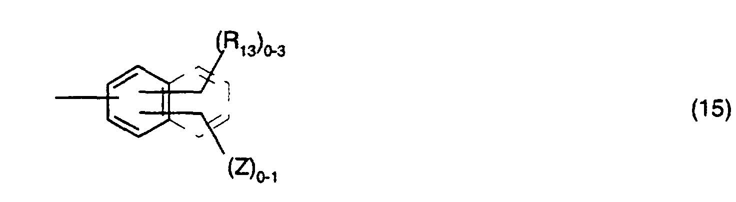 oder 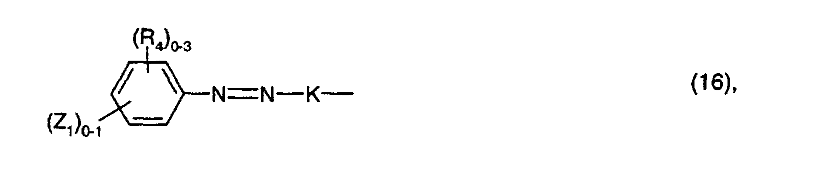 entsprechen, worin
K für den Rest einer Kupplungskomponente der Formel (17a) oder (17b) 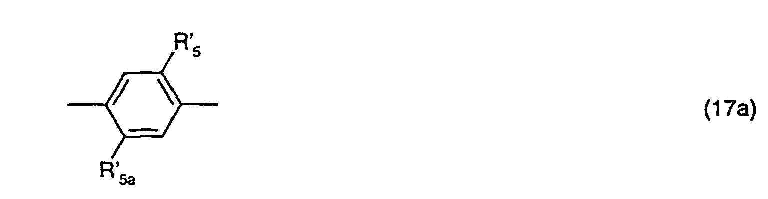 oder 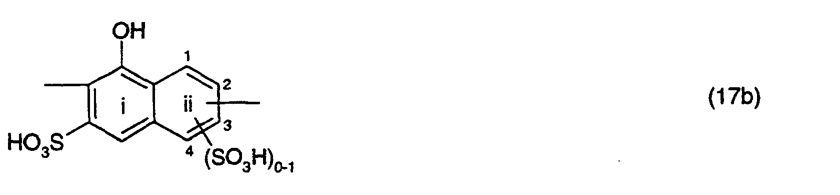 und
Z und Z₁ unabhängig voneinander für einen Rest der Formel (6a), (6c), (6d), (6e) oder (6f)
-SO₂-Y (6a),
-CONR₂-(CH₂)ₘ-SO₂-Y (6c),
-NH-CO-CH(Hal)-CH₂-Hal (6d),
-NH-CO-C(Hal)=CH₂ (6e), 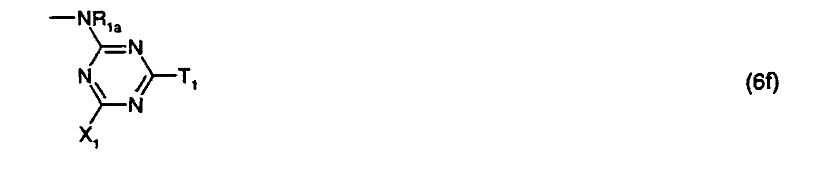
stehen, worin
R₁ₐ und R₂ Wasserstoff sind,
Hal Brom bedeutet,
Y Vinyl, β-Chlorethyl oder β-Sulfatoethyl ist,
T₁ für C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (7c') oder (7d') 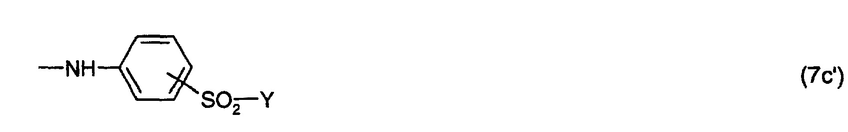 oder 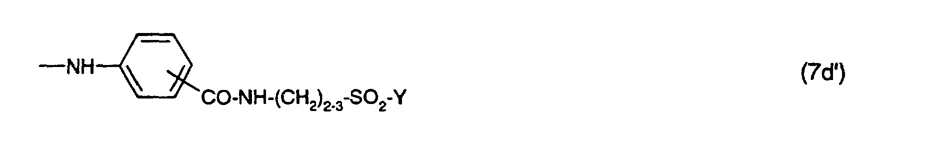 steht und Y die oben angegebene Bedeutung hat,
X₁ Chlor oder Fluor ist,
m die Zahl 2 oder 3 bedeutet,
(R₄)₀₋₃ und (R₁₃)₀₋₃ unabhängig voneinander für 0 bis 3 gleiche oder voneinander verschiedene Substituenten ausgewählt aus der Gruppe Halogen, C₁-C₄-Alkyl, C₁-C₄-Alkoxy, Carboxy und Sulfo stehen,
R'₅ Wasserstoff, Sulfo oder gegebenenfalls im Alkylteil durch Hydroxy oder Sulfato substituiertes C₁-C₄-Alkoxy ist,
R'₅ₐ für Wasserstoff, C₁-C₄-Alkyl, C₁-C₄-Alkoxy, C₂-C₄-Alkanoylamino, Ureido oder einen Rest der Formel (6f) steht, worin für die Reste R₁ₐ, T₁ und X₁ die oben angegebenen Bedeutungen gelten.

7. Azofarbstoffe gemäss Anspruch 6, **dadurch gekennzeichnet, dass** die Reste D₁, D₂ und D₃ unabhängig voneinander je einem Rest der Formel (15a), (15b), (15c), (15d) oder (16a) 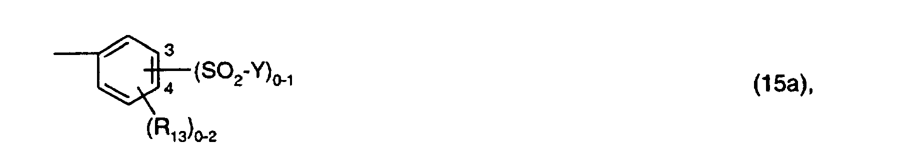 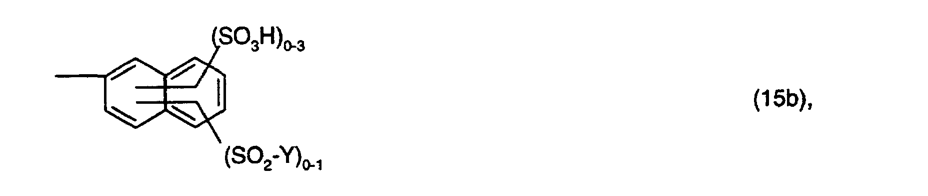 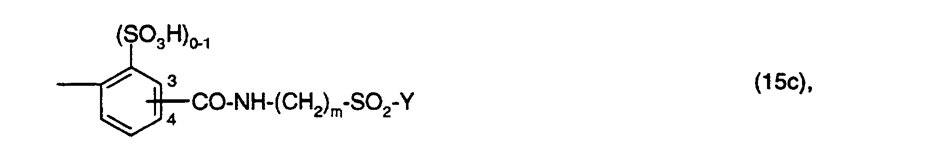 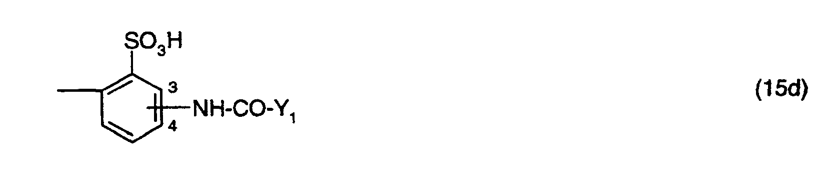 oder 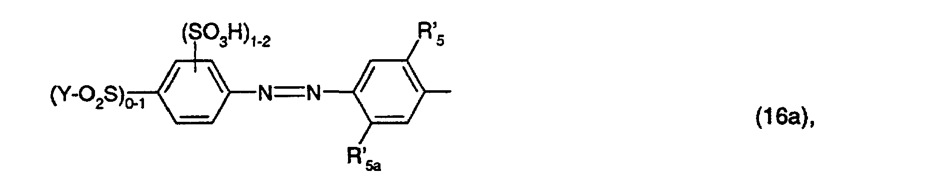 entsprechen, worin
R'₅ für Wasserstoff, Sulfo oder gegebenenfalls im Alkylteil durch Hydroxy oder Sulfato substituiertes Ethoxy steht,
R'₅ₐ Wasserstoff, Methyl, Ethyl, Methoxy, Ethoxy, Acetylamino, Propionylamino oder Ureido ist,
(R₁₃)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo, insbesondere Methyl, Methoxy und Sulfo, steht,
Y₁ für eine Gruppe -CH(Br)-CH₂-Br oder -C(Br)=CH₂ steht,
Y Vinyl, β-Chlorethyl oder β-Sulfatoethyl ist und
m die Zahl 2 oder 3 bedeutet.

8. Azofarbstoffe gemäss einem der Ansprüche 2 bis 5, **dadurch gekennzeichnet, dass**
D₁ einem Rest der Formel (18) 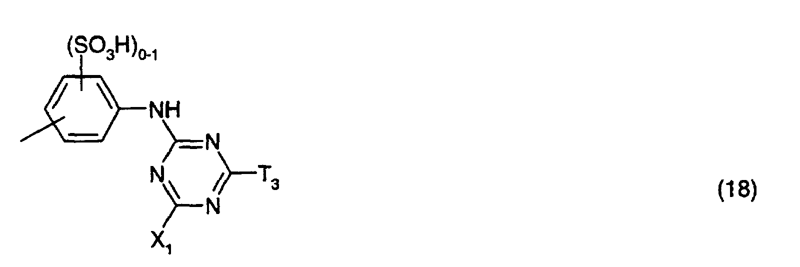 entspricht, worin
X₁ Chlor oder Fluor und
T₃ ein Rest der Formel (10a), (10b), (10d), (10e), (10f), (10k) oder (10m) 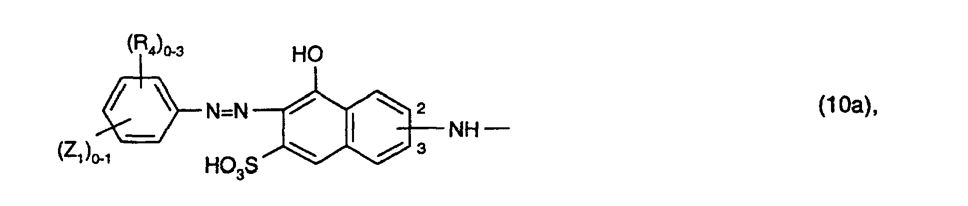 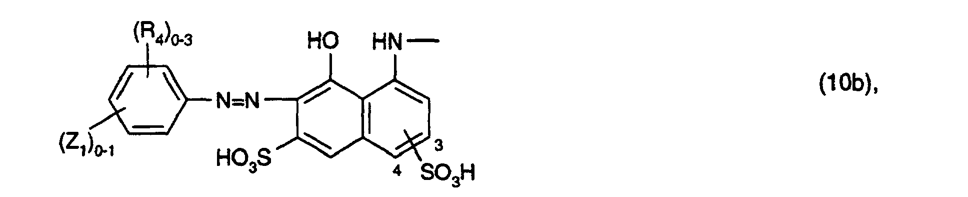 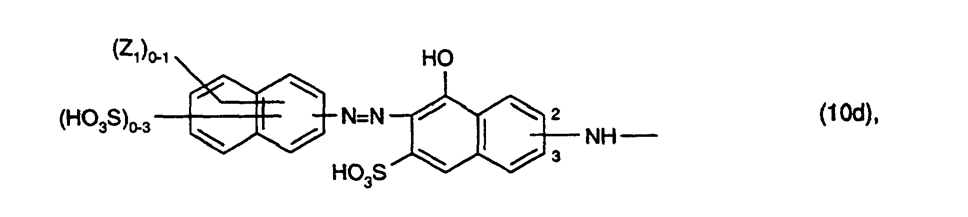 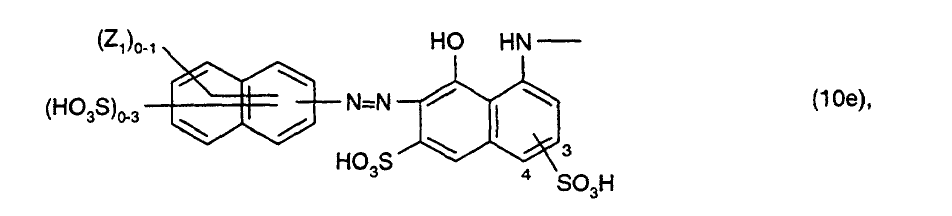 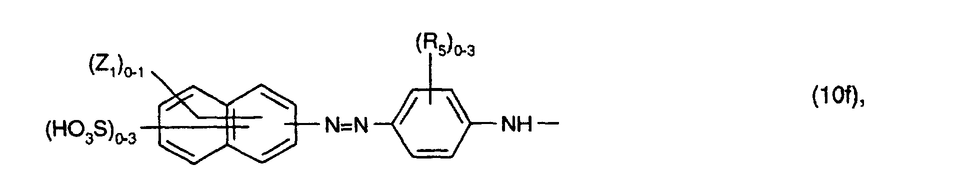 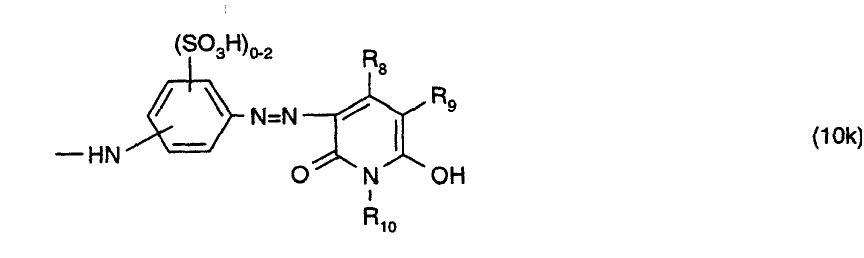 oder 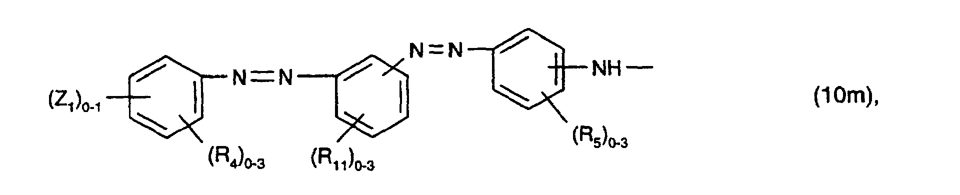 ist, worin
(R₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht,
(R₅)₀₋₃ für 0 bis 3 gleiche oder verschiedene Substituenten aus der Gruppe Halogen, Nitro, Cyan, Trifluormethyl, Sulfamoyl, Carbamoyl, C₁-C₄-Alkyl, gegebenenfalls durch Hydroxy, Sulfato oder C₁-C₄-Alkoxy substituiertes C₁-C₄-Alkoxy, Amino, C₂-C₄-Alkanoylamino, Ureido, Hydroxy, Carboxy, Sulfomethyl, C₁-C₄-Alkylsulfonylamino und Sulfo steht,
R₈ und R₁₀ unabhängig voneinander Wasserstoff, C₁-C₄-Alkyl oder Phenyl sind, und
R₉ Wasserstoff, Cyano, Carbamoyl oder Sulfomethyl ist,
(R₁₁)₀₋₃ für 0 bis 3 gleiche oder verschiedene Substituenten aus der Gruppe C₁-C₄-Alkyl, C₁-C₄-Alkoxy, Halogen, Carboxy und Sulfo steht, und
Z₁ einen Rest der Formel (6a), (6c'), (6d') oder (6e')
-SO₂-Y (6a),
-CONH-(CH₂)₂₋₃-SO₂-Y (6c'),
-NH-CO-CH(Br)-CH₂-Br (6d')
oder
-NH-CO-C(Br)=CH₂ (6e')
bedeutet, worin Y Vinyl, β-Chlorethyl oder β-Sulfatoethyl ist; und die Reste
D₂ und D₃ unabhängig voneinander je einem Rest der Formel (15a), (15b), (15c) oder (15d) 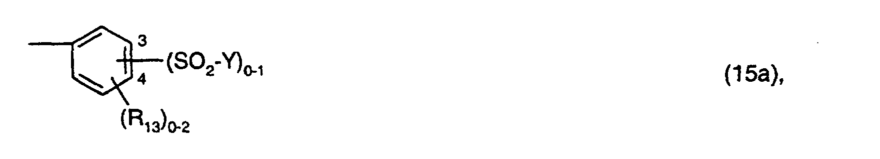 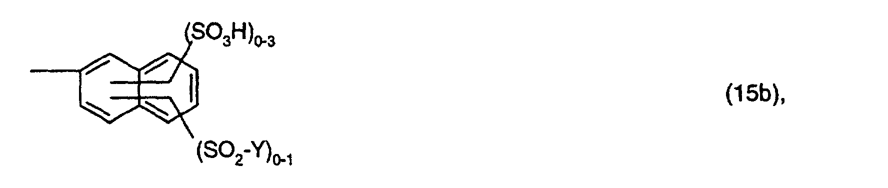 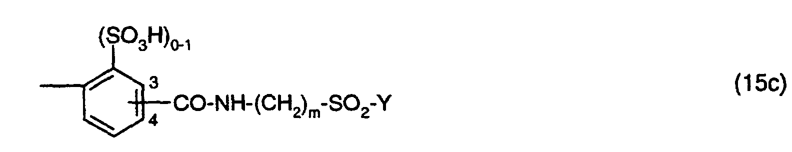 oder 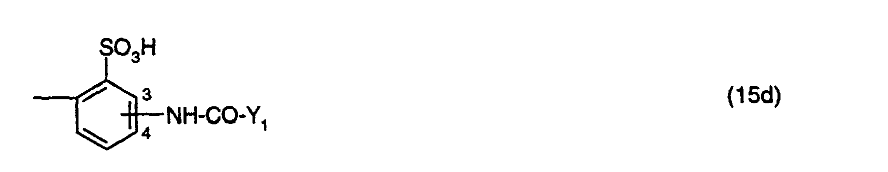 entsprechen, worin
(R₁₃)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo, insbesondere Methyl, Methoxy und Sulfo, steht,
Y₁ für eine Gruppe -CH(Br)-CH₂-Br oder -C(Br)=CH₂ steht,
Y die oben angegebene Bedeutung hat und
m die Zahl 2 oder 3 ist.

9. Azofarbstoffe gemäss einem der Ansprüche 7 oder 8, **dadurch gekennzeichnet, dass** sie der Formel (2a) 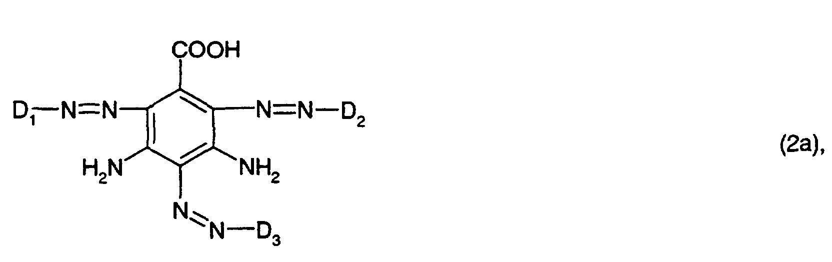 entsprechen, worin
D₁, D2 und D₃ unabhängig voneinander jeweils einen Rest der Formel (15a), (15b), (15c), (15d) oder (16a) bedeuten, wobei mindestens einer der Reste D₁, D₂ und D₃ eine faserreaktive Gruppe enthält; oder
D₁ einem Rest der Formel (18) entspricht, worin
X₁ Chlor und T₃ ein Rest der Formel (10a), (10b), (10d), (10e), (10f), (10k) oder (10m) ist, und D₂ und D₃ unabhängig voneinander jeweils einen Rest der Formel (15a), (15b), (15c) oder (15d) bedeuten, wobei mindestens einer der Reste D₂ und D₃ eine faserreaktive Gruppe enthält.

10. Verfahren zur Herstellung von Azofarbstoffen gemäss Anspruch 1, **dadurch gekennzeichnet, dass** man
ein oder mehr als ein diazotiertes Amin zusammen oder in beliebiger Reihenfolge derart auf eine Verbindung, enthaltend mindestens eine Struktureinheit der Formel (19) 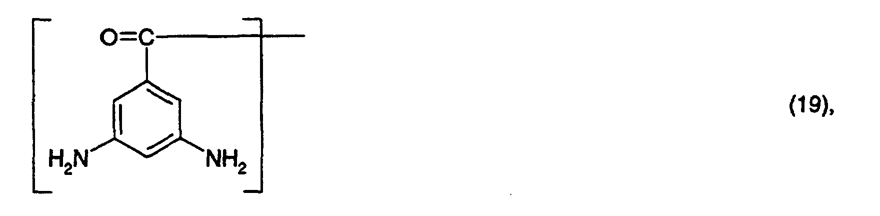 kuppelt, dass ein Azofarbstoff erhalten wird, der mindestens eine Struktureinheit der Formel (1) enthält.

11. Verwendung von Azofarbstoffen gemäss einem der Ansprüche 1 bis 9 bzw. der gemäss Anspruch 10 erhaltenen Azofarbstoffe zum Färben oder Bedrucken von hydroxylgruppenhaltigen oder stickstoffhaltigen Fasermaterialien.

12. Verwendung gemäss Anspruch 11, **dadurch gekennzeichnet, dass** man cellulosehaltige Fasermaterialien, insbesondere baumwollhaltige Fasermaterialien, färbt oder bedruckt.

## Claims

1. An azo dye containing at least one structural unit of the formula (1)

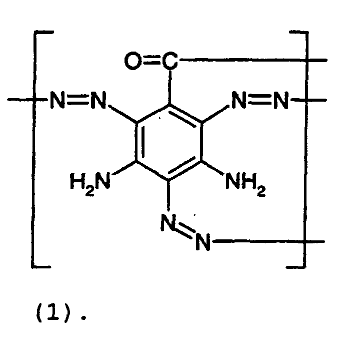

2. An azo dye according to claim 1, which has the formula (2), (3) or (4) 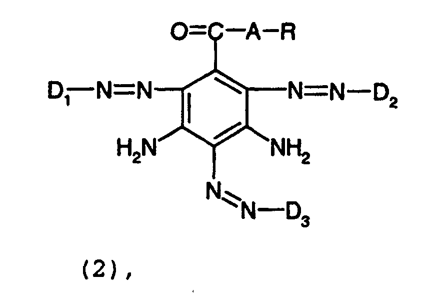 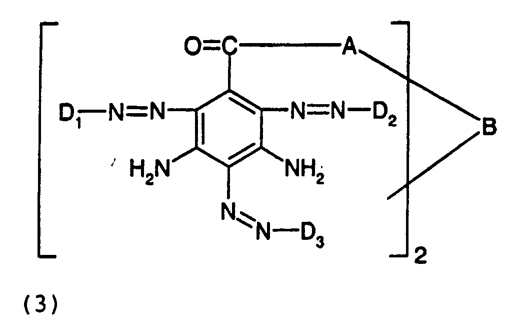 or 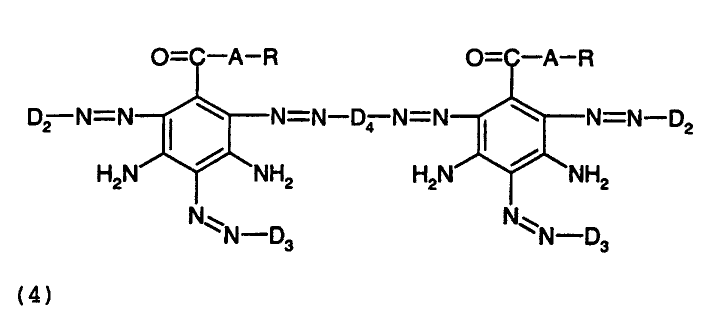 in which
A is oxygen, sulfur or a radical -NR'- and R' is hydrogen or C₁-C₁₂alkyl which is substituted or unsubstituted or may be interrupted by oxygen,
B is an aliphatic or aromatic bridge member,
D₁, D₂ and D₃ independently of one another are each the radical of a diazo component of the benzene or naphthalene series,
D₄ is the radical of an aromatic tetrazo component and
R is hydrogen or an aliphatic or aromatic radical, or the radicals R and R', together with the nitrogen atom, form a heterocyclic radical.

3. An azo dye according to claim 2, in which
A is oxygen or a radical -NR'-.

4. An azo dye of the formula (2) or (4) according to either claim 2 or claim 3, in which
A is oxygen and R is hydrogen.

5. An azo dye according to any one of claims 2 to 4, which has the formula (2).

6. An azo dye according to any one of claims 2 to 5, in which
D₁, D₂ and D₃ independently of one another are each a radical of the formula (15) or (16) 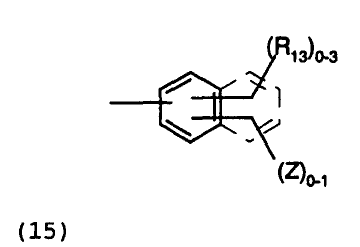 or 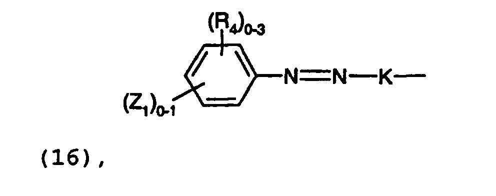 in which
K is the radical of a coupling component of the formula (17a) or (17b) 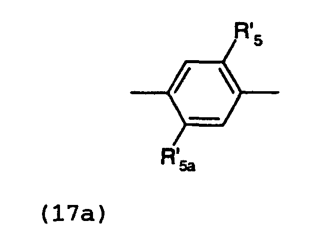 or 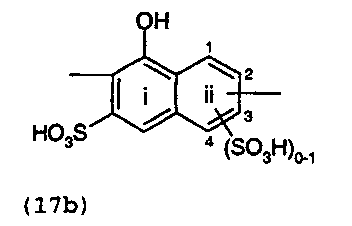 and
Z and Z₁ independently of one another are a radical of the formula (6a), (6c), (6d), (6e) or (6f)
-SO₂-Y (6a),
-CONR₂-(CH₂)ₘ-SO₂-Y (6c),
-NH-CO-CH(Hal)-CH₂-Hal (6d),
-NH-CO-C(Hal)=CH₂ (6e), 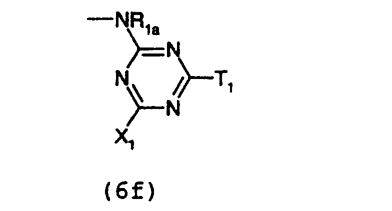
in which
R₁ₐ and R₂ are hydrogen,
Hal is bromine,
Y is vinyl, β-chloroethyl or β-sulfatoethyl,
T₁ is C₁-C₄alkoxy, C₁-C₄alkylthio, hydroxyl, amino, N-mono- or N,N-di-C₁-C₄alkylamino which are unsubstituted or substituted in the alkyl moiety by hydroxyl, sulfato or sulfo, morpholino, phenylamino or N-C₁-C₄alkyl-N-phenylamino which are unsubstituted or substituted in the phenyl ring by sulfo, carboxyl, acetylamino, chlorine, methyl or methoxy and in which the alkyl is unsubstituted or substituted by hydroxyl, sulfo or sulfato, naphthylamino which is unsubstituted or substituted by 1 to 3 sulfo groups, or a fibre-reactive radical of the formula (7c') or (7d') 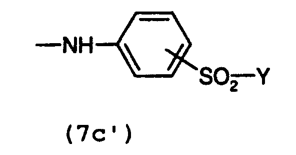 or 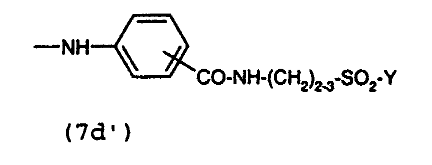
and Y is as defined above,
X₁ is chlorine or fluorine,
m is the number 2 or 3,
(R₄)₀₋₃ and (R₁₃)₀₋₃ independently of one another are 0 to 3 identical or different substituents chosen from the group consisting of halogen, C₁-C₄alkyl, C₁-C₄alkoxy, carboxyl and sulfo,
R'₅ is hydrogen, sulfo or C₁-C₄alkoxy which is unsubstituted or substituted in the alkyl moiety by hydroxyl or sulfato and
R'₅ₐ is hydrogen, C₁-C₄alkyl, C₁-C₄alkoxy, C₂-C₄alkanoylamino, ureido or a radical of the formula (6f), in which radicals R₁ₐ, T₁ and X₁ are as defined above.

7. An azo dye according to claim 6, in which
the radicals D₁, D₂ and D₃ independently of one another are each a radical of the formula (15a), (15b), (15c), (15d) or (16a) 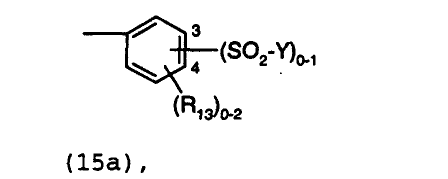 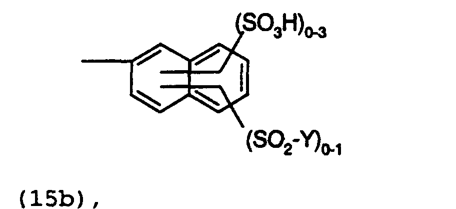 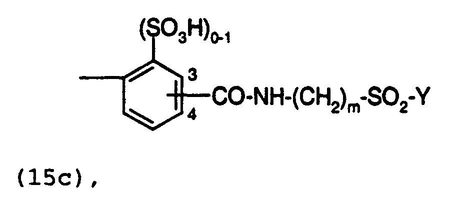 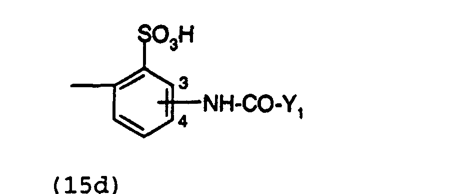 or 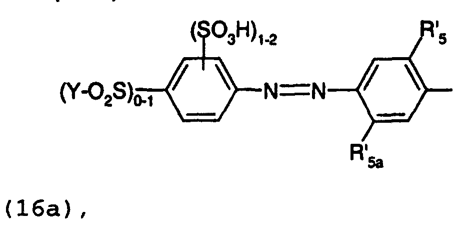 in which
R'₅ is hydrogen, sulfo or ethoxy which is unsubstituted or substituted in the alkyl moiety by hydroxyl or sulfato,
R'₅ₐ is hydrogen, methyl, ethyl, methoxy, ethoxy, acetylamino, propionylamino or ureido,
(R₁₃)₀₋₂ is 0 to 2 identical or different substituents chosen from the group consisting of halogen, C₁-C₄alkyl, C₁-C₄alkoxy and sulfo, in particular methyl, methoxy and sulfo,
Y₁ is a group -CH(Br)-CH₂-Br or -C(Br)=CH₂,
Y is vinyl, β-chloroethyl or β-sulfatoethyl and
m is the number 2 or 3.

8. An azo dye according to any one of claims 2 to 5, in which
D₁ is a radical of the formula (18) 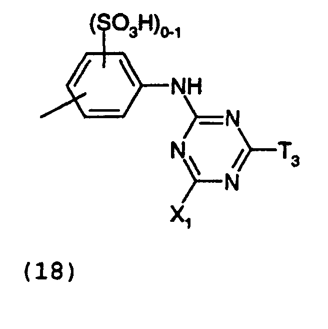 in which
X₁ is chlorine or fluorine and
T₃ is a radical of the formula (10a), (10b), (10d), (10e), (10f), (10k) or (10m) 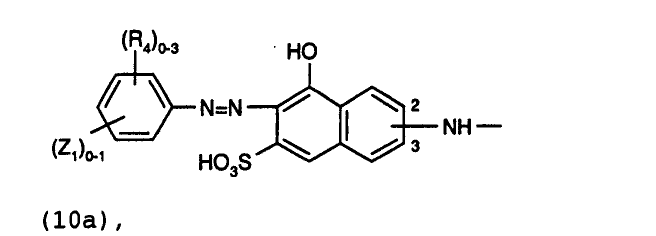 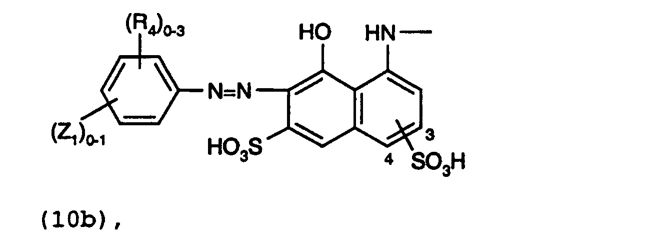 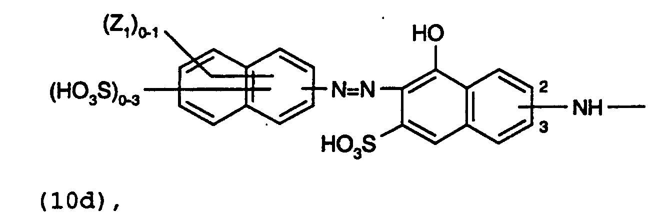 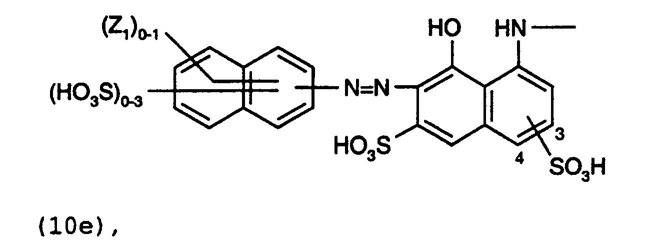 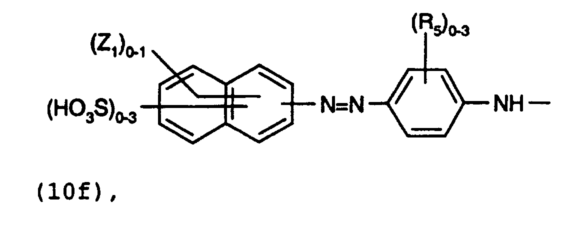 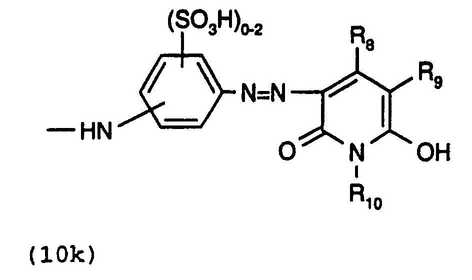 or 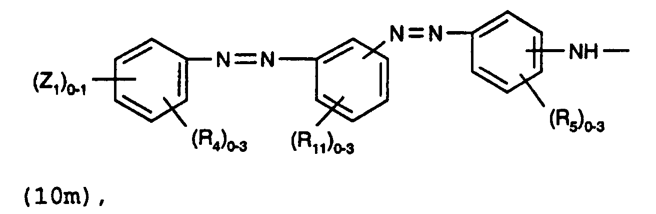 in which
(R₄)₀₋₃ is 0 to 3 identical or different substituents from the group consisting of C₁-C₄alkyl, C₁-C₄alkoxy, halogen, carboxyl and sulfo,
(R₅)₀₋₃ is 0 to 3 identical or different substituents from the group consisting of halogen, nitro, cyano, trifluoromethyl, sulfamoyl, carbamoyl, C₁-C₄alkyl, C₁-C₄alkoxy which is unsubstituted or substituted by hydroxyl, sulfato or C₁-C₄alkoxy, amino, C₂-C₄alkanoylamino, ureido, hydroxyl, carboxyl, sulfomethyl, C₁-C₄alkylsulfonylamino and sulfo,
R₈ and R₁₀ independently of one another are hydrogen, C₁-C₄alkyl or phenyl and
R₉ is hydrogen, cyano, carbamoyl or sulfomethyl,
(R₁₁)₀₋₃ is 0 to 3 identical or different substituents from the group consisting of C₁-C₄alkyl,
C₁-C₄alkoxy, halogen, carboxyl and sulfo and
Z₁ is a radical of the formula (6a), (6c'), (6d') or (6e')
-SO₂-Y (6a),
-CONH-(CH₂)₂₋₃-SO₂-Y (6c')
-NH-CO-CH(Br)-CH₂-Br (6d')
or
-NH-CO-C(Br)=CH₂ (6e')
in which Y is vinyl, β-chloroethyl or β-sulfatoethyl; and the radicals
D₂ and D₃ independently of one another are each a radical of the formula (15a), (15b), (15c) or (15d) 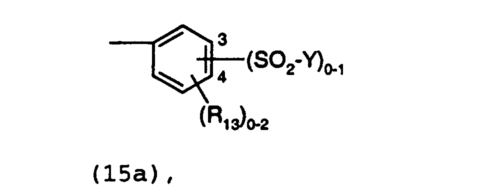 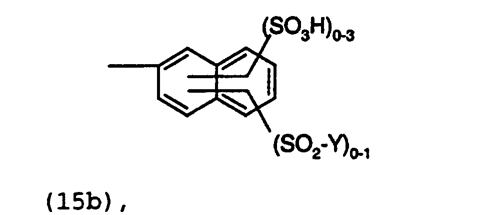 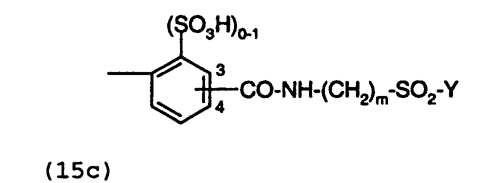 or 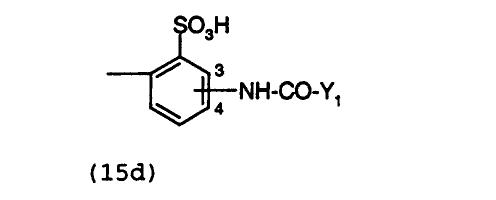 in which
(R₁₃)₀₋₂ is 0 to 2 identical or different substituents chosen from the group consisting of halogen, C₁-C₄alkyl, C₁-C₄alkoxy and sulfo, in particular methyl, methoxy and sulfo,
Y₁ is a group -CH(Br)-CH₂-Br or -C(Br)=CH₂,
Y is as defined above and
m is the number 2 or 3.

9. An azo dye as claimed in either claim 7 or claim 8, which has the formula (2a) 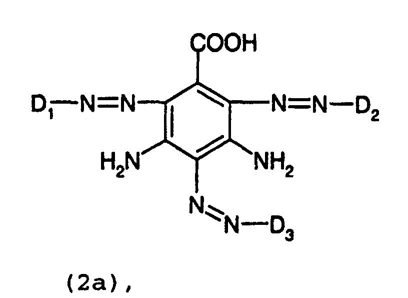 in which
D₁, D₂ and D₃ independently of one another in each case are a radical of the formula (15a), (15b), (15c), (15d) or (16a) where at least one of the radicals D₁, D₂ and
D₃ contains a fibre-reactive group; or
D₁ is a radical of the formula (18), in which
X₁ is chlorine and T₃ is a radical of the formula (10a), (10b), (10d), (10e), (10f), (10k) or (10m) and
D₂ and D₃ independently of one another in each case are a radical of the formula (15a), (15b), (15c) or (15d) where at least one of the radicals D₂ and D₃ contains a fibre-reactive group.

10. A process for the preparation of an azo dye according to claim 1, which comprises
coupling one or more than one diazotized amine together or in any sequence to a compound containing at least one structural unit of the formula (19) 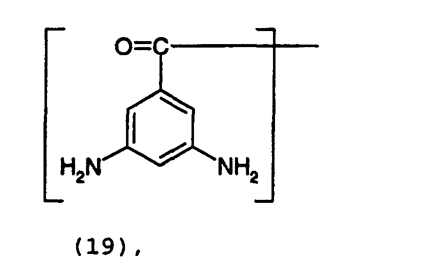 such that an azo dye which contains at least one structural unit of the formula (1) is obtained.

11. The use of an azo dye according to any one of claims 1 to 9 or of an azo dye obtained according to claim 10 for dyeing or printing fibre materials containing hydroxyl groups or containing nitrogen.

12. The use according to claim 11, wherein cellulosic fibre materials, in particular cotton fibre materials, are dyed or printed.

## Revendications

1. Colorants azoïques, contenant
au moins une unité de structure de formule (1)

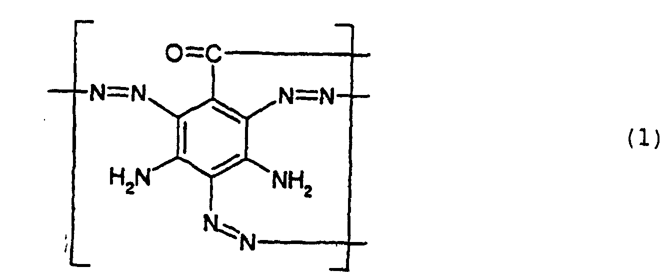

2. Colorants azoïques selon la revendication 1, **caractérisés en ce qu'**ils répondent aux formules (2), (3) ou (4) 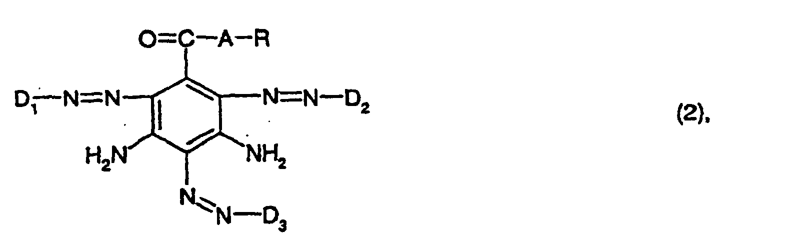 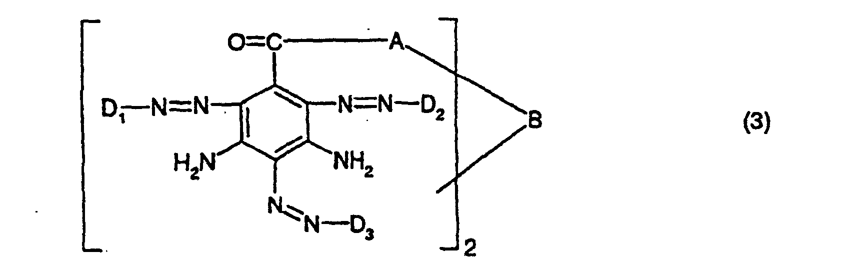 ou 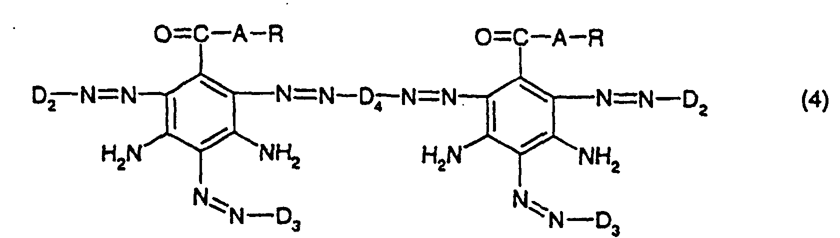 où
A représente un atome d'oxygène, un atome de soufre ou un reste -NR'- et R' représente un atome d'hydrogène ou un groupe alkyle en C₁-C₁₂ éventuellement substitué ou interrompu par des atomes d'oxygène,
B représente un élément de pontage aliphatique ou aromatique,
D₁, D₂ et D₃ représentent chacun, indépendamment les uns des autres, un composant diazoïque de la série du benzène ou du naphtalène,
D₄ représente le reste d'un composant tétrazoïque aromatique et
R représente un atome d'hydrogène ou un reste aliphatique ou aromatique ou les restes R et R' forment conjointement avec l'atome d'azote, un reste hétérocyclique.

3. Colorants azoïques selon la revendication 2, **caractérisés en ce que**
A représente un atome d'oxygène ou un reste -NR'-.

4. Colorants azoïques de formules (2) ou (4) selon l'une des revendications 2 et 3, **caractérisés en ce que**
A représente un atome d'oxygène et R représente un atome d'hydrogène.

5. Colorants azoïques selon l'une des revendications 2 à 4, **caractérisés en ce qu'**ils répondent à la formule (2).

6. Colorants azoïques selon l'une des revendications 2 à 5, **caractérisés en ce que** D₁, D₂ et D₃ représentent chacun, indépendamment les uns des autres, un reste de formule (15) ou (16) 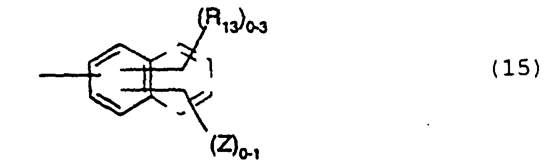 ou 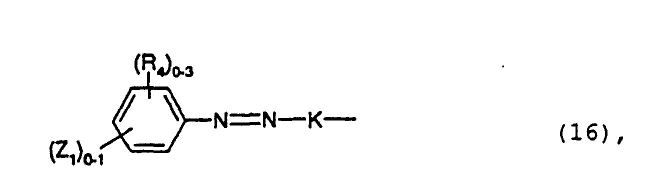 où
K représente le reste d'un composant de copulation de formules (17a) ou (17b) 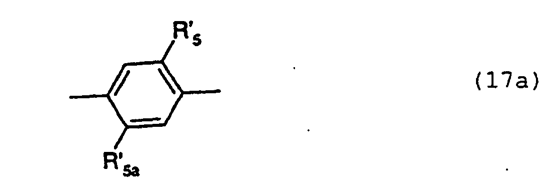 ou 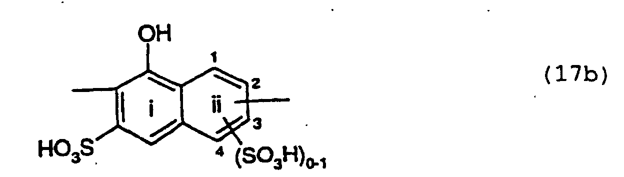 et
Z et Z₁ représentent, indépendamment l'un de l'autre, un reste de formule (6a), (6c), (6d), (6e) et (6f),
-SO₂-Y (6a),
-CONR₂-(CH₂)ₘ-SO₂-Y (6c),
-NH-CO-CH(Hal)-CH₂-Hal (6d),
-NH-CO-C(Hal)=CH₂ (6e), 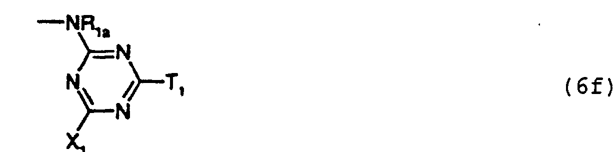
ou où
R₁ₐ et R₂ représentent des atomes d'hydrogène,
Hal représente un atome de brome,
Y représente des groupes vinyle, β-chloréthyle ou β-sulfatoéthyle,
T₁ représente des groupes alkoxy en C₁-C₄, (alkyl en C₁-C₄)thio, hydroxy, amino, N-mono- ou N,N-di-(alkyl en C₁-C₄)amino éventuellement substitué dans le fragment alkyle par des substituants hydroxy, sulfato ou sulfo, morpholino, phénylamino ou N-(alkyl en C₁-C₄)-N-phénylamino éventuellement substitué dans le cycle phényle par des substituants sulfo, carboxy, acétylamino, chloro, méthyle ou méthoxy, dans ledit groupe N-(alkyl en C₁-C₄)-N-phénylamino le fragment alkyle est éventuellement substitué par des substituants hydroxy, sulfo ou sulfato, le fragment alkyle est éventuellement substitué par des substituants hydroxy, sulfo ou sulfato, ou un groupe naphtylamino éventuellement substitué par 1 à 3 groupes sulfo, ou représente un reste réactif sur la fibre de formule (7c') ou (7d') 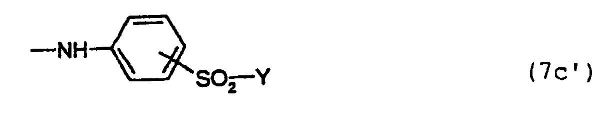 ou 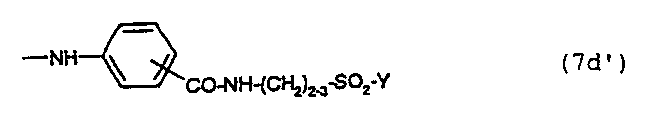
et Y possède la signification donnée ci-dessus,
X₁ représente un atome de chlore ou de fluor,
m vaut 2 ou 3,
(R₄)₀₋₃ et (R₁₃)₀₋₃ représentent, indépendamment l'un de l'autre, 0 à 3 substituants identiques ou différents pris dans le groupe comprenant des substituants halogène, alkyle en C₁-C₄, alkoxy en C₁-C₄, carboxy et sulfo,
R'₅ représente un atome d'hydrogène, des groupes sulfo ou alkoxy en C₁-C₄ éventuellement substitué dans le fragment alkyle par des substituants hydroxy ou sulfato
R'₅ₐ représente un atome d'hydrogène, des groupes alkyle en C₁-C₄, alkoxy en C₁-C₄, (alcanoyl en C₂-C₄)-amino, uréido ou un reste de formule (6f), où les restes R₁ₐ, T₁ et X₁ possèdent les significations données ci-dessus.

7. Colorants azoïques selon la revendication 6, **caractérisés en ce que** les restes D₁, D₂ et D₃ représentent chacun, indépendamment les uns des autres, un reste de formule (15a), (15b), (15c), (15d) ou (16a) 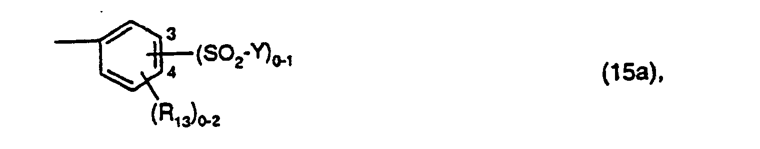 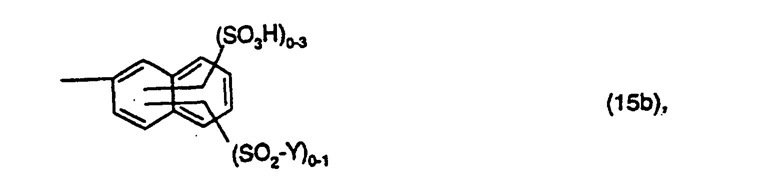 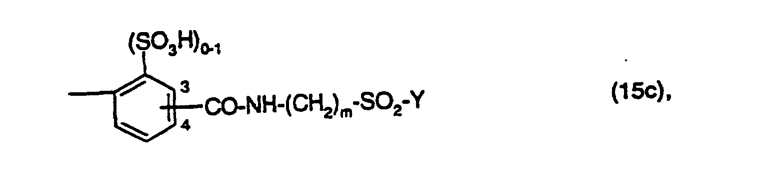 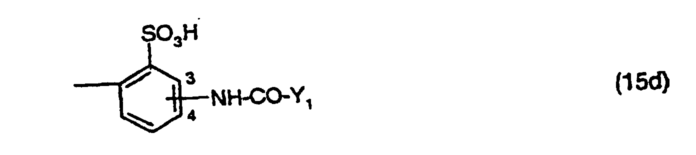 ou 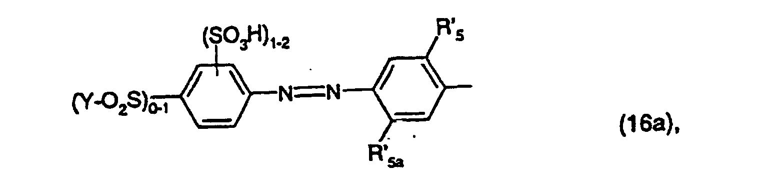 où
R'₅ représente un atome d'hydrogène, un groupe sulfo ou un groupe éthoxy éventuellement substitué dans le fragment alkyle par des substituants hydroxy ou sulfato,
R'₅ₐ représente un atome d'hydrogène, des groupes méthyle, éthyle, méthoxy, éthoxy, acétylamino, propionylamino ou uréido,
(R₁₃)₀₋₂ représente 0 à 2 substituants identiques ou différents pris dans le groupe comprenant des substituants halogène, alkyle en C₁-C₄, alkoxy en C₁-C₄ et sulfo, en particulier méthyle, méthoxy et sulfo,
Y₁ représente un groupe -CH(Br)-CH₂-Br ou -C(Br)=CH₂,
Y représente des groupes vinyle, β-chloréthyle ou β-sulfatoéthyle, et
m vaut 2 ou 3.

8. Colorants azoïques selon l'une des revendications 2 à 5, **caractérisés en ce que**
D₁ représente un reste de formule (18) 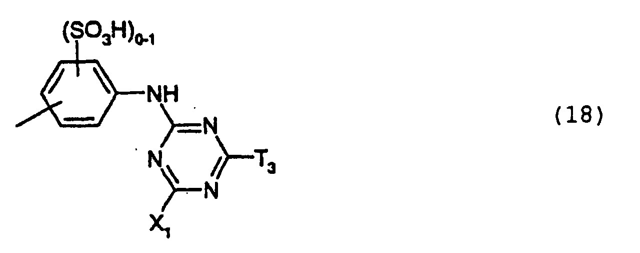 où
X₁ représente un atome de chlore ou de fluor, et
T₃ représente un reste de formules (10a), (10b), (10d), (10e), (10f), (10k) ou (10m) 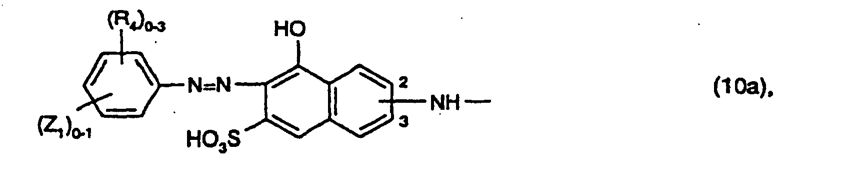 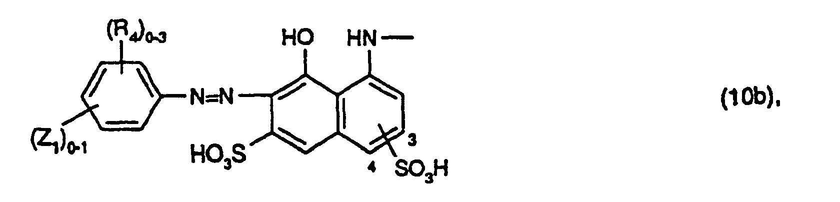 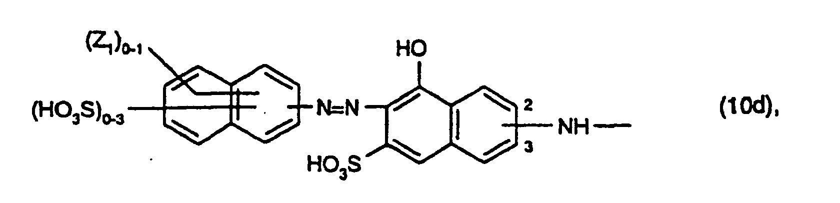 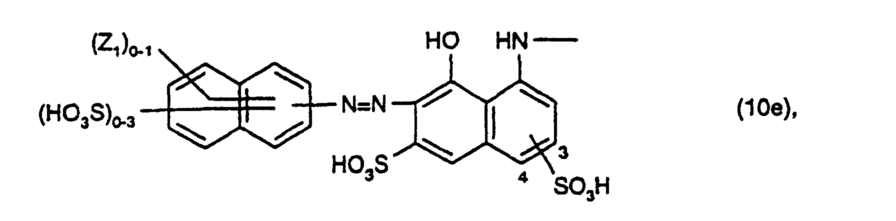 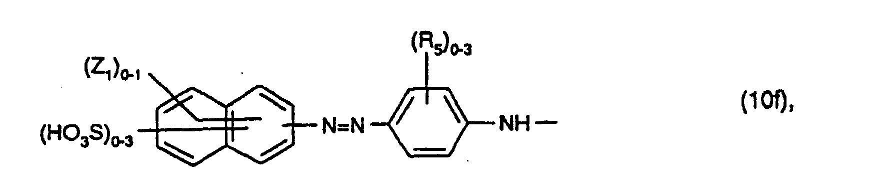 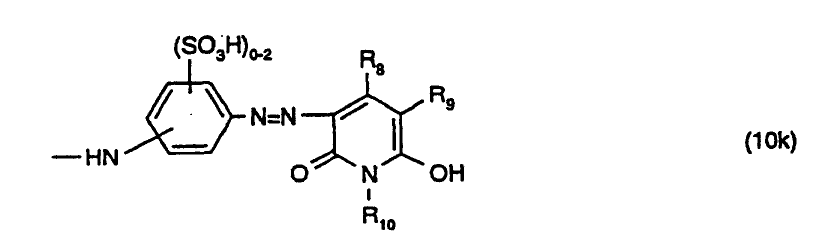 ou 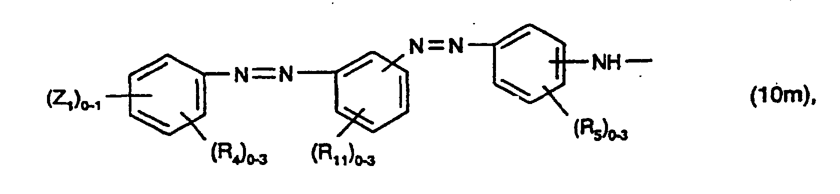 où
où (R₄)₀₋₃ représente 0 à 3 substituants identiques ou différents pris dans le groupe comprenant des substituants alkyle en C₁-C₄, alkoxy en C₁-C₄, halogène, carboxy et sulfo,
(R₅)₀₋₃ représentent 0 à 3 substituants identiques ou différents pris dans le groupe comprenant des substituants halogène, nitro, cyano, trifluorométhyle, sulfamoyle, carbamoyle, alkyle en C₁-C₄, alkoxy en C₁-C₄ éventuellement substitué par des substituants hydroxy, sulfato ou alkoxy en C₁-C₄, amino, (alcanoyl en C₂-C₄)-amino, uréido, hydroxy, carboxy, sulfométhyle, (alkyl en C₁-C₄)sulfonylamino et sulfo, et
R₈ et R₁₀ représentent, indépendamment l'un de l'autre, des atomes d'hydrogène, des groupes alkyle en C₁-C₄ ou phényle,
R₉ représente un atome d'hydrogène, des groupes cyano, carbamoyle ou sulfométhyle,
(R₁₁)₀₋₃ représente 0 à 3 substituants identiques ou différents pris dans le groupe des substituants alkyle en C₁-C₄, alkoxy en C₁-C₄, halogène, carboxy et sulfo, et
Z₁ représente un reste de formule (6a), (6c'), (6d') ou (6e')
-SO₂-Y (6a),
-CONH-(CH₂)₂₋₃-SO₂-Y (6c'),
-NH-CO-CH(Br)-CH₂-Br (6d')
ou
-NH-CO-C(Br)=CH₂ (6e'),
où Y représente des groupes vinyle, β-chloréthyle ou β-sulfatoéthyle ; et les restes
D₂ et D₃ représentent, indépendamment l'un de l'autre, un reste de formule (15a), (15b), (15c) ou (15d), 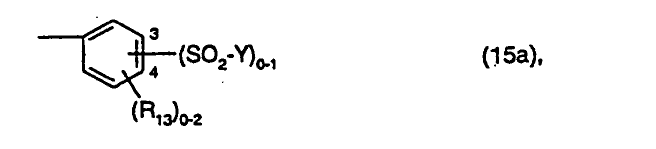 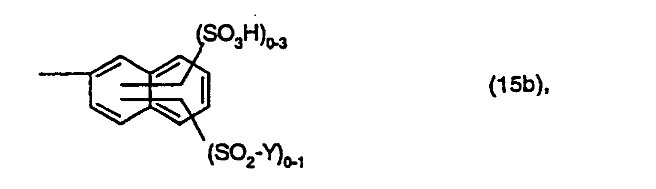 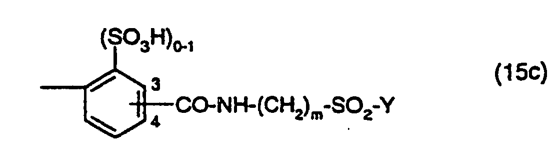 ou 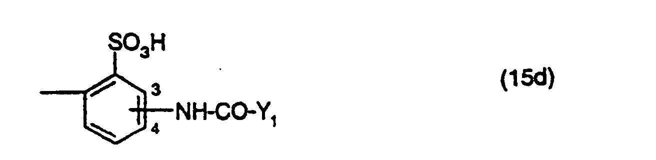 où
(R₁₃)₀₋₂ représente 0 à 2 substituants identiques ou différents pris dans le groupe comprenant des substituants halogène, alkyle en C₁-C₄, alkoxy en C₁-C₄ et sulfo, en particulier méthyle, méthoxy et sulfo,
Y₁ représente un groupe -CH(Br)-CH₂-Br ou -C(Br)=CH₂,
Y possède la signification donnée ci-dessus et
m vaut 2 ou 3.

9. Colorants azoïques selon l'une des revendications 7 ou 8, **caractérisés en ce qu'**ils répondent à la formule (2a) 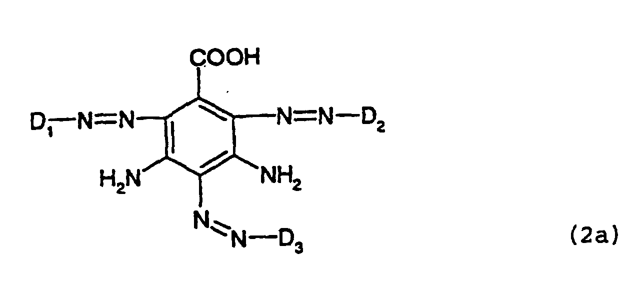 où
D₁, D₂ et D₃ représentent chacun, indépendamment l'un de l'autre, un reste de formule (15a), (15b), (15c), (15d) ou (16a), au moins un des restes D₁, D₂ et D₃ contient un groupe réactif sur la fibre ; ou
D₁ représente un reste de formule (18), où
X₁ représente un atome de chlore et T₃ représente un reste de formule (10a), (10b), (10d), (10e), (10f), (10k) ou (10m), et
D₂ et D₃ représentent chacun, indépendamment l'un de l'autre, un reste de formule (15a), (15b), (15c) ou (15d), au moins un des restes D₂ et D₃ contenant un groupe réactif sur la fibre.

10. Procédé pour la préparation de colorants azoïques selon la revendication 1, **caractérisé en ce que**
on copule une ou plus d'une amine diazotée conjointement ou dans une succession quelconque sur un composé contenant au moins une unité structurale de formule (19) 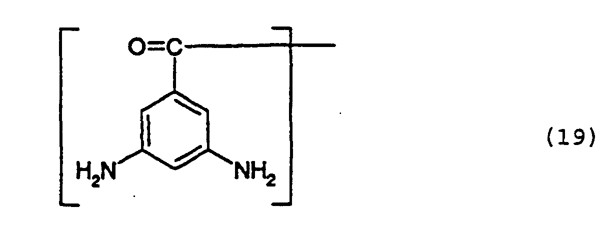 de façon telle, qu'on obtienne un colorant azoique, contenant au moins une unité structurale de formule (1).

11. Utilisation de colorants azoïques obtenus selon l'une des revendications 1 à 9 ou la revendication 10, pour la teinture ou l'impression de matières fibreuses contenant des groupes hydroxyle ou l'azote.

12. Utilisation selon la revendication 11, **caractérisée en ce qu'**on teint ou on imprime des matières fibreuses cellulosiques, en particulier des matières fibreuses contenant le coton.
